Europäisches Patentamt

European Patent Office

Office européen des brevets

(19)

(11) Veröffentlichungsnummer : **0 203 155 B1**

(12) **EUROPÄISCHE PATENTSCHRIFT**

(45) Veröffentlichungstag der Patentschrift :
30.08.89·

(21) Anmeldenummer : 85906056.8

(22) Anmeldetag : 12.11.85

(86) Internationale Anmeldenummer :
PCT/EP 85/00615

(87) Internationale Veröffentlichungsnummer :
WO/8603029 (22.05.86 Gazette 86/11)

(51) Int. Cl.⁴ : **G 03 B 23/02**

(54) **VORRICHTUNG ZUM ZYKLISCHEN UMSCHICHTEN EINES STAPELS RECHTECKIGER ODER QUADRATISCHER BLÄTTER.**

(30) Priorität : 13.11.84 DE 3441488

(43) Veröffentlichungstag der Anmeldung :
03.12.86 Patentblatt 86/49

(45) Bekanntmachung des Hinweises auf die Patenterteilung : 30.08.89 Patentblatt 89/35

(84) Benannte Vertragsstaaten :
AT BE CH DE FR GB IT LI NL SE

(56) Entgegenhaltungen :
DE–A– 2 912 642
DE–A– 3 014 394
FR–A– 2 403 207

(73) Patentinhaber : Licinvest AG
Hartbertstrasse 9
CH-7002 Chur (CH)

(72) Erfinder : ACKERET, Peter
Allmendstrasse 18
CH-8700 Küsnacht (CH)

(74) Vertreter : Röhl, Wolf Horst, Dipl.-Phys., Dr. et al
Dipl.-Ing. K. Sparing Dipl.-Phys. Dr. W.H. Röhl Rethelstrasse 123
D-4000 Düsseldorf 1 (DE)

Jouve, 18, rue St-Denis, 75001 Paris, France

## Beschreibung

Die Erfindung betrifft eine Vorrichtung zum zyklischen Umschichten eines Stapels rechteckiger oder quadratischer Blätter oder einen sogenannten « Bildwechsler ».

Bildwechsler sind aus der DE-A-3 014 394 und den US-Patentschriften 4 238 898, 4 238 899, 4 241 528, 4 241 529, 4 245 417, 4 259 802 und 4 376 348 bekannt. Ihnen allen liegt das Prinzip zugrunde, daß ein Stapel von Bildern, wobei insbesondere an Fotoabzüge zu denken ist, von zwei relativ zueinander verschieblichen Rahmenteilen aufgenommen ist, von denen eines ein Betrachtungsfenster aufweisen kann. Jeweils bei einem vollständigen Bewegungszyklus der Rahmenteile — das heißt vollständig auseinanderziehen und wieder vollständig zusammenschieben — wird ein Bild an einem Stapelende abgenommen und am andern Stapelende wieder zugefügt. Hierfür weisen die Bildwechsler die folgenden Komponenten auf :

Eine Trenneinrichtung löst ein Einzelbild vom Stapel ; eine Zufuhreinrichtung führt der Trenneinrichtung Bilder zu ;

eine Halteeinrichtung hält das vom Stapel abgetrennte Einzelbild in einem der Rahmenteile, während der Reststapel im andern Rahmenteil gehalten wird ;

eine Leiteinrichtung führt das abgetrennte Einzelbild so, daß es auf die andere Seite des Reststapels gelangt.

Fotoabzüge haben derzeit eine Dicke von etwa 0,25 mm und haben die Tendenz, infolge statischer Aufladung ihrer Kunststoffbeschichtungen oder bei noch feuchter Oberfläche nach dem Entwicklungsvorgang mit erheblicher Kraft aufeinander zu haften, insbesondere in den erwähnten Wechslern, wo der Blattstapel an ein Sichtfenster angepreßt wird und durch den Wechselvorgang statische Aufladungen erzeugt werden. Dabei können Haftkräfte auftreten, die bis zu 300 g betragen können und die beim Abtrennen der Blätter durch Abscheren überwunden werden müssen. Um in einem Blattwechsler für Fotoabzüge unter diesen Bedingungen eine einwandfreie Blattabtrennung vornehmen zu können, ist es daher notwendig, zwischen dem abzutrennenden Blatt und dem unmittelbar ihm im Stapel folgenden Blatt des Reststapels eine entsprechend hohe Abscherkraft zu erzeugen.

Fotowechsler sind Massenerzeugnisse, vornehmlich aus Kunststoffspritzgußteilen zusammengebaut, und unterliegen relativ großen Fertigungstoleranzen. Zudem werden sie mechanisch bei der Handhabung sowie thermisch, etwa durch Sonneneinstrahlung, erheblich beansprucht, was bei den aus Kostengründen meist dünnwandigen Bauteilen zu Verformungen im Gebrauch führen kann. Dazu kommt, daß Fotoabzüge nicht nur, wie erwähnt, sehr dünn sind, sondern auch unter dem Einfluß von Feuchtigkeit und Temperaturschwankungen sich auf allen Seiten verwerfen und verbiegen.

Aufgabe der vorliegenden Erfindung ist es, bei einem Blattwechsler der eingangs definierten Gattung die Trenneinrichtung derart auszubilden, daß sie auch bei sehr dünnen Blättern, wie Fotoabzügen, die Verformungen unterliegen, und trotz Fertigungs- und Gebrauchstoleranzen infolge Verwendung preisgünstig gefertigter Kunststoffteile eine einwandfreie Funktion im Dauerbetrieb gewährleistet, das heißt, auch die hohen Scherkräfte aufzubringen in der Lage ist.

Die gemäß der Erfindung vorgesehene Lösung dieser Aufgabe ist im kennzeichnenden Teil des unabhängigen Anspruchs 1 definiert, während der Oberbegriff die notwendigen Mittel für einen Blattwechsler nennt, die auch bei den Wechslern gemäß dem Stand der Technik bekannt sind.

Nachstehend wird die Erfindung anhand der Zeichnungen im einzelnen erläutert.

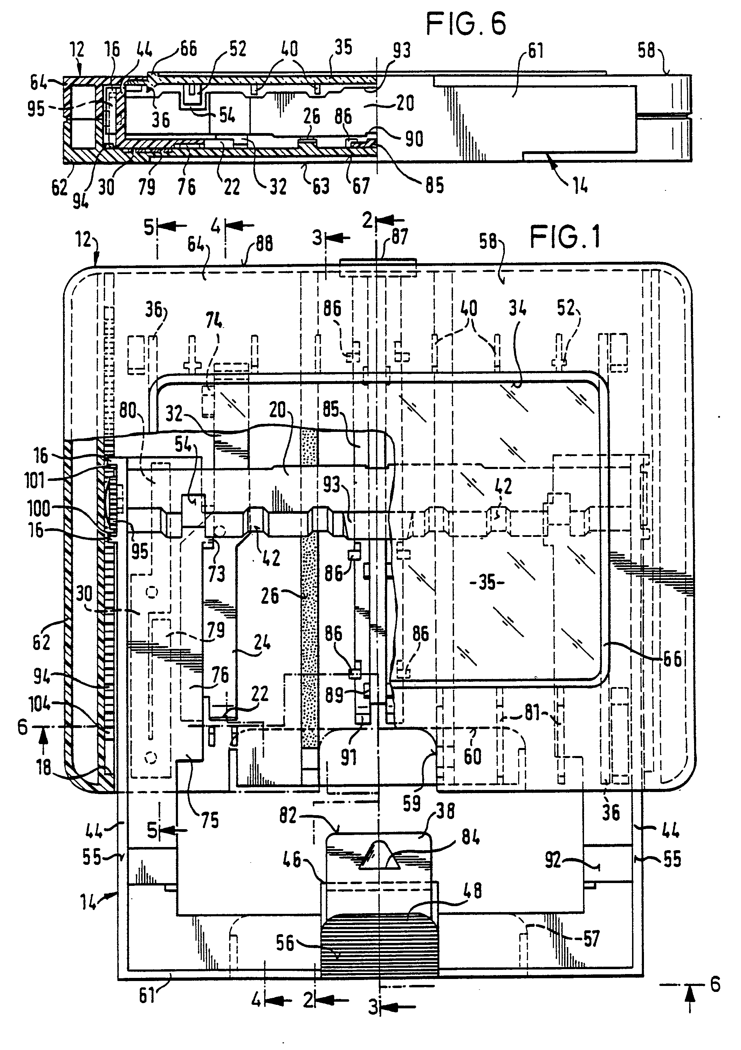

Dabei werden zunächst zwei vollständige Ausführungsbeispiele vorgestellt. Danach werden alternative Gestaltungen der Trenneinrichtung erläutert. Schließlich werden von den Ausführungsbeispielen nach Fig. 1 bis 34 abweichende Gestaltungen für die einzelnen Funktionen dargestellt, nämlich die Zufuhreinrichtung, die Halteeinrichtung, die Leiteinrichtung und die Entnahme des Gesamtstapels aus dem Wechsler.

Fig. 1 bis 10 stellen ein erstes vollständiges Ausführungsbeispiel dar, und zwar

Fig. 1 eine teilweise geschnittene Draufsicht auf die Vorrichtung, zum Teil auseinandergezogen,

Fig. 2 ein Schnitt nach Linie 2-2 der Fig. 1,

Fig. 3 ein Schnitt nach Linie 3-3 der Fig. 1,

Fig. 4 ein Schnitt nach Linie 4-4 der Fig. 1,

Fig. 5 ein analoger Schnitt nur durch ein Rahmenteil,

Fig. 6 ein Schnitt nach Linie 6-6 der Fig. 1,

Fig. 7 ein Teilschnitt durch den Separatorsteg,

Fig. 8 eine Teilfrontansicht des Separatorsteges,

Fig. 9 eine vergrößerte Teilansicht einer Baugruppe aus Fig. 1,

Fig. 10 eine Draufsicht auf die Baugruppe nach Fig. 9.

Die Fig. 11 und 12 stellen analog zu Fig. 9, jedoch in zwei Funktionsstellungen eine alternativ ausgestaltete Baugruppe dar.

Fig. 13 bis 33 betreffen ein zweites Ausführungsbeispiel, und es zeigen

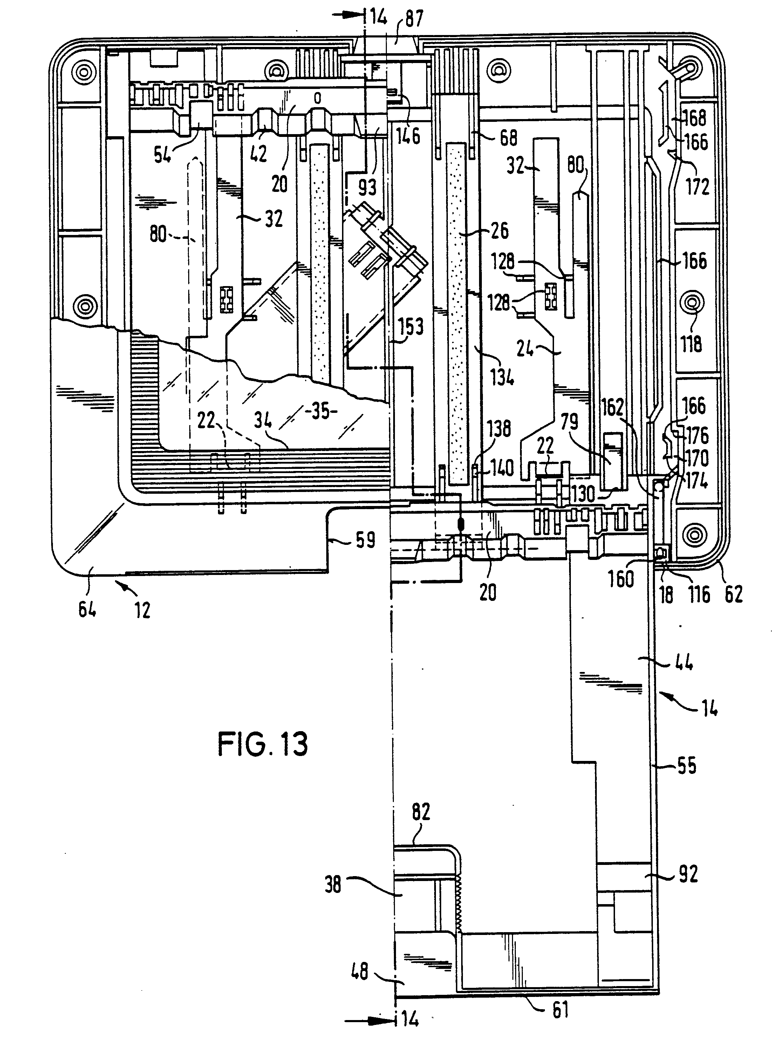

Fig. 13 eine Draufsicht ähnlich Fig. 1, wobei jedoch in der linken Hälfte der Figur die Rahmenteile zusammengeschoben sind, in der rechten dagegen auseinandergezogen sind,

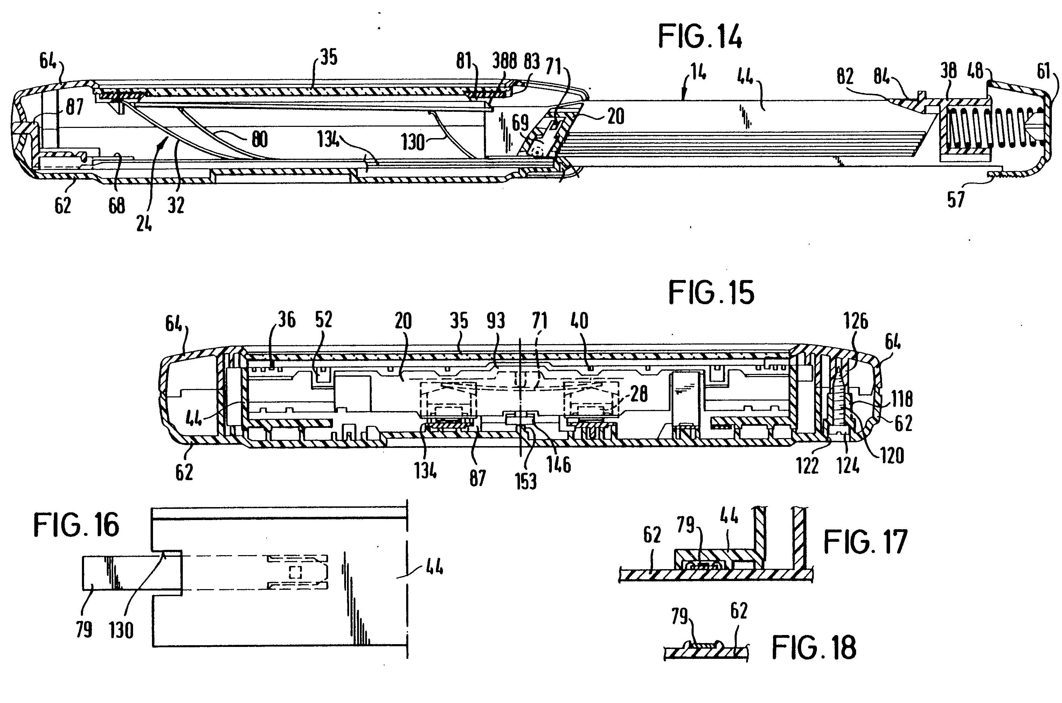

Fig. 14 einen Längsschnitt nach Linie 14-14 der Fig. 13,

Fig. 15 einen Querschnitt nach Linie 15-15 der Fig. 13,

Fig. 16 in Draufsicht,

Fig. 17 und 18 im Schnitt ein Detail der Rahmenteile,

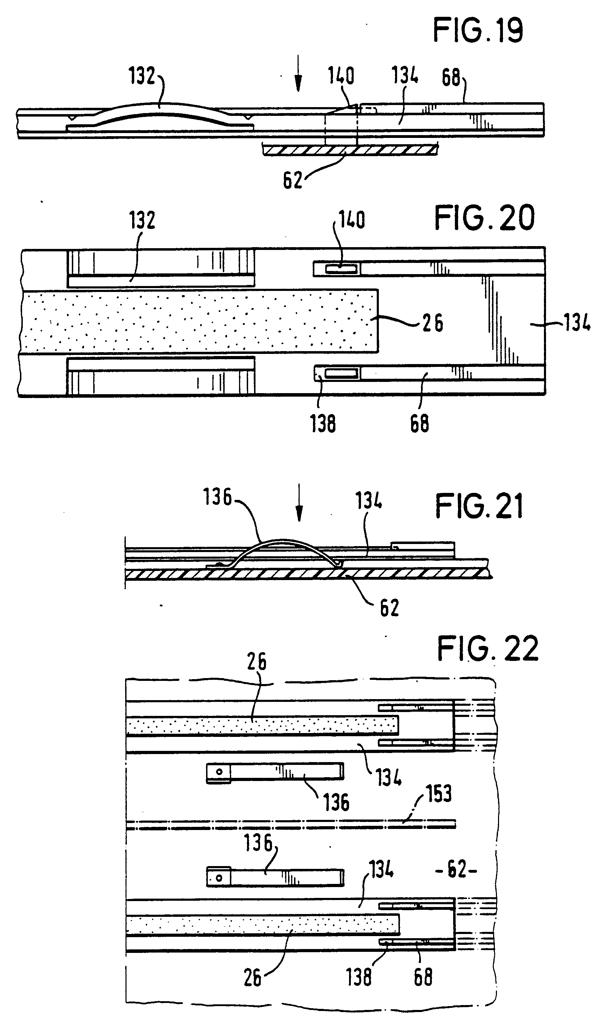

Fig. 19 im Längsschnitt,

Fig. 20 in Draufsicht ein weiteres Detail,

Fig. 21 bzw. 22 analog zu Fig. 19 bzw. 20 eine alternative Ausbildung derselben Funktionsbaugruppe,

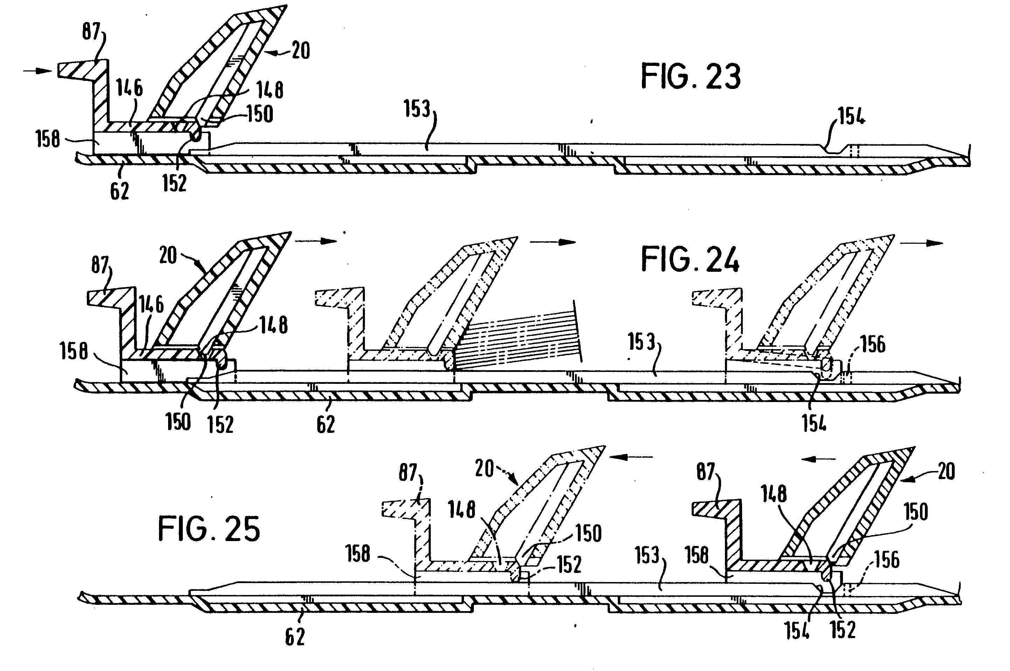

Fig. 23 bis 25 im vereinfachten Längsschnitt den Ablauf einer Sonderfunktion,

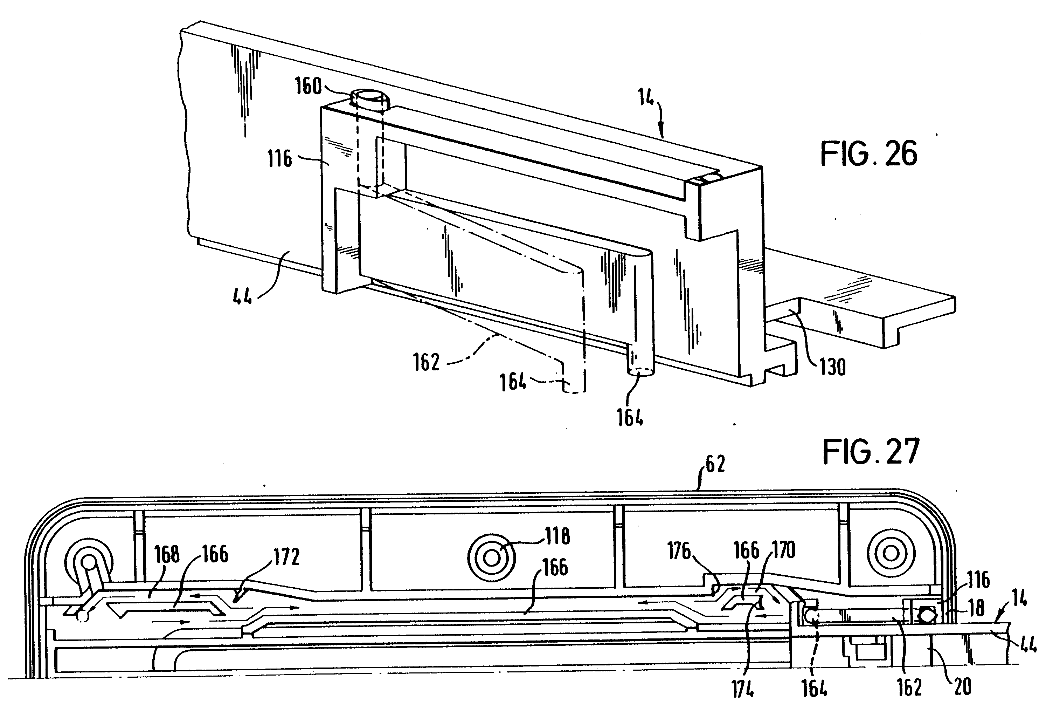

Fig. 26 in Perspektive,

Fig. 27 in Teildraufsicht ein weiteres Detail der Vorrichtung,

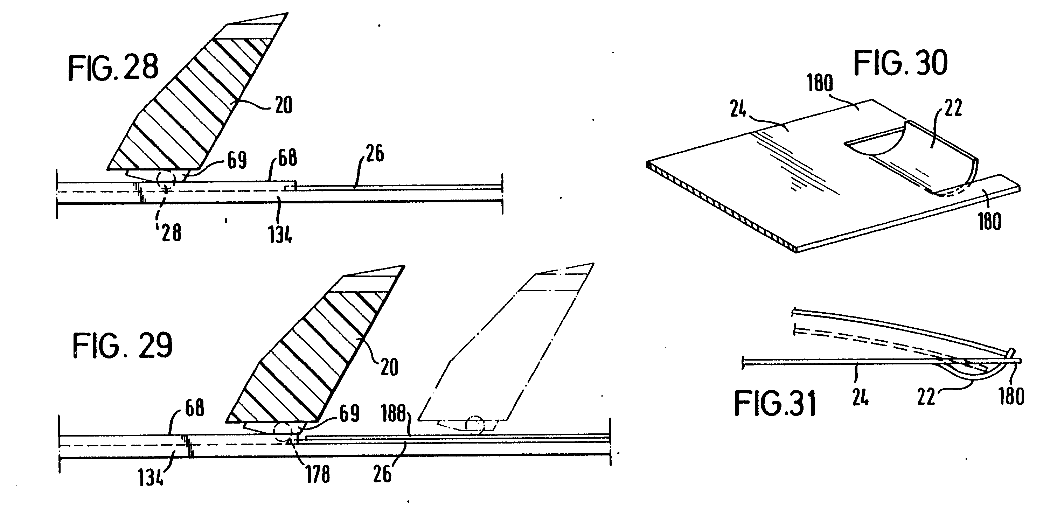

Fig. 28 und 29 weitgehend schematisiert ein weiteres Detail,

Fig. 30 in Teilperspektive,

Fig. 31 in Seitenansicht ein weiteres Detail,

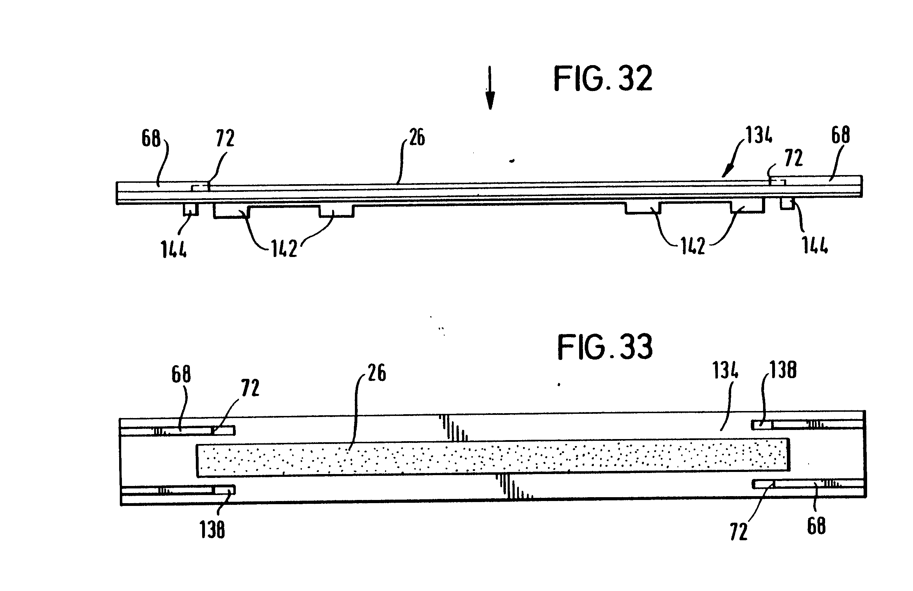

Fig. 32 in Seitenansicht,

Fig. 33 in Draufsicht eine in das Gehäuse-Rahmenteil eingesetzte Baugruppe,

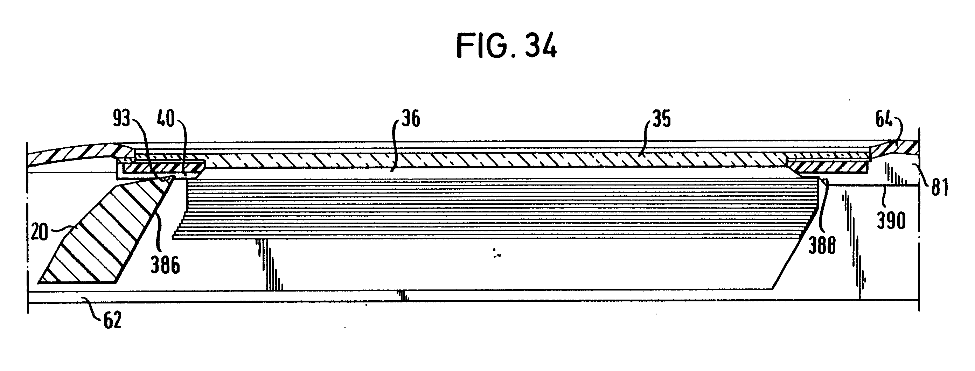

Fig. 34 im vereinfachten Längsschnitt die Lage bei zusammengeschobenem Wechsler,

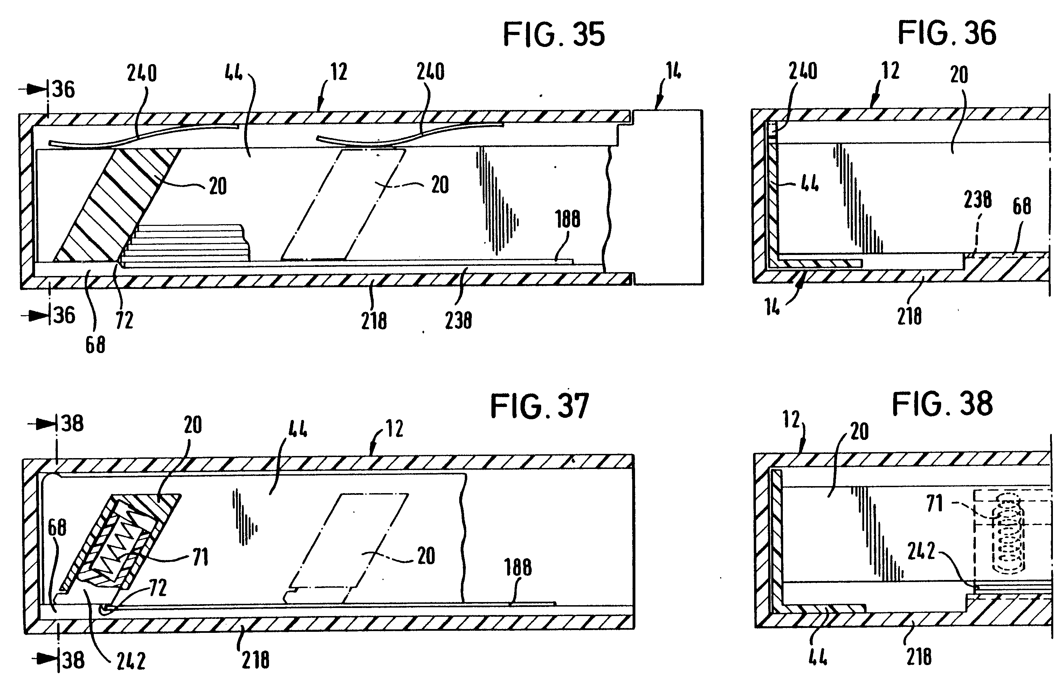

Die Fig. 35 bis 50 zeigen abweichend gestaltete Trenneinrichtungen, wobei sich die Art der Darstellung — Längs- oder Querschnitt, Teilansicht etc. — entweder unter Berücksichtigung der vorhergehenden Zeichnungsfiguren für den Fachmann ohne weiteres erschließt oder aber bei den Figuren jeweils angegeben ist.

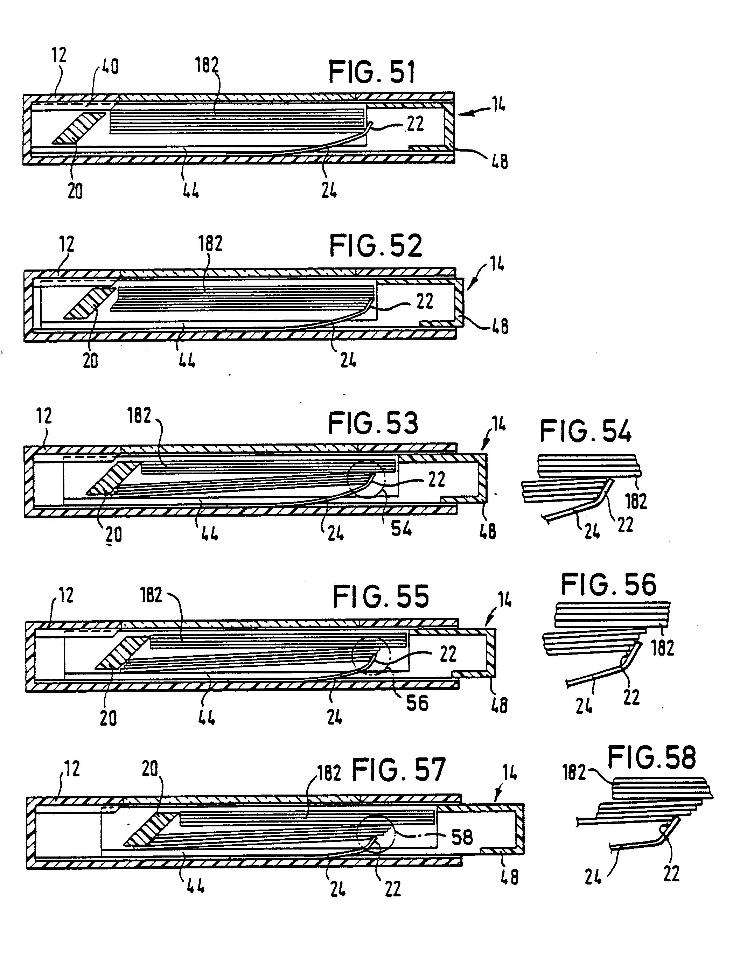

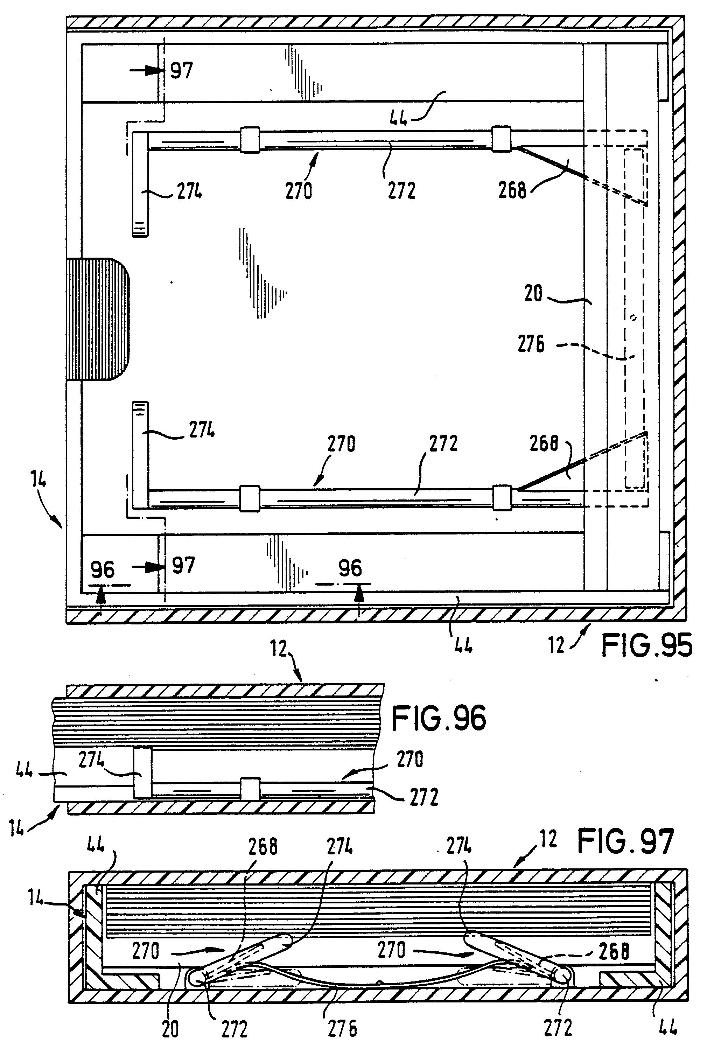

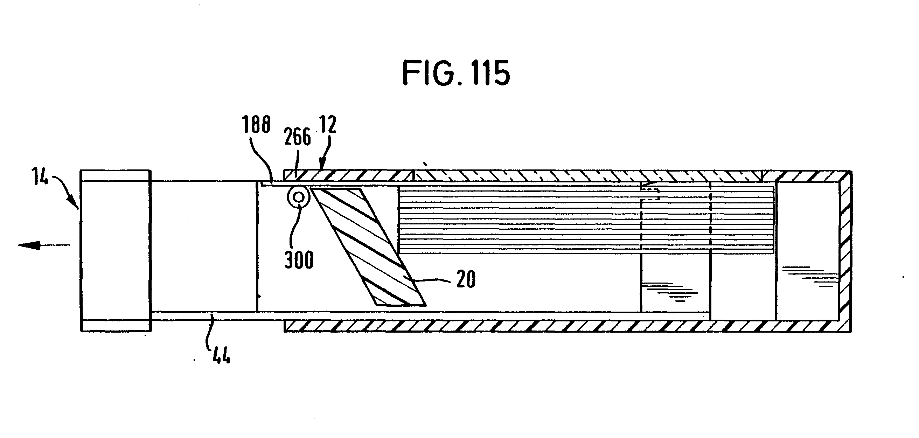

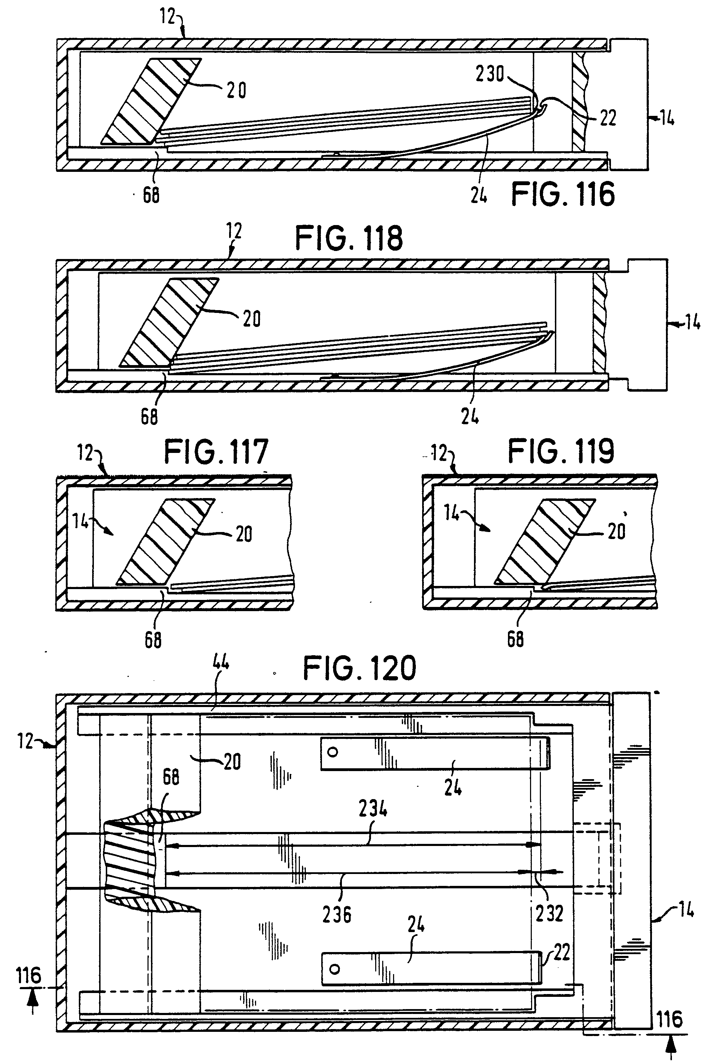

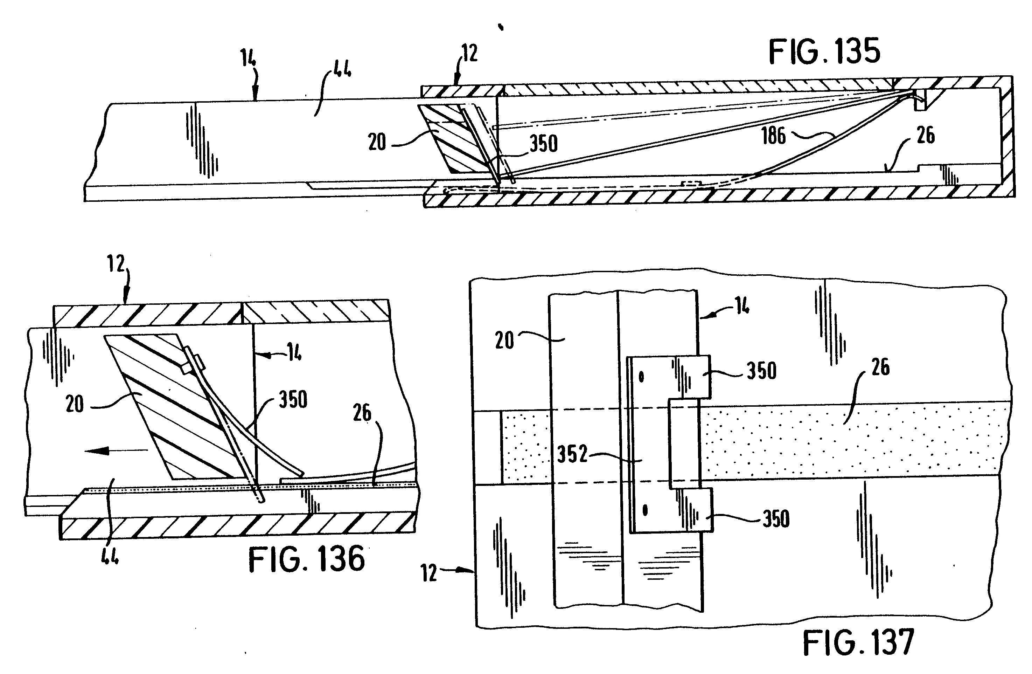

Dasselbe gilt für die Figuren 51 bis 96, die alternative Zufuhreinrichtungen illustrieren, die Figuren 97 bis 114, die alternative Halteeinrichtungen illustrieren, die Figuren 115 bis 119, die das Prinzip des Längenausgleichs illustrieren, die Figuren 120 bis 136, die Einzelheiten und alternative Lösungen der Leiteinrichtungen darstellen, und schließlich die Figuren 137 bis 143, die Möglichkeiten für das Entnehmen des Gesamtstapels aus dem Wechsler zeigen.

Die Figuren 1 bis 10 beziehen sich auf ein erstes Ausführungsbeispiel, das nachstehend im Zusammenwirken aller Bauelemente detailliert beschrieben wird.

Fig. 1 zeigt in teilweise geschnittener Draufsicht eine Vorrichtung gemäß der Erfindung. Das erste Rahmenteil ist als Gehäuse 12 ausgebildet, das zweite Rahmenteil ist ein Schieber 14, der aus dem Gehäuse um einen durch Anschläge 16 am Schieber und Gegenanschläge 18 am Gehäuse begrenzten Hub herausziehbar und wieder einschiebbar ist. Die Trenneinrichtung wird von einem Separatorsteg 20 gebildet. Die Zufuhreinrichtung wird von Haken 22 verkörpert, die an Blattfederarmen 24 sitzen. Die Halteeinrichtung zum Halten des Reststapels im Schieber wird ebenfalls von dem Separatorsteg gebildet, während das abgetrennte Einzelbild im Gehäuse durch das Zusammenwirken von im Gehäuse stationär angeordneten, mit einem Haftbelag 26 versehenen Schienen mit das Einzelbild gegen sie klemmenden, durch den Kontakt mit diesen zum Umlauf angetriebenen Rollen 28 gebildet wird. Schließlich wird die Leiteinrichtung durch Paare von Blattfedern 30 sowie mit den Federarmen 24 einstückig ausgebildete Federarme 32 verkörpert.

Die Federarme 24 und 32 drücken im eingeschobenen Zustand des Schiebers den Blattstapel (in Fig. 1 nicht gezeigt) gegen ein Sichtfenster, dessen innere Kontur mit 34 bezeichnet ist. Das dann im Stapel oberste Blatt, im Bestimmungsfalle ein Fotoabzug, soll dann möglichst plan liegen ; zu diesem Zweck ist es an seinem Umfang in einer Ebene abgestützt, die definiert ist durch seitliche Rippen 36, die Unterseite eines Griffstück-Schiebeteils 38 und, auf der ihm gegenüberliegenden Seite, durch an das Gehäuse angeformte Rippen 40.

Fig. 1 zeigt die teilausgezogene Position des Schiebers 14. Im eingeschobenen Zustand liegt der Separatorsteg jenseits dieser Rippen 40 ; da er aber weiter zum Fenster 34 vorsteht, das dem Niveau dieser Rippen entspricht, weist er für den Vorbeigang derselben Einschnitte 42 auf.

Die Abstützung der Kanten des Stapels erfolgt seitlich (d. h. parallel zur Auszugsrichtung) durch Holme 44 des Schiebers. Frontseitig, das heißt auf der Seite des Schiebers, die beim Auszug am weitesten vom Gehäuse entfernt ist, wird die Abstützung der Kanten durch die Anschlagfläche 46 eines mittig angeordneten Griffstücks 48 sowie durch seitliche Anschlagflächen 50 am Schieber bewirkt. Am gegenüberliegenden Ende stützen sich die Kanten der Fotos an an dem Gehäuse angeformten Anschlägen 52 ab, für die der Separatorsteg ebenfalls Durchlaß-Ausnehmungen 54 aufweist, die jedoch wesentlich tiefer sind als die für die Rippen 40.

Die Rippe 36 reicht weiter in das Innere des Schiebers hinein, als dem Niveau entspricht, das von der Oberkante 55 der Schieberholme definiert ist, so daß die Fotos nicht seitlich nach außen über die Schieberholme gleiten können. Die entsprechende Wirkung tritt zwischen Separatorsteg einerseits, Rippen 40 andererseits ein.

Das Griffstück 48 hat eine auf der Fensterseite des Gehäuses liegende Oberplatte 56 und eine Unterplatte 57, die breiter ist als die Oberplatte ; die das Fenster rahmenartig umgebende Deckwand 58 des Gehäuses weist im Bereich der Oberplatte einen Ausschnitt 59 auf, während die gegenüberliegende Gehäusewandung für die Unterplatte 57 komplementär bei 60 eingetieft ist. Demgemäß hat die Vorrichtung im geschlossenen Zustand eine in sich geschlossene, im wesentlichen rechteckige Kontur ohne vorstehende Teile.

Das Gehäuse und der Schieber sind Kunststoff-Spritzteile. Der Schieber ist ein einteiliges Element, bestehend aus Holmen, Separatorsteg, Griffstück und einer das Griffstück mit den Holmen — die L-förmigen Querschnitt besitzen — verbindenden Stirnwand 61.

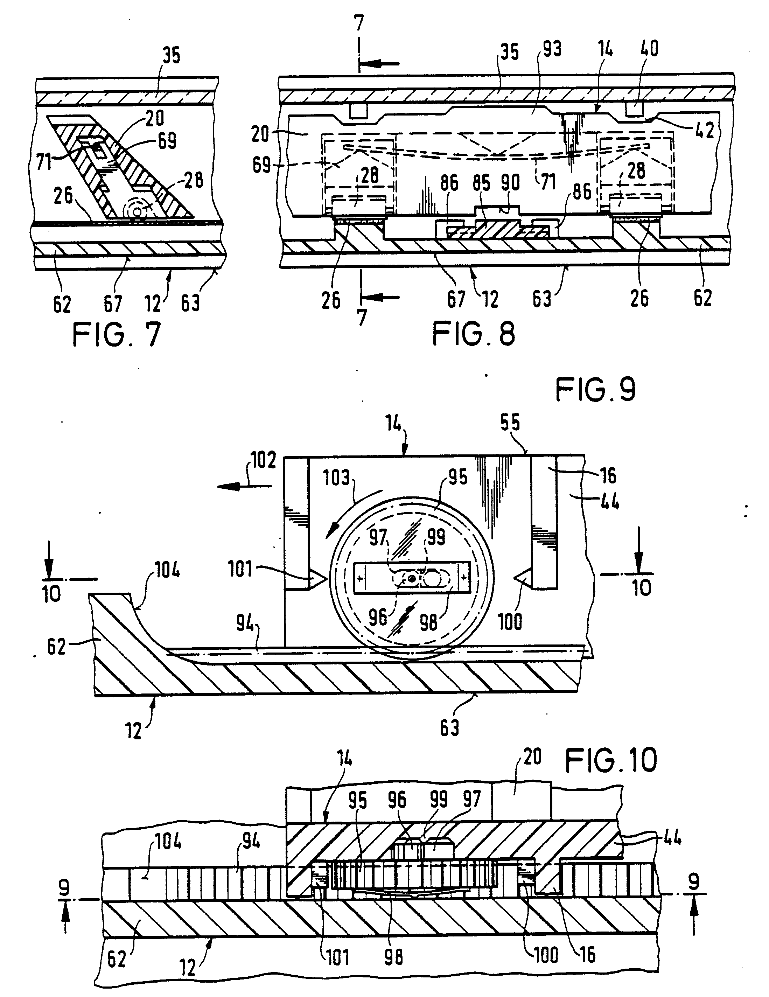

Das Gehäuse ist aus drei Teilen zusammengesetzt : Der Unterschale 62 mit Gehäuseboden 63, der rahmenartigen Oberschale 64 mit Fensterausschnitt, und dem in dieses eingesetzten Fenster 65. Das Gehäuse ist in Richtung der Schieberbewegung dadurch versteift, daß die Streben zwischen Deck- und Bodenwandung als Doppelträger ausgeführt sind, wie in Fig. 6 erkennbar. Die Gehäuseteile können miteinander verschweißt sein, oder man kann eine Schnappverbindung vorsehen.

Das Fenster weist rings um seine Hauptfläche einen schmalen, nach außen etwas vorstehenden Rand 66 auf, so daß es gegenüber dem ihn umgebenden Rahmen etwas vorsteht. Eine zur Kontur dieses Randes komplementäre Eintiefung ist auf der Außenseite der gegenüberliegenden Bodenwandung mit 67 bezeichnet und erlaubt das Übereinanderstapeln mehrerer Gehäuse.

Beim Herausziehen des Schiebers aus dem Gehäuse wird dieser mit einer Hand an Ober- und Unterplatte des Griffstücks erfaßt, während die andere Hand das Gehäuse hält. An den frontseitigen — also dem Separatorsteg abgewandten — Kanten der auf den Federarmenden liegenden Fotos greifen die Haken 22 an, wodurch eine gewisse Anzahl von Fotos — je nach der Höhe der Haken — der Trenneinrichtung zugeführt wird. Diese stellt sich letztlich als ein Durchlaßspalt dar, der einerseits von (im Ausführungsbeispiel) zwei an den Gehäuseboden innen angeformten Stufen 68, andererseits von der ihnen zugewandten Unterseite von Schuhen 69 begrenzt wird, die in den Separatorsteg eingesetzt sind und die in Fig. 7 im Schnitt und in Fig. 8 in Frontansicht erkennbar sind.

Zu jeder Stufe 68 gehört ein Schuh 69, und jedes System Stufe/Schuh ist beidseits der Symmetrieebene 70 der Vorrichtung angeordnet. Die Schuhe sind im Separatorsteg längsgeführt, mit einem Schneidenlager abgestützt und von einer eingelegten Drahtfeder 71 vorgespannt. In jedem Schuh ist außerdem ein Röllchen um eine zur Auszugsrichtung senkrechte Achse drehbar aufgenommen, und das Röllchen 28 ragt etwas aus dem Schuh heraus.

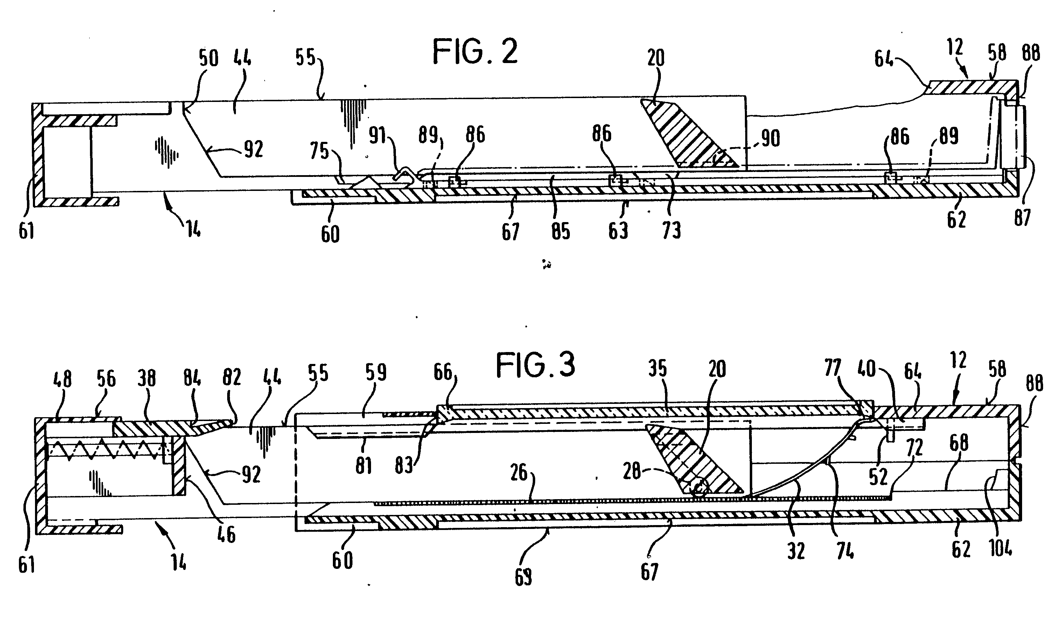

In Fig. 3 erkennt man die Lage der Stufen 68, die um reichlich die Dicke eines Fotoabzugs weiter über das Gehäusebodenniveau hinaussteht als die Oberfläche des Haftbelages 26. In der Ruhestellung des Schiebers liegt der unterste Abschnitt der Schuhe ein Stück weiter von der Kante 72 der Stufe entfernt, und die dem Stapel zugekehrte Fläche des Separatorstegs ist keilartig abgeschrägt derart, daß bei Auflaufen des Separators auf die Stapelkante die Fotos, an deren gegenüberliegender Kante die Haken 22 angreifen, längs der Schräge abwärts « wandern », in Richtung auf die ihnen zugekehrte Kante 72 der Stufen. Nur gerade die führende Kante eines einzigen Fotos hat zwischen den Schuhen 69 und den Haftbelag 26 soviel Platz, daß dieses im Stapel unterste Foto in den sich bildenden Spalt zwischen Schuhen und Haftbelägen 26 eintreten kann, solange dieser Spalt von der Stufe 68 offengehalten wird. Alle anderen, vom Haken 22 mitgeführten Fotos stoßen an den Separator selbst oder an dessen Schuhe an mit der Folge, daß die Haken von deren Endkante abrutschen.

Wenn die in Auszugsrichtung hinteren Kanten der Schuhe 69 die Kante 72 der Stufen 68 passiert haben, senken sich die Schuhe unter der Wirkung der Drahtfeder 71, wobei die Rollen 28 sich auf das so abgetrennte einzelne Foto setzen und dieses auf die zugeordneten Haftbeläge pressen, wodurch es im Gehäuse — also dem ersten Rahmenteil — festgehalten wird. Der Reststapel wird vom Separator zusammen mit dem Schieber nach außen mitgenommen, bis dieser ganz ausgezogen ist.

Dabei ist zu beachten, daß die Federarme 32 ja auch vom Separatorsteg überlaufen werden. Damit sie während des Durchlaufs ihrer am Stapel angreifenden Enden nicht das abgetrennte Bild von unten belasten, werden sie während einer bestimmten Phase des Auszugshubes mechanisch in Richtung Gehäuseboden gedrückt. Hierzu dienen an die Schieberholme 44 angeformte Kufen 73, die seitlich von den Federarmen auskragende Ansätze 74 überstreichen und die Arme entsprechend ihrer Länge auf einem Teilhub halten. Weitere Kufen 75 an den Schieberholmen laufen auf die Federarme 24 an der Verbreiterung 76 auf, sobald das Einzelfoto zwischen Haftbelag und Rollen sicher geklemmt ist, und drücken diese Arme ebenfalls vom Sichtfenster weg, so daß man ungehindert weitere Fotos einfüllen, andere entnehmen kann.

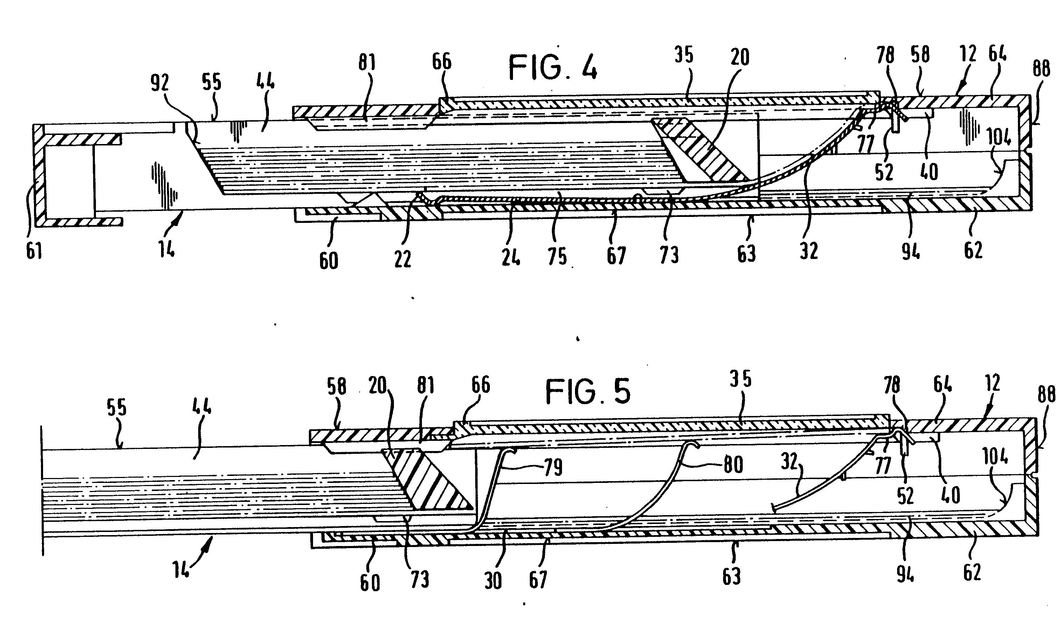

Auf der dem Stapel abgewandten Seite des Separators werden die Federarme 32 nach kurzem Hub wieder freigegeben, so daß sie wieder unter das vereinzelte Foto greifen und dessen hintere Kante allmählich in Richtung Fenster führen. Schließlich legt sich diese Kante unter der Wirkung der Federn an die Gehäuseoberseite an. Da die freien Enden der Federarme abgerundet sind, andererseits aber diese Kante sicher an der erreichten Position festgeklemmt werden soll, ist an den Federarmen noch ein kurzes Stück geradlinig ausgebildet, in Fig. 4 mit 77 bezeichnet. Das abgerundete Federarmende findet dabei Platz in einer Ausnehmung auf der Innenseite der Gehäusedeckwand, in Fig. 5 mit 78 bezeichnet.

Die beiden Haken 22, die beiden Schuhe 69, die Haftbeläge 26 und die Federarme 32 sind sämtlich jeweils symmetrisch bezüglich der Mittelebene der Gesamtvorrichtung angeordnet, und die beiden Haken 22 liegen so genau wie möglich auf einer zu dieser Symmetrieebene senkrechten Linie. Das hat zur Folge, daß das zu wechselnde Foto auch dann ohne Verdrehung den Wechselvorgang durchläuft, wenn es wegen Untermaß nicht an den Schieberholmen geführt ist. Die Abmessungstoleranzen von Fotos sind nämlich bei gleicher Nenngröße unterschiedlich in Quer- und Längsrichtung: Da in den Entwicklungsanstalten die Papiere von Rollen recht genau eingehaltener Breite verarbeitet werden, die dann auf unterschiedliche Länge geschnitten werden, ist es bevorzugt, in Richtung der Schieberbewegung das Fotomaß vorzusehen, das enger toleriert ist.

Das abgetrennte Einzelbild, das bis jetzt nur an seiner einen Kante eingeklemmt gehalten beschrieben worden ist, wird als ganzes in Richtung Fenster gehoben. Hierzu dienen die schon erwähnten Blattfedern 30 mit frontseitigen Armen 79 und rückseitigen Armen 80, die — wie in Fig. 5 deutlich erkennbar — das Einzelfoto so halten und abstützen, daß es beim Schieberrückhub wieder auf den Stapel gelangen kann. Im geschlossenen Zustand der Vorrichtung und während des Auszugshubes des Schiebers — zumindest während des ersten Teils desselben — sind die Federarme 79, 80 von den Holmen des Schiebers in entsprechende Nuten des Gehäusebodens gedrückt, die in Fig. 6 erkennbar sind.

Zu Beginn des Rückhubs des Schiebers ist das Einzelfoto von den Federarmen 32 vor den an das Gehäuse angeformten Anschlägen 52 eingeklemmt und wird in Richtung Separatorsteg an vier Stellen von den Federarmen 79, 80 abgestützt. Die dem Separatorsteg zugekehrte andere Querkante des Fotos kann nach unten durchhängen ; die ihr zugekehrte Seite des Separators ist jedoch keilförmig abgeschrägt, so daß die Kante allmählich gehoben wird, wenn der Separatorsteg auf sie zuläuft. Zwischen der Oberkante des Separatorstegs und der Gehäusedeckwand ist ein Spalt, der für den Durchlaß des Fotos reichlich bemessen ist. Der Gefahr, daß das Foto auf die ihm zugekehrt liegenden Kanten des vom Schieber mitgeführten Reststapels aufstößt, wird dadurch begegnet, daß die Gehäusedeckwand innen Niederhaltenocken 81 aufweist, die den Stapel unter dem Niveau der Separatoroberseite halten. Diese Niederhaltenocken stehen ausgefluchtet mit den Rippen 40, so daß sie durch die entsprechenden Ausschnitte 42, 54 des Separatorsteges passen.

Das Griffstück-Schiebeteil 38 ist gleitbeweglich im Griffstück aufgenommen und steht unter Federvorspannung in Richtung Gehäuse, wie in Fig. 3 gut erkennbar. Beim Einschub des Schiebers trifft seine freie Kante 82 auf einen im Gehäuse vorgesehenen Anschlag 83, wodurch er in das Griffstück zurückgedrückt wird und nicht in den durch das Gehäusefenster sichtbaren Raum ragt. Nach dem Herausziehen hingegen sichert er die im Schieber liegenden Fotos gegen Herausfallen. Zum Wechseln der Fotos kann er von Hand zurückgedrückt werden, was durch Fingerkante 84 erleichtert wird. Man kann die Fotos von der Unterseite des Schiebers her, zwischen die Holme greifend, herausdrücken oder neben dem Griffstück von oben hineinfassen.

Bei dem insoweit beschriebenen Vorgang bleibt immer das abgetrennte Foto im Gehäuse zurück. Es ist nicht oder nicht ohne weiteres möglich, dieses aus der Vorrichtung zu entnehmen. Um den Stapel, auch wenn dieser nur aus einem Bild besteht, entnehmen zu können, ist daher eine besondere Einrichtung vorgesehen.

Im Gehäuse ist eine Steuerbrücke 85 verschieblich aufgenommen, gehalten von an das Gehäuse angeformten Klammern 86. Die Brücke trägt einen Steuerknopf 87, der die Rückwand 88 des Gehäuses durchsetzt und geringfügig über die Wechslerkontur vorsteht. Bei Fingerdruck auf den Knopf läuft die Brücke auf Keile 89 am Gehäuseboden auf und wird dadurch in Richtung Fenster gehoben. Die Breite der Brücke paßt gerade in einen entsprechenden Ausschnitt 90 im Separator und versperrt, auf dem gesamten Auszugshub des Schiebers, den Durchlaßspalt der Trenneinrichtung, so daß jedes in der Vorrichtung befindliche Bild mit dem Schieber heraustransportiert werden muß. Nahe der äußeren Endstellung des Schiebers überläuft dessen Separatorsteg eine hochstehende Nase 91 der Brücke, die nach unten ausfedert ; wird der Schieber jetzt wieder eingeschoben, drückt der Separatorsteg zuerst die Brücke in ihre Ausgangsstellung zurück, ehe er unter erneuter Auslenkung der Nase 91 frei zurückführbar ist.

Wie oben erwähnt, sollen die Fotos durch die geschilderten Mittel im Abstand von der Fensterscheibe gehalten werden, damit diese bei den Wechselvorgängen nicht in Berührung mit der Bildoberfläche gelangt, wodurch Kratzschäden auftreten würden. Die Gefahr besteht jedoch gleichwohl, weil die Fotos nicht (immer) eben sind, sondern in aller Regel eine Wölbung entweder in Längs- oder in Querrichtung aufweisen. Bei Wölbung in Längsrichtung genügen die auf dem gesamten Auszugshub wirksamen Rippen 36. Im anderen Falle hingegen ist zwar das Griffstück-Schiebeteil wirksam, doch der gegenüberliegende Abschnitt des Separatorsteges wäre kaum in der Lage, die erheblichen Spannungen aufzunehmen, die in einem dickeren Stapel gleichartig gewölbter Fotos entstehen.

Deshalb sind zusätzlich folgende Maßnahmen getroffen :

Unterhalb der Anschlagflächen 50 weist die Schieberfrontwand nahe den Holmen Schrägflächen 92 auf, die im wesentlichen parallel der gegenüberliegenden Separatorschräge sind. Die Fotos liegen also schräg gestaffelt zwischen Separator und Schrägflächen, wodurch ein Großteil der Spannungen im Stapel auf die Gesamtfläche des Separators verteilt wird. Außerdem ist in der Mitte des Separatorsteges eine Erhöhung 93 vorgesehen, die die Restspannung derjenigen Fotos aufnimmt, die an den zu ihrer Kante senkrechten Anschlagflächen 50 abgestützt sind.

Wenn der Benutzer einmal begonnen hat, die Wechselbewegung durchzuführen, so muß diese ganz zuende gebracht werden, um die Vorrichtung in die Ausgangsposition zu bringen. Man kann also nicht den Schieber halb herausziehen und dann wieder einstoßen.

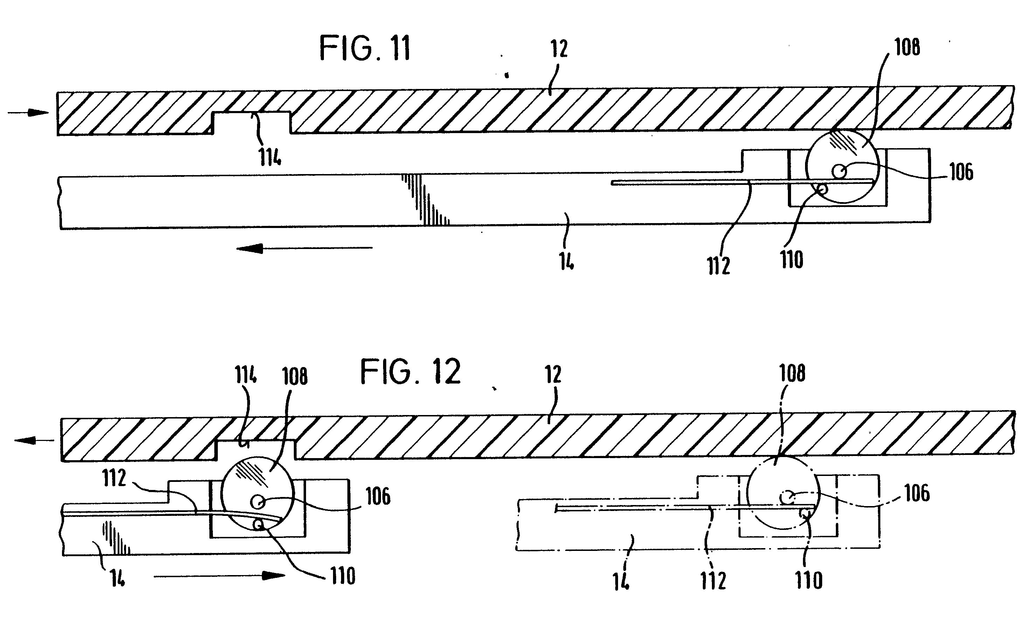

Dies wird durch einen Mechanismus bewirkt, der in den Figuren 9 und 10 im Detail dargestellt ist. An das Gehäuse ist eine Zahnstange 94 angespritzt, mit der ein Zahnrad 95 kämmt, welches einstückig mit seiner Welle 96 ausgebildet ist. Die Welle sitzt in einem zur Zahnstange parallelen Langloch 97 im Schieberholm 44, in das es mittels eines sich am Gehäuse abstützenden Blattfederchens 98, angespritzt am Zahnrad, eingedrückt gehalten wird.

Das Langloch ist durch eine Rippe 99 in zwei Teile unterteilt, in denen die Welle 96 nur noch wenig seitliches Spiel hat. Schließlich sind beidseits des Langlochs an den Schieber Sperrnasen 100, 101 angeformt, die in der Ebene des Zahnkranzes des Zahnrads liegen und mit ihren Spitzen in diesen eingreifen können.

Dieser Mechanismus arbeitet wie folgt :

Es sei angenommen, daß das Zahnrad die in Fig. 9 dargestellte Position hat und daß bei der Schieberbewegung in Richtung des Pfeils 102 das Zahnrad sich in Richtung des Pfeiles 103 dreht. Durch die Reibung des Federchens 98 an der Gehäusewandung wird dabei das Zahnrad nahe der Mitte des Langlochs, mit seiner Welle anliegend an der Rippe 99, gehalten. Dabei ergibt sich ein, wenn auch geringer, Abstand zwischen dem Kopfkreis des Zahnkranzes und der Spitze der Nase 101. Versucht man nun, den Schieber in Gegenrichtung zu bewegen, wird das Zahnrad an das äußere Ende des Langlochs verlagert und sofort von Spitze 101 gesperrt. Am Ende des Schieberhubs hingegen läuft der Zahnkranz auf einen Anschlag-Teilkreis 104 auf und wird unter Deformation des Federchens 98 über die Rippe 99 gehoben, wodurch nun nur die Drehung in der entgegengesetzten Richtung freigegeben ist.

Es ist wichtig anzumerken, daß zwar auf dem größten Teil des Schieberauszugshubes die Halteeinrichtung von den Rollen 28 im Zusammenwirken mit den Haftbelägen 26 verkörpert wird, daß aber auf dem letzten Teil des Hubes, kurz vor Erreichen der Endposition, auch die Federarme 32, indem sie das Einzelfoto festklammern, als « Fortsetzung » der Halteeinrichtung wirken.

Wie aus der vorhergehenden Erläuterung entnehmbar ist, wird jedes umgeschichtete Blatt während des gesamten Umschichtzyklus niemals freigegeben, sondern an mindestens zwei Punkten erfaßt und damit gegen Verdrehung gesichert. Es ist somit stets unter Kontrolle, hier mit achssymmetrischen Mitteln.

Die stapelparallelen Schenkel der Schieberholme, auf denen sich beim Umschichten das vereinzelte Blatt abstützt, dürfen voneinander höchstens einen solchen Abstand haben, daß ein kurzes Foto, das mit einer Kante gerade an einem dazu senkrechten Holmschenkel anliegt, von dem gegenüberliegenden Holm an der anderen Kante noch gehalten wird.

Wie oben erwähnt, hat die Vorrichtung das Sichtfenster in der Oberschale des Gehäuses. Die Abmessung des Fensters ist dann in Richtung quer zur Bewegungsrichtung höchstens so groß, daß das kürzestmögliche Foto, auch wenn es außermittig liegt, sich nicht mit seiner Kante im Sichtfeld präsentiert. Entsprechendes gilt für die Rippen 36, und ganz dieselben Überlegungen treffen auch zu auf die Federarme 79 und 80 und überhaupt für alle an den Blattflächen angreifenden Bauteile.

Die oben beschriebene und dargestellte Ausbildung des Federsystems, gebildet von den einstückig geschnittenen und paarweise symmetrisch angeordneten Federn mit den Federarmen 24 und 32, erfüllt insgesamt fünf Funktionen. Erstens bilden die an ihnen angeformten Haken 22 die Zufuhreinrichtung, wobei die Haken letztlich nur ein Blatt in die Trenneinrichtung mitnehmen. Zweitens bilden beide Arme gemeinsam — genauer gesagt, die vier Arme beider Federn — ein Andrucksystem, mit dem der Stapel bei ruhender Vorrichtung sauber gegen das Fenster gedrückt wird. Drittens dient der Arm 32 dazu, nachdem er vom Separator überlaufen worden ist, das Einzelblatt an die Gehäusedeckwand zu fördern und es dort, viertens, festzuklemmen. Fünftens schließlich sind die Arme 32 dicht genug geben den Haftbelägen 26 angeordnet, daß sie ein gegebenenfalls infolge statischer Aufladung am Haftbelag anhaftendes Einzelblatt infolge ihrer Vorspannkraft von diesem abschälen können. Anzumerken ist, daß der Arm 32 so geformt und angeordnet ist, daß er vom Separatorsteg überlaufen werden kann, ohne daß es zu einer Störung der glatten Handhabung führt.

Die Fig. 11 und 12 zeigen eine Variante der Sperreinrichtung nach Fig. 9 und 10. Von den Rahmenteilen sind jeweils nur einander gegenüberstehende Abschnitte 12 bzw. 14 angedeutet. In einem der Rahmenteile, hier Rahmenteil 14, ist um einen Zapfen 106, der jedoch exzentrisch sitzt, eine Klemmrolle 108 drehbar. Sie trägt gegenüber ihrer größten Ausladung einen Stift 110, über den eine am Rahmenteil 14 befestigte Blattfeder 112 greift. Bei Bewegung in Pfeilrichtung in Fig. 11 kann die Klemmrolle ausweichen, in Gegenrichtung jedoch verklemmt sie die beiden Rahmenteile. In den Endlagen der Rahmenteile trifft die Klemmrolle auf eine Ausnehmung 114 im jeweils anderen Rahmenteil und kann deshalb, bei Schubrichtungsumkehr, frei um etwa 90° schwenken, bis der Stift 110 wieder an der Feder 112 anliegt.

Die oben beschriebenen beiden Sperrvorrichtungen wirken nach Art eines Freilaufs, das heißt, sie schalten jeweils erst in den Endstellungen beider Rahmenteile relativ zueinander um. Es kann aber vorkommen, daß ein Benutzer eine Fehlbedienung wieder rückgängig machen möchte, etwa weil ein Stapel Fotoabzüge beim Einlegen sich verlagert hat. Dann ist es doch erwünscht, wenigstens aus gewissen Positionen heraus ungesperrt in beiden Richtungen die Rahmenteile relativ zueinander verlagern zu können. Deshalb ist im nachstehend beschriebenen bevorzugten Ausführungsbeispiel eine andere Bauart der Sperrvorrichtung vorgesehen.

In Fig. 13 bis 15 ist die Ausführungsform in ihrer Gesamtheit dargestellt. Im Gehäuse 12 ist der Schieber 14 verschieblich aufgenommen; Gehäuse 12 bildet das erste Rahmenteil, Schieber 14 das zweite. Der Auszugshub ist durch ein an einen der Schieberholme 44 angeformtes Lagerauge 116, das auf einen gehäuseseitigen Anschlag 18 aufläuft, begrenzt. Das Gehäuse ist aus einer Oberschale 64 und einer Unterschale 62, deren Außenränder formschlüssig ineinandergreifen, zusammengeschraubt, und zwar in dem Bereich zwischen den Schieberholmen 44 und den zu ihnen parallelen Außenkanten des Gehäuses. Hierfür weist jeweils die Unterschale angeformte Führungshülsen 118 für Schraubenschäfte 120 sowie außenseitige Einsenkungen 122 für Schraubenköpfe 124 auf, während die Oberschale dazu koaxial angeformte Kernloch-Hülsen 126 trägt, in die die Schrauben ihr Gewinde selbst schneiden. In die Oberschale 64 ist das Fenster 35 eingeklipst, und die unter seinen äußeren Randbereichen liegenden Teile der Oberschale sind da-

durch nicht sichtbar, daß diese Bereiche des Fenstersmattiert sind. In Fig. 13 ist die Kontur des mittleren, transparenten Fensterabschnitts mit 34 markiert.

Funktionell bestehen wenig Unterschiede gegenüber dem Ausführungsbeispiel nach Fig. 1 bis 10, so daß es genügt, nur die markanten Abweichungen zu erläutern.

Hier sind die Federarme 24, 32 und 80 zu einem Stanz- und Biegeteil zusammengefaßt und mittels Nocken 128 positioniert und kalt festgebördelt. Dagegen sind die Federarme 79 gesonderte Bauteile, die wie in Fig. 16 bis 18 dargestellt mittels angeformter Nocken an der Unterschale positioniert und kalt festgebördelt werden. Damit dieser Federarm das vereinzelte Bild möglichst frühzeitig hochheben kann, weist der zugehörige Schieberholm 44 Ausschnitte 130 auf. Das sichere Festhalten des vereinzelten Bildes ist während dieser Phase des Wechselzyklus durch die Federarme 80 gewährleistet, die die dem Schieber abgewandte Endkante des Bildes klammerartig nach oben drücken.

Der Haftbelag 26 kann unter Umständen das vereinzelte Bild so sehr festhalten, daß die Kraft der Federarme 79 nicht ausreicht, um die dem Schieber zugewandte Bildkante zu heben. Die Fig. 19 und 20 zeigen eine erste Möglichkeit, diese Kante zusätzlich vom Haftbelag abzudrücken: Die beiden Haftbelagstreifen sind auf je einem gesondert gefertigten Steg 134 angeordnet. Beidseits des Streifens 26 weist der Steg angeformte Federbrücken 132 auf, die nach Überlaufen durch den Separatorsteg 20 nach oben ausfedern und die Bildkante liften. Alternativ kann man — wie in Fig. 21 und 22 gezeigt — gesonderte metallische Federblätter 136 vorsehen.

Die Gestaltung der Stege 134 läßt sich Fig. 32 und 33 entnehmen. Man erkennt, daß sie spiegelsymmetrisch gestaltet sind, also an beiden Enden Stufen 68 mit Kanten 72 aufweisen. Der Grund liegt darin, daß dann beim automatischen Beschichten der Stege mit dem Haftbelag kein Sortieren erforderlich ist. Allerdings sind dann zusätzlich Löcher 138 vorzusehen, durch die am griffseitigen Ende des Gehäuses an dessen Unterschale angeformte Auffahrkeile 140 für den Separatorsteg ragen. Die Befestigung der Stege in der Unterschale erfolgt durch Eindrücken der Nasen 142 in entsprechende Rinnen der Gehäuseunterschale, und die genaue Positionierung erfolgt mittels eines der beiden Zapfen 144, nämlich mittels des dem Schiebergriff abgewandten Zapfens, während dem anderen Zapfen ein gehäuseseitiges Langloch zugeordnet ist.

Die Stege 134 bilden zugleich die Führung für die in der Symmetrieebene angeordnete Taste 87, deren Gestaltung, Anordnung und Funktion schematisch in Fig. 23 bis 25 dargestellt ist. Fig. 23 zeigt die Betriebsposition, das heißt in dieser Position der Taste 87 erfolgt der normale Wechselvorgang. Die Taste 87 trägt einen auf den Separatorsteg 20 hin gerichteten Fortsatz 146 mit einer Kerbe 148, zu der komplementär ein Doppelkeil 150 an der Unterseite des Separatorsteges 20 ist. Drückt man nun bei festgehaltenem Schieber auf die Taste 87, so federt ihr Fortsatz 146 nach unten aus, bis der Doppelkeil 150 in die Kerbe 148 einrastet (Fig. 24, links). Die vom Fortsatz 146 nach unten ragende Sperrnase 152 blockiert nun die Trenneinrichtung für die Kante des untersten Bildes im Stapel, so daß bei Zug am Schieber die Haken 22 auch von der Kante dieses Bildes abgleiten, wenn der Separatorsteg zusammen mit der Taste 87 auf die ihm zugewandte Stapelkante einwirkt und den Stapel mitnimmt (Fig. 24, Mitte). Nahe der äußeren Endposition des Schiebers 14 trifft die Sperrnase 152 auf einen Einschnitt 154, während die Tastenführungslappen 158 auf einen Anschlag 156 auflaufen. Der Fortsatz kann demgemäß nach unten ausfedern, wenn der Schieber weitergezogen wird, und sich so vom Separator lösen (Fig. 24, rechts). Beim Wiedereinschub des Schiebers 14 ist die Taste lose beweglich, so daß der Doppelkeil sie einfach vor sich her schiebt, bis sie ihre Endposition wieder erreicht hat (Fig. 25).

Oben wurden unter Bezugnahme auf Fig. 9 bis 12 zwei Bauarten von Richtungswechsel-Sperren beschrieben. Beim vorliegenden Ausführungsbeispiel sind ebenfalls Sperren vorgesehen, die jedoch nur in den « kritischen » Phasen des Wechselzyklus wirken.

Im Lagerauge 116 des Schiebers 14 ist um einen Zapfen 160 schwenkbar eine Steuerklinke 162 angeordnet, die mit einem Steuernocken 164 längs Kanälen geführt ist, die durch an die Unterschale 62 angeformte Führungsschienen 166 definiert sind, so daß der Steuernocken 164 den in Fig. 27 mit Pfeilen markierten Pfaden beim Einschub bzw. beim Auszug folgen muß. Während des größten Teils des Wechselzyklus kann man ungehindert die Bewegungsrichtung umkehren, nicht jedoch dann, wenn sich der Steuernocken 164 während des Einschubs im Kanalabschnitt 168 bzw. während des Auszugs im Kanalabschnitt 170 befindet. Im ersteren Falle würde, wenn man kurz vor der inneren Endstellung des Schiebers diesen wieder herausziehen will, der Steuernocken auf den Anschlag 172 auflaufen; im letzteren Falle, wenn also kurz vor Erreichen der äußeren Endstellung der Schieber wieder eingeschoben wird, stößt der Steuernocken entweder auf den Anschlag 174 oder auf die Anschlagkante 176. Es ist anzumerken, daß der Zapfen 160 mit hinreichender Reibung im Lagerauge sitzt, daß die Steuerklinke zwar den Führungsstegen ohne merkbare Behinderung folgen, nicht aber frei pendeln kann.

Fig. 28 und 29 lassen die Gestaltung der zusammenwirkenden Teile des Separatorsteges und der Haftbelag-Stege 134 erkennen. In der Ruheposition (Fig. 28), also bei ganz eingeschobenem Schieber 14, sitzen die Schuhe 69 auf den Stegen seitlich auf, während die Andruckrollen 28 in eine Ausnehmung hinter dem Haftbelag ragen, so daß ihre Lager entlastet sind und keine Deformation durch Kaltfluß eintreten kann. Bei Beginn des Wechselzyklus (Fig. 29) laufen die Rollen dann erst auf eine Stufe 178 auf und werden damit auf das Niveau der vor dem Haftbelag 26 liegenden Flächen gehoben, während die Schuhe sich auf dem Niveau der Stufe 68 befinden. Die Niveaudifferenz zwischen 68 und 178 ist funktionsbedeutsam, weil sie auf die Bilderdicke abgestimmt ist; beide Niveaus befinden sich an demselben Spritzgußteil, so daß die Toleranz extrem klein ist. Der Auflauf der Rollen 28 auf die Bildkante ist problemlos.

Fig. 30 zeigt das Ende des Federarms 24 mit dem Mitnehmer 22. Beidseits des Mitnehmers erstrecken sich noch Fortsätze 180, die die Aufgabe haben, sich an das Bild von unten anzulegen und damit zu verhindern, daß die in Fig. 30 gestrichelt dargestellte Situation eintreten kann, daß nämlich ein stark gekrümmtes Bild sich so tief in den Haken 22 setzt, daß dieser von der Kante nicht mehr abrutschen kann. Diese Möglichkeit muß aber gegeben sein, damit der Gesamtstapel mittels der Taste 87 entnommen werden kann.

Fig. 34 zeigt in vereinfachter und vergrößerter Darstellung einen Längsschnitt durch die zusammengeschobene Vorrichtung. Wie in Fig. 1 bis 10, hat auch hier der Separatorsteg mittig eine Erhöhung 93, die zwischen Niederhalter 40 greift. Wenn jedoch beim Herausziehen des Schiebers das oberste Bild nur noch seitlich von den Schienen 36 abgestützt wird, besteht die Gefahr, daß das oberste Bild oder sogar mehrere vom Separator abgleiten. Dies wird dadurch verhindert, daß die Niederhalter 81 am Gehäuse noch eine schräge Stufe 388 aufweisen, die zumindest das oberste Bild solange bremsen, bis seine gegenüberliegende Kante an der Unterfläche 386 des Separators anliegt und von dessen Fortsatz 93 übergriffen ist. Durch die Reibung des Bildes an der Unterfläche 390 der Niederhalter 81 wird dieser Zustand aufrechterhalten, auch wenn die Bilder (Fotoabzüge) stark gekrümmt sind.

In den weiteren Zeichnungen ist die Darstellung stark schematisiert und auf das beschränkt, was jeweils abgewandelt wird; der Fachmann kann die restlichen Komponenten aus den Fig. 1 bis 34 sinngemäß ergänzen.

Die Figuren 35 bis 50 stellen alternative Ausgestaltungen der Trenneinrichtung gemäß der Erfindung dar.

Die Fig. 35 bis 50 stellen alternative Trenneinrichtungen dar.

Allen hier dargestellten Ausführungsformen ist gemeinsam, daß der Durchlaßspalt für den Eintritt des abzutrennenden Blattes durch einen mechanischen Anschlag auf den definierten Wert der lichten Weite festgelegt ist. Im weiteren Ablauf des Wechselzyklus kann die lichte Weite entweder ebenfalls durch ein System von Anschlägen aufrechterhalten werden, oder aber der Spalt schließt sich federnd über dem abgetrennten Blatt, so daß dieses selbst die lichte Weite begrenzt.

Fig. 35 zeigt im schematischen Längsschnitt einen Fotowechsler, und Fig. 36 ist ein zugehöriger Teilquerschnitt. Das erste Rahmenteil ist als Gehäuse 12 ausgebildet, an das ein erstes, stationäres Trennelement in Form einer Rippe 238 angeformt ist, die auf dem Gehäuseboden 218 sitzt. Das zweite Trennelement wird von einem Separatorsteg 20 gebildet, der an einem relativ zu dem Gehäuse verschieblichen und das zweite Rahmenteil bildenden Schieber 14 angeformt ist. Der Schieber 14 wird von einem Blattfedersystem 240, das im Gehäuse montiert ist, auf seiner ganzen Auszugslänge in Richtung Gehäuseboden gedrückt und damit in Richtung auf die Rippen 238.

Bei vollständig eingeschobenem Schieber stößt der Separatorsteg jedoch auf eine Stufe 68, die um reichlich eine Fotodicke höher ist als die Rippe 238, womit die lichte Weite des Spalts begrenzt ist. Nach Passieren der Kante 72 der Stufe 68 drücken die Federn 240 den Separatorsteg 20 bis auf die ihm zugekehrt liegende Oberfläche des vereinzelten Blattes 188. In Fig. 36 erkennt man noch die Holme 44 des Schiebers, zwischen denen sich der Separatorsteg erstreckt und an die er einstückig angeformt ist.

Die Ausführungsform nach Fig. 37 (Längsschnitt) und 38 (Teilquerschnitt) unterscheidet sich von der zuvor beschriebenen dadurch, daß nicht der gesamte Schieber 14, sondern nur ein Teil 242 des Separatorsteges 20 von einer im letzteren selbst untergebrachten Federanordnung 71 in Richtung Gehäuseboden 218 gedrückt wird, während der Schieber in dieser Richtung abgestützt ist. Die Funktion ist im übrigen dieselbe.

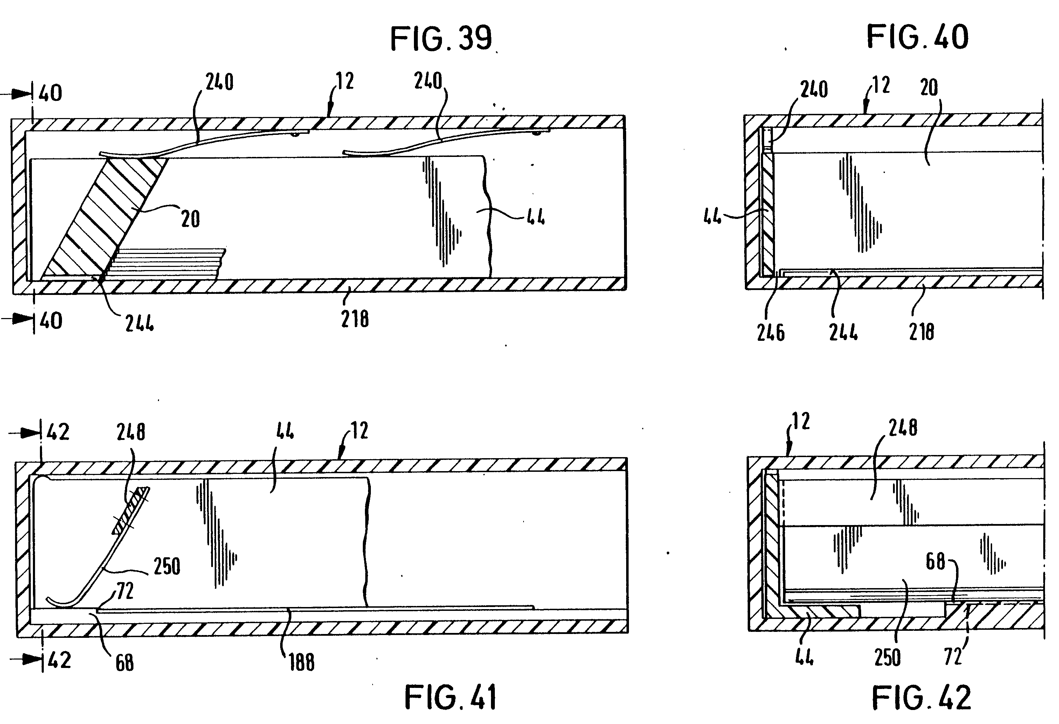

Die Ausführungsform nach Fig. 39 (Längsschnitt) und 40 (Querschnitt) unterscheidet sich von der nach Fig. 35, 36 dadurch, daß zwar auch hier der Schieber von dem Blattfedersystem 240 in Richtung Gehäuseboden 218 gedrückt wird, jedoch keine Stufe am Gehäuse vorgesehen ist; vielmehr sind an den Separatorsteg 20 beidseits des Blattdurchlaßspaltes 244 Schuhe 246 angeformt, die sich auf dem Gehäuseboden 218 abstützen und so ständig die lichte Weite des Spalts auf dem gewünschten Wert halten.

Die Ausführungsform nach Fig. 41 (Längsschnitt) und 42 (Teilquerschnitt) ist eine Modifikation der Ausführung nach Fig. 37 und 38. Zwischen den Schieberholmen 44 ist eine Halterung 248 angeformt, die ein stationäres Ende einer breitseitig eingespannten, elastischen Blattfeder 250 hält. Das abgerundete Ende der Blattfeder folgt der Stufe 68 und legt sich nach Passieren von deren Kante 72 auf das vereinzelte Blatt 188.

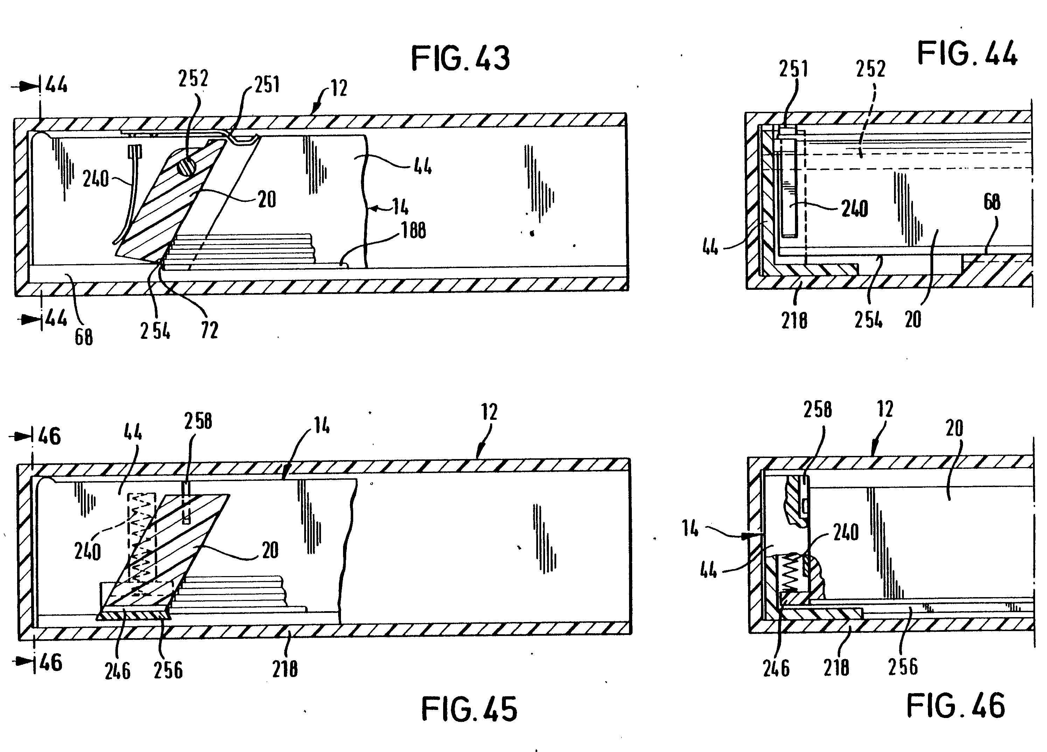

Die Ausführungsform nach Fig. 43 (Längsschnitt) und 44 (Teilquerschnitt) weist ebenfalls ein relativ zum Schieber 14 federnd auslenkbares Trennelement in Form eines Separatorsteges 20 auf, der in den Schieberholmen 44 um eine Welle 252 schwenkbar ist, jedoch von einer Federanordnung 240 mit seiner Kante 254 in Anlage an dem jeweils gegenüberliegenden Teil gehalten ist, also zunächst an der Stufe 68 und nach Passieren von deren Kante 72 an dem vereinzelten Blatt 188.

Die Ausführungsform nach Fig. 45 (Längsschnitt) und 46 (Teilquerschnitt) umfaßt als erstes Rahmenteil ein Gehäuse 12, als zweites Rahmenteil einen Schieber 14. Zwischen den Holmen 44 des Schiebers ist eine Fußplatte 256 eingefügt, die ein erstes Trennelement bildet. Das zweite Trennelement ist ein relativ zum Schieber in Richtung Gehäuseboden 218 von einer Federanordnung 240 vorgespannter Separatorsteg 20, der an Schienen 258 geführt ist und an seinem unteren Ende beidseits des zu vereinzelnden Blattes Anschlagschuhe 246 aufweist.

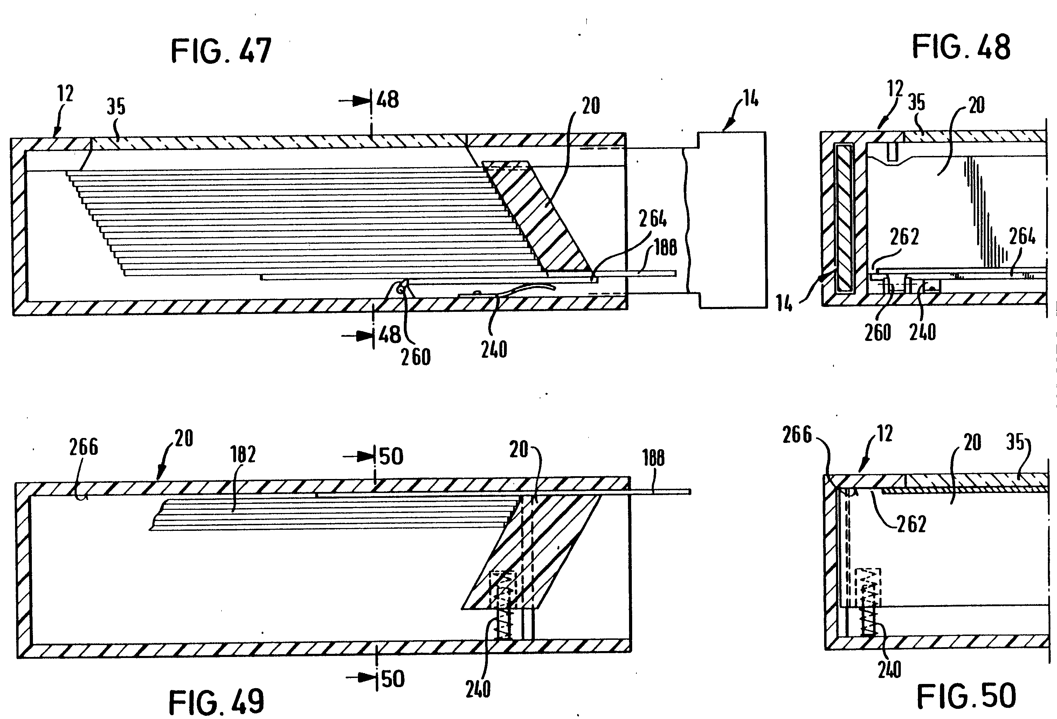

Die Fig. 47 (Längsschnitt) und 48 (Teilquerschnitt) zeigen eine Ausführungsform, bei der das erste Rahmenteil von einem Schieber 14 gebildet ist, der relativ zu einem Gehäuse 12 als zweiten Rahmenteil hin- und herverschieblich ist. Es versteht sich, daß hier wie auch bei allen anderen Ausführungsformen der maximale Hub des Schiebers durch Anschläge begrenzt ist, die aber der Klarheit wegen nicht gezeichnet sind. — An das Gehäuse 12 ist einstückig als erstes Trennelement ein Separatorsteg 20 angeformt, dem gegenüber ein zweites Trennelement in Form einer angelenkten (Gelenk 260) Platte 264 vorgesehen ist, die von einer Feder 240 in Anlage an seitlichen Stützfortsätzen 262 des Separatorsteges gedrückt wird. Die Platte 264 kann also fertigungsbedingte Toleranzen auffangen, während die Spalthöhe stets durch die Höhe der Fortsätze 262 festgelegt ist, die praktisch unveränderlich ist.

Die Fig. 49 (Längsschnitt) und 50 (Teilquerschnitt) zeigen eine Ausführungsform, bei der das Gehäuse 12 das zweite Rahmenteil bildet und ein (nicht gezeichneter) Schieber das erste Rahmenteil. Am Gehäuse ist ein Separatorsteg 20 gleitbeweglich quer zur Stapelhauptebene geführt und steht unter Vorspannung durch eine Federanordnung 240. Mit seinen Stützfortsätzen 262 definiert er die Spalthöhe, die auf der anderen Seite durch die Gehäusedeckwand 266 definiert wird.

Die beschriebenen Trenneinrichtungen können mittels der in Fig. 1 bis 10 bzw. 13 bis 34 dargestellten Zufuhreinrichtungen gespeist werden. Deren Wirkungsweise, Details und alternative Gestaltungen werden nachstehend unter Bezugnahme auf die Fig. 51 bis 97 näher erläutert.

Die Fig. 51 bis 63 zeigen die Wirkungsweise der Zufuhreinrichtung, Alternativen und Details derselben.

Fig. 51 bis 58 stellen zunächst das Prinzip dar. Man erkennt in Fig. 51 das erste Rahmenteil in Form des im wesentlichen rechteckigen Gehäuses 12, in dem gleitbeweglich der Schieber 14 als zweites Rahmenteil aufgenommen ist. Die Trenneinrichtung ist nur symbolisch als Separatorsteg 20 angedeutet. Der Stapel gleichformatiger Blätter ist mit 182 bezeichnet.

Der Schieber 14 umfaßt ein Griffstück 48, an dem die in Bewegungsrichtung vordere Kante des Stapels anliegt, sowie neben dem Separatorsteg die zwei Längsholme 44. Zwischen den Längsholmen ragen vom Boden des Gehäuses 12 die Elemente der Zufuhreinrichtung nach oben. Die zwei Blattfedern 24 sind mit einem Ende am Gehäuse festgelegt; das andere Ende weist die an der Stapelkante anliegende Schrägfläche 22 auf (siehe auch Fig. 54, 58). Demgemäß ist in den Federn 24 die Schrägfläche mit der Vorspannfeder baulich vereinigt. Wird nun der Schieber aus dem Gehäuse herausgezogen, was in Fig. 51 bis 58 für den Beginn des Wechselzyklus dargestellt ist, so legt sich zunächst die Schrägfläche 22, welche im Ruhezustand nach Fig. 51 noch in den Bereich des Griffstücks 48 hineinragt, an die Stapelkante an (Fig. 52). Beim weiteren Herausziehen des Schiebers aus dem Gehäuse gehen die im Stapel obersten Blätter, die deshalb als Block gezeichnet sind, mit dem Schieber mit, während die im Einwirkbereich der Schrägfläche liegenden Blätter gebremst werden, bis der Separatorsteg 20 auf ihre gegenüberliegende Kante auftrifft (Fig. 53).

Auf die Blätter wird nun von beiden Kanten her einwärts wirkend ein Druck ausgeübt, einerseits von dem Separatorsteg, andererseits von der Schrägfläche der Zufuhreinrichtung. Die Schrägfläche kann aber nach unten ausweichen infolge der Elastizität der Federn 24, wobei die Schrägfläche an den Kanten der über dem untersten Blatt liegenden Blätter nacheinander abgleitet. Auf das unterste Blatt hingegen wirkt vom Separatorsteg her keine oder nur eine wesentlich geringere Bremskraft, so daß bei richtiger Abstimmung der Schräglage der Schrägfläche 22 und der Vorspannung der Federn 24 die von der in Blattlängsrichtung wirkenden Komponente der Federvorspannung aufgebrachte Kraft genügt, das unterste Blatt unter dem Separatorsteg durchzuschieben. Dabei wird auch die zwischen benachbarten Blättern wirkende Haftkraft überwunden, die bei der Auslegung des Systems eine erhebliche Rolle spielt.

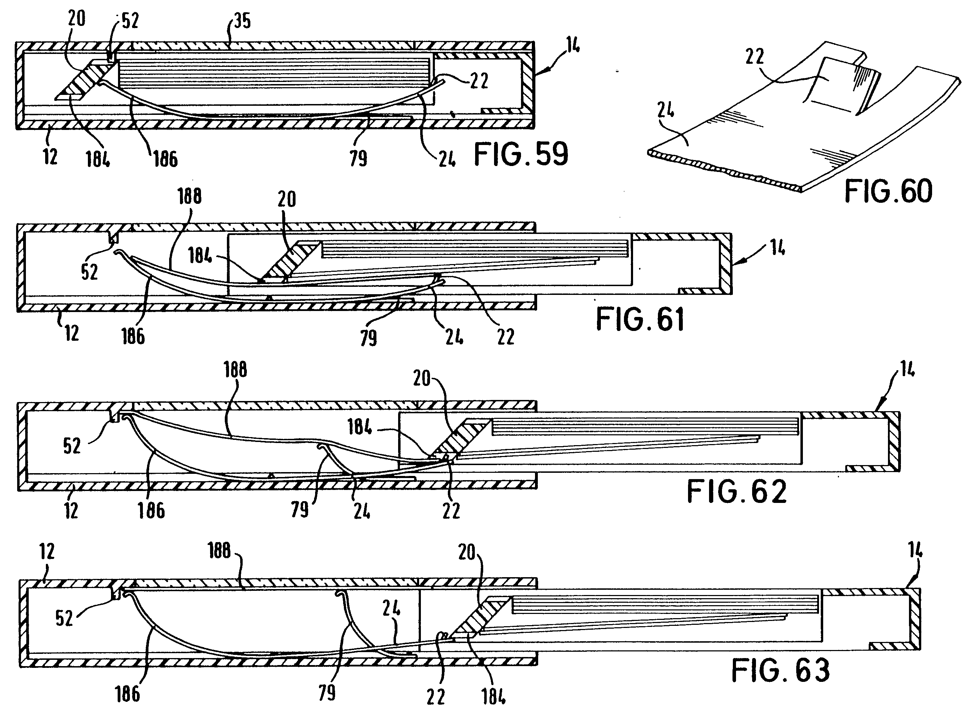

Fig. 59 bis 63 zeigen weitgehend schematisiert eine Ausführungsform, bei der die Zufuhreinrichtung nicht nur diese Aufgabe übernimmt, sondern darüber hinaus auch noch das vom Reststapel getrennte Blatt mit dem ersten Rahmenteil verbindet, also eine Komponente der Halteeinrichtung darstellt.

Die Rahmenteile 12 und 14 entsprechen weitgehend dem Aufbau gemäß Fig. 51 bis 58. Unterschiedlich ist, daß auf der dem Gehäuseboden zugewandten Seite des Separatorsteges 20 Einschnitte 184 vorgesehen sind, die den Durchtritt eines am freien Ende der Blattfedern 24 angeformten Lappens 22 ermöglichen. Der Lappen weist die Schrägfläche auf seiner dem Stapel zugewandten Seite auf, während die Federabschnitte beidseits von ihm für eine symmetrische Abstützung sorgen. Die Federn 24 haben ein rückwärts gewandtes zweites freies Ende 186 mit abgerundetem Ende, und am Schieberboden, jedoch unter den Holmen des Schiebers, sind die beiden seitlichen Hilfsfedern 79 vorgesehen.

Diese Ausführungsform arbeitet wie folgt:

Beim Auszug des Schiebers wird das unterste Blatt dem Separatorsteg 20 ganz ebenso präsentiert wie bei der Ausführungsform nach Fig. 51 bis 58. Zugleich werden die Federenden 186 vom Separatorsteg nach unten gedrückt. Nachdem sie vom Separatorsteg überlaufen worden sind, können sie sich wieder entspannen und heben dabei das unter dem Separatorsteg durchgeschobene Blatt mit dessen hinterer Kante an. Dieses Blatt ist mit 188 bezeichnet. Der Auszugshub des Schiebers ist so bemessen, daß die Federenden neben den Lappen 22 noch von dem Separatorsteg unterdrückt gehalten sind, während die Holme die Hilfsfedern 79 freigeben, so daß diese auch die vordere Kante des Blattes anheben können, da diese von dem Lappen 22 bis vor den Separatorsteg mitgenommen worden ist (vgl. Fig. 63) ; dabei kann diese Kante zwischen den Schieberholmen angehoben werden und beim Rückschub des Schiebers über den Separatorsteg hinweggleiten, wobei sich die andere Kante des Blattes an dem Anschlagsteg 52 abstützt.

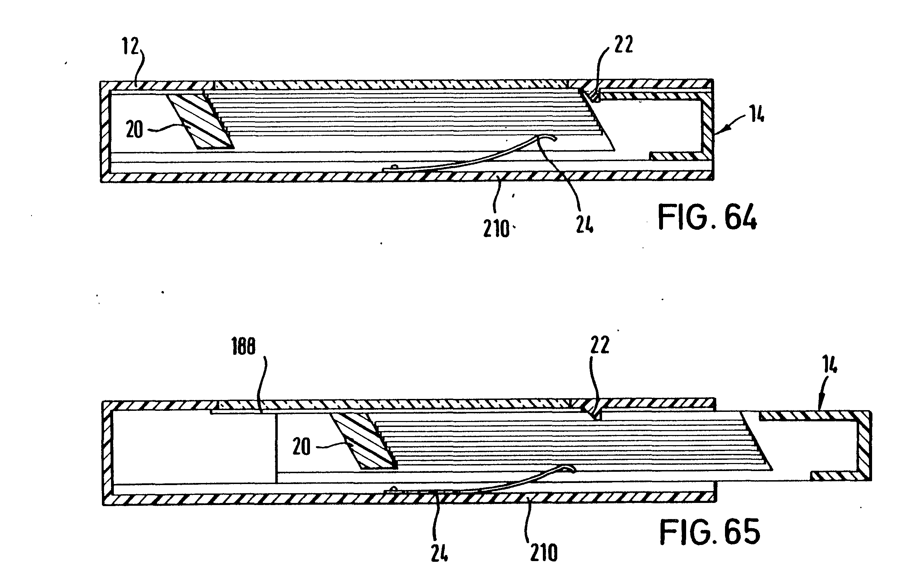

Fig. 64 und 65 stellen schematisch dar, daß die erfindungsgemäße Ausgestaltung auch nach dem Prinzip der kinematischen Umkehr so arbeiten kann, daß die Schrägfläche 22 starr an dem ersten Rahmenteil — hier in Form eines Gehäuses — vorgesehen, zum Beispiel angespritzt ist, während die Federvorspannung durch eine an die gegenüberliegende Wandung 210 angeheftete Blattfeder 24 bewirkt wird. Fig. 64 zeigt den Ruhezustand, Fig. 65 den Beginn des Auszugshubes des anderen Rahmenteils in Form eines Schiebers, wobei das Einzelblatt 188 bereits abgetrennt ist.

Schließlich ist anzumerken, daß in den beschriebenen Ausführungsformen eine Wechselwirkung zwischen der mit dickerem Stapel zunehmenden Vorspannung der Blattfedern und der dabei sich ändernden Neigung der Schrägfläche derart besteht, daß von der Trenneinrichtung aus gesehen im wesentlichen gleiche Verhältnisse unabhängig von der Stapeldicke vorliegen, d. h. die auf das unterste Blatt wirkende Bremskraft im wesentlichen unabhängig von der Zahl der Blätter im Stapel ist.

Es besteht auch die Möglichkeit, beim Zusammenschieben der beiden Rahmenteile bereits den nächsten Wechsel dadurch vorzubereiten, daß der Mitnehmer über ein Gestänge bewegt einen Vorlauf ausführt und dadurch bereits der Trenneinrichtung das nächste zu vereinzelnde Blatt zufördert, während noch das vorhergehende auf der anderen Stapelseite zurückkommt.

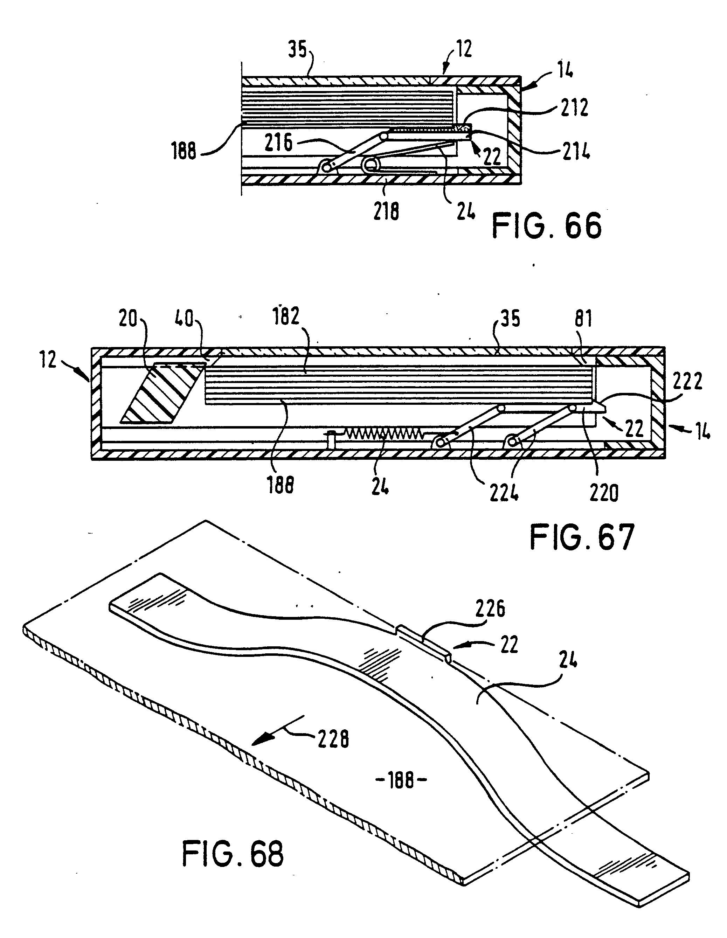

Fig. 66, 67 und 68 schließlich zeigen weitere Ausgestaltungen der erfindungsgemäßen Vorrichtung.

In Fig. 66 ist der Mitnehmer 22 von einem kompressiblen Belag 212 auf einer Trägerplatte 214 gebildet, die mittels Lenker 216 am Boden 218 eines der Rahmenteile angelenkt ist. Eine Schenkelhalsfeder 24 drückt den Mitnehmer in Anlage an die hintere Kante des abzutrennenden Blattes 188.

Gemäß Fig. 67 ist der Mitnehmer 22 als eine Platte 220 ausgebildet, die mit einer hochstehenden Leiste 222 die hintere Kante des abzutrennenden Blattes 188 hintergreift. Die Vorspannanordnung umfaßt eine Schraubenzugfeder 24, die irgendwo stationär eingehangen ist und an eine Parallelogrammgestängeanordnung 224 angreift, an die die Mitnehmerplatte angelenkt ist. Auf diese Weise ist der Mitnehmer unabhängig von der Stapeldicke parallel zu seiner Hauptebene gehalten.

Gemäß Fig. 68 ist der Mitnehmer 22 ein Fortsatz 226, abgewinkelt von einer Blattfeder 24, die sich quer zu der durch den Pfeil 228 symbolisierten Bewegungsrichtung des abzutrennenden Blattes 188 erstreckt ; auch hier ist der Mitnehmer im wesentlichen immer in derselben Wirkungsposition bezüglich der Blattkante unabhängig von der Zahl der Blätter im Stapel.

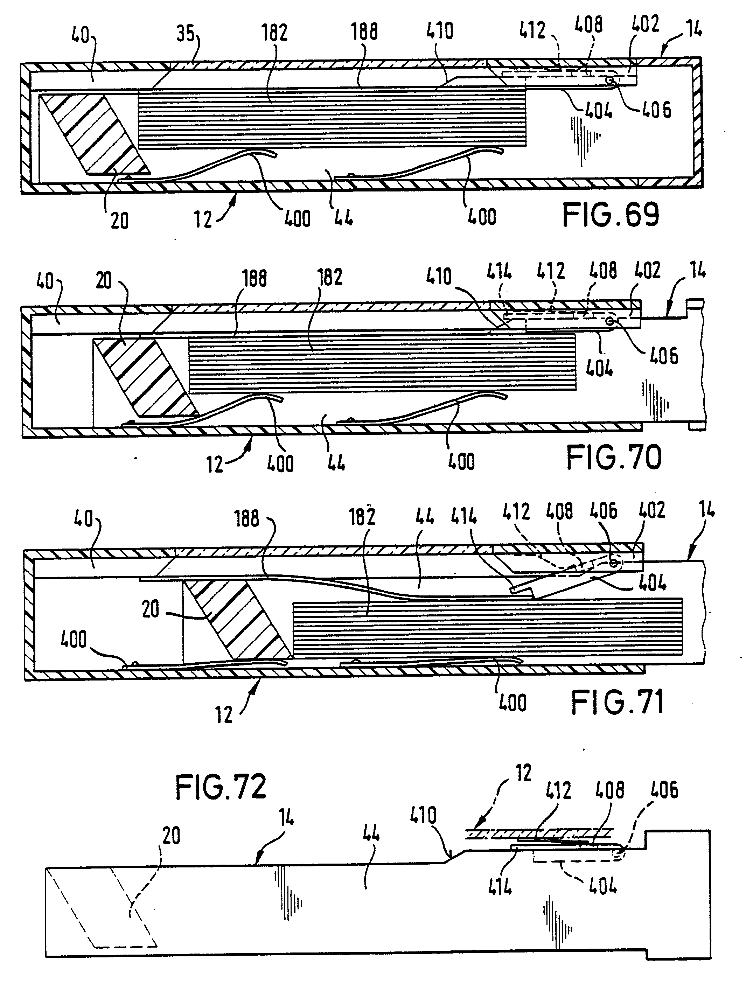

Fig. 69 bis 72 zeigen eine weitere Ausführungsform. Fig. 69 bis 71 stellen die ersten Phasen des Wechselvorgangs in schematisiertem Längsschnitt dar, während Fig. 72 eine Seitenansicht des zweiten Rahmenteils mit dem am ersten vorgesehenen Mitnehmer ist.

Das erste Rahmenteil ist als Gehäuse 12, das zweite als Schieber 14 ausgebildet. Der Stapel 182 wird von einer Federanordnung 400 nach oben gedrückt, so daß die hintere Kante des obersten Blattes an einer Rippe 402 abgestützt wird, während ihre Endkante vor dem Mitnehmer 404 zu liegen kommt. Der eigentliche Mitnehmer ist die dem Blatt zugekehrte Kante des Mitnehmerklotzes, die um knapp eine Blattdicke gegenüber der Rippe vorsteht. Bei Zug am Schieber nimmt der Separator 20 den Reststapel mit, während das Einzelblatt im Gehäuse zurückbleibt. Der Mitnehmerklotz 404 ist um eine Achse 406 schwenkbar am Gehäuse angelenkt, wo dieses die Rippe 402 trägt, und gleitet mit einem Fortsatz 408 auf der Oberkante des Schieberholmes 44 (Fig. 72). Diese ist als Steuerkurve ausgebildet, wobei nach einem Teilhub des Schiebers, der ausreicht, die führende Kante des Einzelblattes 188 durch die Trenneinrichtung zu schieben, die Schräge 410 dem Klotz 404 erlaubt, sich abzusenken und dabei eine erheblich dikkere Arbeitsfläche dem Einzelblatt zuzukehren als vorher zulässig war. Dabei steht er unter Vorspannung durch eine Blattfeder 412, und er ist mit einem Fanghaken 414 versehen, der das Abrutschen der Einzelblattkante in Richtung Rippe 402 verhindert.

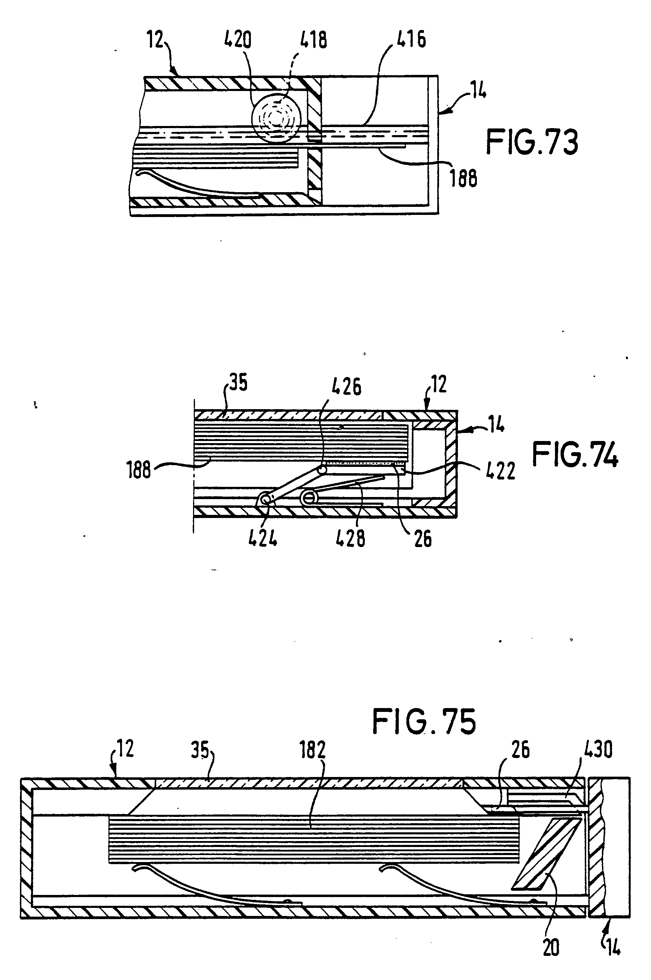

Fig. 73 bis 78 beziehen sich auf Zufuhreinrichtungen, mittels denen der Blattstapel oder zumindest ein Teil desselben der Trenneinrichtung so zugeführt wird, daß diese ein Blatt vereinzeln kann.

Allen Ausführungsformen sind aber einige Punkte gemeinsam, die im Zusammenhang mit der Gesamtfunktion der Vorrichtung zu erwähnen sind.

So besteht grundsätzlich die Möglichkeit, daß die Zufuhreinrichtung auch die Funktion übernehmen kann, das vereinzelte Blatt im ersten Rahmenteil festzuhalten, und zwar während des gesamten Auszugshubes der Rahmenteile.

Ferner ist es grundsätzlich empfehlenswert, daß die Zufuhreinrichtung nachdem sie im Kontakt mit dem Stapel und/oder dem zu vereinzelnden Blatt ihre Zufuhrfunktion erfüllt hat — von dem Stapel während des restlichen Relativweges der Rahmenteile zu lösen, um die Bauteile und die Blätter weitgehend zu schonen. Das kann nach Art eines Freilaufs vorgesehen sein, wenn die Umsteuerung In Eingriff/Außer Eingriff bewegungsrichtungsabhängig sein soll, oder durch hubabhängig steuernde Komponenten, die mit der Zufuhreinrichtung oder Teilen derselben in und außer Wirkverbindung treten.

Wenn die Rahmenteile nach Art eines Gehäuses als erstes Rahmenteil und nach Art eines in das und aus dem Gehäuse beweglichen Schiebers ausgebildet sind, der als zweites Rahmenteil bei dem Auswärtshub den Reststapel zum Zugriff freigibt, ist es bevorzugt, die Zufuhreinrichtung vollständig inaktivierbar zu machen, um mit dem Schieber auf einmal den gesamten Stapel entnehmen zu können.

Fig. 73 bis 78 zeigen, weitgehend schematisiert, unterschiedliche weitere Zufuhrsysteme nach anderen Prinzipien.

Gemäß Fig. 73 weist das erste Rahmenteil eine angeformte Zahnstange 416 auf, mit der ein im zweiten Rahmenteil drehbar gelagertes Ritzel 418 kämmt und bei der Relativbewegung eine Mitnehmerwalze 420 antreibt, die das zu vereinzelnde Blatt 188 reibungsschlüssig mitnimmt.

Fig. 74 zeigt eine Ausführungsform mit einer Platte 422, die einen Haftbelag 26 trägt, der das an ihm anliegende Blatt reibungsschlüssig mitzunehmen in der Lage ist. Die flächige Anlage wird durch die Aufhängung der Platte über ein erstes Gelenk 424 und ein zweites Gelenk 426 sowie eine Vorspannfeder — hier eine Schenkelhalsfeder 428 — sichergestellt.

Fig. 75 stellt eine Ausführungsform dar, bei der ebenfalls die Zuführeinrichtung mittels eines Haftelementmitnehmers arbeitet. Hier ist das erste Rahmenteil als Schieber, das zweite Rahmenteil als Gehäuse ausgebildet. Am Schieber 14 ist ein Haftelementmitnehmer 26 angeordnet, der das zu vereinzelnde Blatt vom Stapel 182 abzieht und der Trenneinrichtung zuführt, die hier einfach als Separatorsteg 20 gezeichnet ist. Im zweiten Rahmenteil (also dem Gehäuse 12) ist eine Steuerkulisse 430 ausgebildet, längs der der Haftelementmitnehmer über den Separatorsteg ohne Kontakt mit diesem hinweggeführt wird.

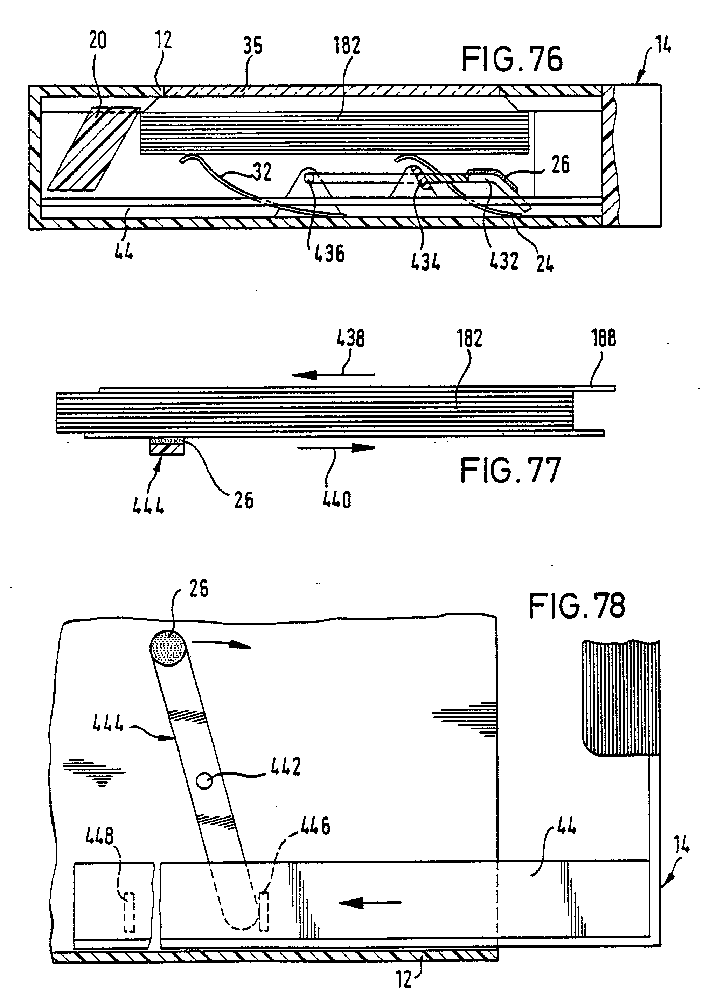

In Fig. 76 ist angedeutet, wie ein Haftmitnehmer 26, nahe dem freien Ende eines Hebels 432 angeordnet, durch Auflaufen einer Steuerschräge 434 am zweiten Rahmenteil (Schieber 14) um seinen Anlenkpunkt 436 am ersten Rahmenteil (Gehäuse 12) in Anlage an das ihm zugewandt liegende Blatt des Stapels verschwenkt wird und so auf einem Teilhub der Relativbewegung dieses Blattes der Trenneinrichtung zuführt, symbolisiert durch den Separatorsteg 20.

Fig. 77 zeigt in schematischer Seitenansicht, Fig. 78 in Teilschnitt-Draufsicht eine Zufuhreinrichtung, die nicht erst zu Beginn eines Auszugshubes der Rahmenteile wirksam wird, sondern bereits beim letzten Einwärts-Teilhub des vorhergehenden Wechselvorgangs.

Während also das Einzelblatt 188 auf einer Seite dem Stapel 182 wieder zugeführt wird — Pfeil 438 — wird auf seiner anderen Seite — Pfeil 440 — das nächste Blatt schon in Bewegung gesetzt. Hierfür weist das erste Rahmenteil einen bei 442 angelenkten Hebel 444 mit einem Haftmitnehmer 26 auf, der durch Auflaufen von Anschlägen 446 bzw. 448 nahe den jeweiligen relativen Endpositionen des zweiten Rahmenteils umgelegt wird und dabei das Blatt entsprechend der Relativbewegung der beiden Rahmenteile mitnimmt.

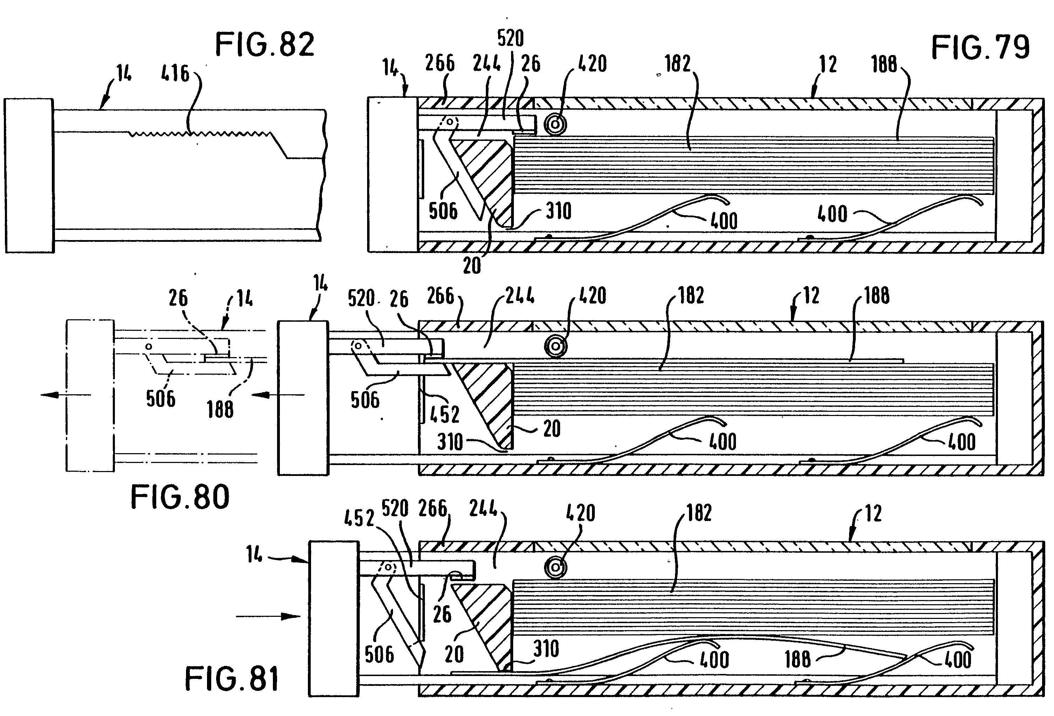

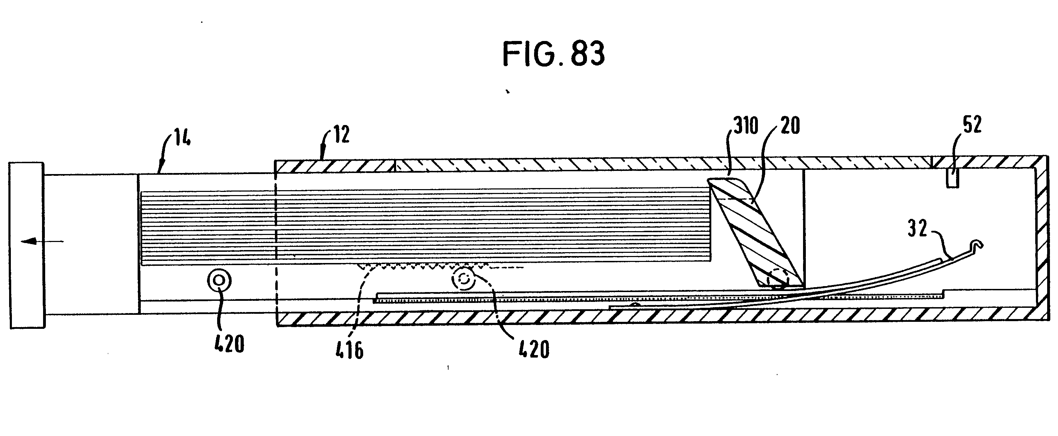

Fig. 79 zeigt im schematisierten Längsschnitt eine andere Ausführungsform des Gegenstandes der Erfindung, während die Fig. 80. 81 einzelne Phasen des Wechselzyklus darstellen. Fig. 82 illustriert den Antrieb der Rolle.

Man erkennt in Fig. 79 das erste Rahmenteil in Form eines Schiebers 14, der relativ zu dem zweiten Rahmenteil, das als Gehäuse 12 ausgebildet ist, verschieblich ist. Die Trenneinrichtung umfaßt den Separatorsteg 20 und weitere Bauteile gemäß Fig. 35-50. Die Federn 400 drücken den Stapel 182 nach oben.

Am Schieber ist eine Zahnstange 416 angeformt (Fig. 82), die mit einem Ritzel auf der Rollenwelle (nicht gezeigt) kämmt. Dadurch wird die Rolle zu einer Umfangsgeschwindigkeit angetrieben, die gleich ist der Relativgeschwindigkeit zwischen beiden Rahmenteilen. Die Rolle 420 ist mit einem die Reibung an den Fotos erhöhenden Belag versehen, und da der Stapel von den Federn gegen die Rolle gedrückt wird, fördert die Rolle beim Auszug des Schiebers aus dem Gehäuse das ihm zugekehrt liegende Blatt ein Stück weit durch den Durchlaßspalt 244 zwischen Separatorsteg und Gehäusedeckwand 266. Die Rolle ist in Lagern des Gehäuses drehbar.

Am Schieber ist ein Mitnehmerelement in Form eines Haftbelags 26 vorgesehen, der im Zusammenwirken mit einem Gegenelement 450 die führende Kante des von der Rolle angeförderten Blattes erfaßt, sobald das Gegenelement, das zunächst durch Auflaufen auf den Separatorsteg nach unten weggeklappt worden war, von diesem Steg freikommt und unter Wirkung einer Vorspannfeder. (nicht gezeigt) nach oben auf den Haftbelag zu schwenkt. Das Blatt wird dann zwischen Haftbelag und Gegenelemnt zangenartig gefaßt. Die Rolle wirkt demgemäß als Zufuhreinrichtung, die beschriebene Zwange als Halteeinrichtung.

Wie Fig. 81 erkennen läßt, läuft beim Rückhub des Schiebers das Einzelblatt 188 durch den unteren Durchlaß 310 des Separatorstegs, und ein Rastorgan 452 klappt das Gegenelement rechtzeitig ab, damit die nachschleppende Blattkante für den Durchlauf durch den Durchlaß freikommt.

Fig. 83 zeigt eine weitere Ausführungsform der Vorrichtung. Hier ist das erste Rahmenteil als Gehäuse 12, das zweite Rahmenteil als Schieber 14 mit Separatorsteg 20 ausgebildet. Demgemäß ist die Rolle 420 drehbar im Schieber gelagert und von einer Zahnstange 416, die an das Gehäuse angeformt ist, zum Umlauf angetrieben, und zwar entgegen der Schieberbewegungsrichtung. Die Ausgangsposition der Rolle ist getrichelt angedeutet. Sobald der Separator das auf diese Weise im Gehäuse zurückbleibende Blatt überlaufen hat, drückt ein in seinem Fußteil eingebautes reibungsarmes Element (z. B. eine glatte Rolle) das Blatt nach unten auf den Gehäuseboden, wo eine reibungserhöhende Beschichtung (« Haftbelag ») angebracht ist. Eine Feder 32 drückt dann hinter dem Separator das Blatt wieder vom Haftbelag ab nach oben in Richtung auf einen Anschlag 52, von dem dann das Blatt beim Schieberrücklauf durch den oberen Durchlaß 310 geschoben wird.

Es ist anzumerken, daß jedenfalls während der Rücklaufphase der Rahmenteile die Rolle vom Antrieb entkoppelt ist, so daß sie auf dem Stapel zurücklaufen kann, ohne dann das mit ihr in Eingriff stehende Blatt zu stauchen. Man kann aber auch den Antrieb bereits dann auskoppeln, wenn das Einzelblatt von dem Mitnehmer (Zange oder Haftbelag) erfaßt ist, wofür dem Fachmann bekannte Mittel zur Verfügung stehen.

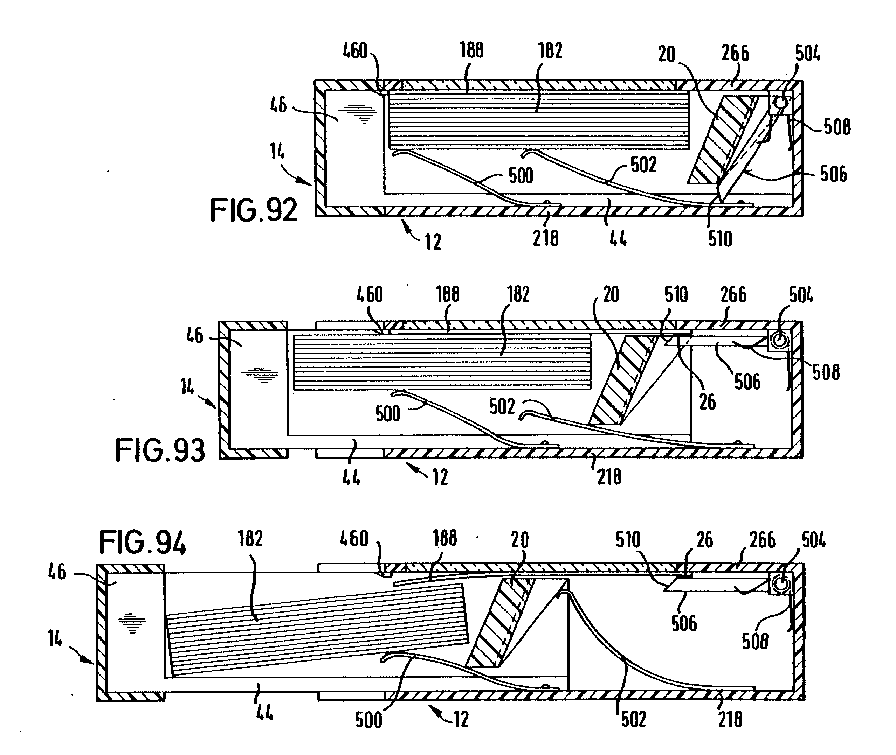

In Verbindung mit der Rolle als Zufuhreinrichtung ist auch eine Halteeinrichtung nach Fig. 92-115 brauchbar.

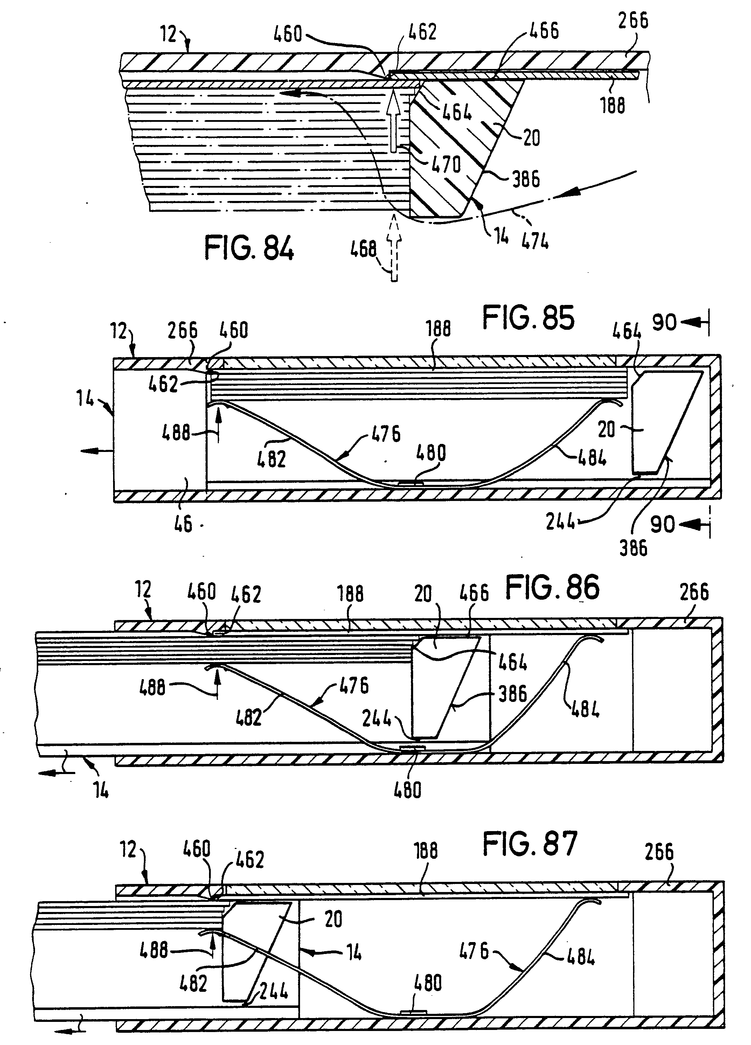

Fig. 84 zeigt das Zusammenwirken eines als Zufuhrorgan dienenden Mitnehmers 460 in Form eines Hakens oder einer Leiste, der hinter die in Förderrichtung hintere Kante 462 eines abzutrennenden Blattes greift. Die Trenneinrichtung umfaßt einen Separator 20 mit einer Einlaufschräge 464. Zwischen der Oberseite 466 des Separators und der Deckwand 266 eines Rahmenteils wird das Blatt 188 durchgeschoben. Damit der Eingriff zwischen Blatt und Mitnehmer sichergestellt ist, wirkt im Bereich unmittelbar vor (gesehen in Förderrichtung) dem Separator eine Andruckanordnung, die hier durch Pfeile symbolisiert ist, welche die Wirkrichtung der Anordnung zeigen. Je nach der Anzahl der Blätter im Stapel steht die Andruckanordnung weit unterhalb des von den Teilen 466, 266 begrenzten Durchlasses (unterbrochener Pfeil 468) oder, wenn nur wenige Blätter im Stapel sind, ziemlich dicht unter dem Mitnehmer (dicker Pfeil 470). Wenn das abgetrennte Blatt von dem Mitnehmer bis hinter die Rückseite des Separatorsteges geführt worden ist, kommt seine rückwärtige Querkante 472 frei und fällt entgegen der Wirkrichtung der Andruckanordnung nach unten oder wird von nicht dargestellten Hilfsmitteln dorthin verlagert, damit diese Kante wieder zwischen die Andruckanordnung und den Stapel eingeführt werden kann. Man erkennt, daß dies in der dargestellten Situation äußerst kompliziert sein dürfte, da diese Kante einen Weg etwa entlang der gestrichelten Bahn 474 zurücklegen müßte unter erheblicher Deformation des Blattes.

Fig. 85-91 zeigen, wie dieses Problem gelöst wird.

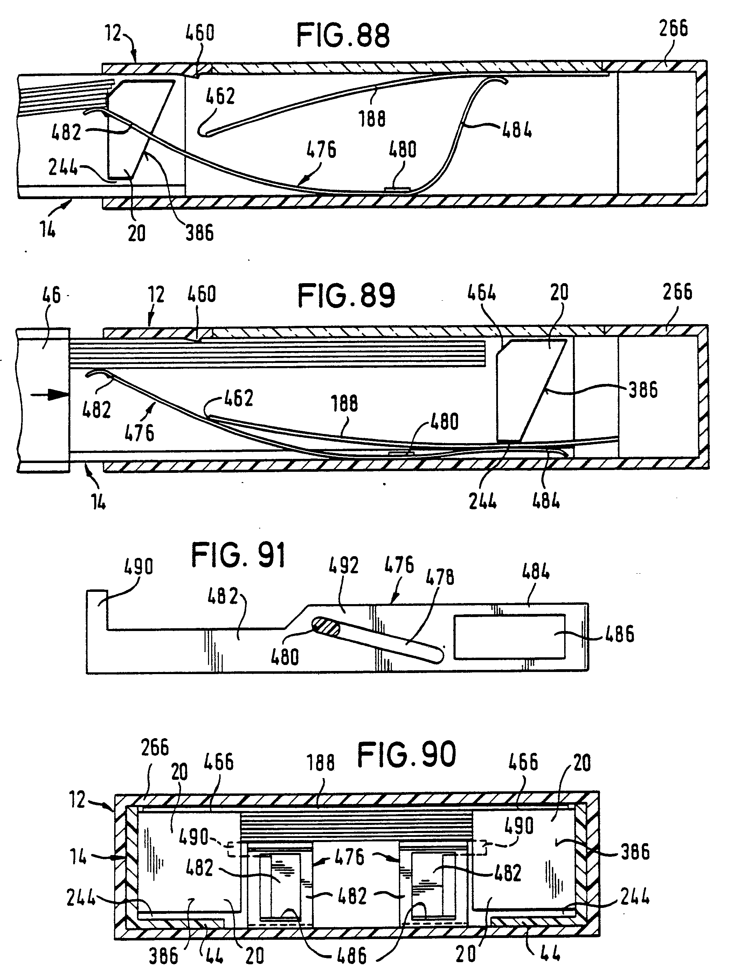

Das eine Rahmenteil hat die Form eines Gehäuses 12, das andere Rahmenteil ist ein Schieber 14, der relativ zum Gehäuse einen vorgegebenen Auszugshub durchlaufen kann ; der voll ausgezogene Zustand ist in Fig. 87 gezeigt. Der Mitnehmer 460 ist an die Gehäusedeckwand 266 angeformt. Die Andruckanordnung umfaßt zwei zueinander parallele doppelarmige Blattfedern 476. Diese Federn haben eine Konfiguration gemäß Fig. 90 : Ein schrägstehendes Langloch 478 sitzt auf einem länglichen Führungsstück 480, das am Gehäuseboden angeformt ist. Der fast genau unter dem Mitnehmer sich an den Stapel von unten anlegende Federarm 482 ist so kräftig ausgebildet, daß der Stapel auch bei vielen Blättern sicher an dem Mitnehmer in Anlage gehalten wird. Der andere Federarm 484 ist durch eine Ausnehmung 486 geschwächt und daher wesentlich weicher, da in der Ausgangsstellung nach Fig. 84 das zu wechselnde Blatt durch die Schräge 464 in den Durchlaß geleitet wird, auch wenn der Andruck nur gering ist.

Man erkennt in Fig. 90, daß der Separator 20 sich nicht über die gesamte Breite des Schiebers 14 erstreckt, an den er angeformt ist, sondern in der Mitte ausgenommen wurde, so daß beim Herausziehen des Schiebers 14 aus dem Gehäuse 12 die Federn der Andruckanordnung zwischen den beiden Separatorstegteilen hindurchlaufen können.

Von Beginn der Rahmenteilbewegung (Fig. 85) bis fast zu dem Vollauszug (Fig. 88) bleibt der Andruck, symbolisiert durch Pfeil 488, genau unter dem Mitnehmer erhalten. In der Position nach Fig. 87 laufen die Separatorstegteile 20 auf je einen auswärts gekehrten Finger 490 auf, und auf dem Weg des Schiebers aus der Position nach Fig. 87 in die nach Fig. 88 werden die beiden Blattfedern 476 längs des Führungsstücks 480 gleitend mitgenommen. Die Federn werden wegen der Schrägstellung des Langlochs 478 in Richtung der Schieberbewegung, aber auch etwas nach außen verlagert, bleiben aber im wesentlichen parallel zur Bewegungsrichtung.

Durch diese Verlagerung in Bewegungsrichtung ergibt sich auf der den Separatorstegteilen abgewandten Seite des Gehäuses in Fig. 88, daß das abgetrennte Blatt 188 von den Federarmen 484 nach oben an die Gehäusedeckwand 266 gepreßt wird, während seine Kante 462 freikommt und nach unten durchhängt oder von Hilfsmitteln abwärts gedrückt wird.

Wird nun, ausgehend von Fig. 87, der Schieber 14 wieder eingeschoben, so gelangt diese Kante 462 längs der Schrägfläche 386 der Separatorstegteile nach unten bis vor den Durchtritt 244 und in diesen hinein, während der Federarm 482 mit seinem freien Ende längs des untersten Blattes des Stapels gleitet, jedoch immer mit einem Vorlauf vor der Kante 462 von Blatt 188 entsprechend der Verlagerung des Langlochsystems.

Die zweite Folge dieser Verlagerung, nämlich in Richtung nach außen, ist, daß die Separatorstegteile 20 auf die seitlich ausladenden Kufenabschnitte der Federarme 484 auflaufen und diese, da sie relativ weich sind, ohne Behinderung der Rahmenteilbewegungen nach unten drücken, so daß auch die hintere Kante des wieder unter die Andruckanordnung zu führenden Blattes freikommt.

Kurz vor Erreichen der Ausgangsposition läuft irgendein Teil des Schiebers 14, z. B. das Griffstück 46, auf die Federarme 482 bzw. die Finger 490 auf und drückt die Blattfedern wieder entsprechend dem Langlochsystem in die Ausgangsposition zurück. Dabei gleitet das Ende des Federarms 482 sanft unter die Kante 462 des nunmehr dem Stapel unten wieder zugeführten Blattes.

In den Ausführungsbeispielen nach Fig. 1 bis 10 und 13 bis 33 sind einander ähnliche, auf demselben Prinzip beruhende Halteeinrichtungen vorgesehen, mittels denen das abgetrennte Blatt am ersten Rahmenteil gehalten ist. In Verbindung mit der Trenneinrichtung gemäß der vorliegenden Erfindung können aber auch abweichend gestaltete Halteeinrichtungen verwendet werden, die in den Fig. 92 bis 115 illustriert sind und nachstehend erläutert werden.

Fig. 92 bis 94 beziehen sich auf ein Ausführungsbeispiel. Sie sind weitgehend schematisiert und auf das Wesentliche beschränkt.

Das erste Rahmenteil ist als Gehäuse 12 ausgebildet, das zweite Rahmenteil als Schieber 14. An der Deckwand des Gehäuses 12 ist ein Mitnehmer in Form einer Leiste oder eines Hakens 460 angebracht, zum Beispiel angeformt, und die Längsholme 44 des Schiebers sind einerseits durch dessen Frontblocks 46, andererseits durch einen Separatorsteg 20 quer miteinander verbunden. An der Gehäusebodenwand 268 ist eine erste Andruckfeder 500 befestigt, die das dem Schieberfrontblock 46 nähere Ende des Stapels 182 an die Gehäusedeckwand drückt — die z. B. ein Sichtfenster aufweisen kann —, und eine zweite Andruckfeder 502 ist ebenfalls am Gehäuseboden befestigt und drückt den Stapel nahe seinem dem Separatorsteg zugekehrt liegenden Ende nach oben.

Auf der dem Stapel abgewandten Seite des Separatorstegs ist um eine Achse 504 schwenkbar ein Hebel 506 angelenkt, der von einer Feder 508 in die in Fig. 93 dargestellte Position vorgespannt ist. Die Schrägfläche 510 am freien Ende des Hebels 506 gelangt beim Einschub des Schiebers in das Gehäuse in Kontakt mit der ihm zugekehrten Seite des Separatorstegs und wird durch die Keilwirkung nach unten gedrückt in die in Fig. 92 dargestellte Position. Die der Gehäusedeckwand zugewandte Seite des Hebels 506 trägt nahe ihrem freien Ende einen Haftbelag 26.

Die Vorrichtung arbeitet wie folgt:

Wenn, ausgehend von der Ruheposition nach Fig. 92, der Schieber 14 aus dem Gehäuse 1 herausgezogen wird, trifft der Mitnehmer 460 auf die ihm zugekehrt liegende Kante des abzutrennenden Blattes 188 und schiebt dieses in Richtung Separatorsteg. Dies ist dann möglich, wenn der Stapel von der Feder 500 hinreichend kräftig in Anlage an der Deckwand gehalten wird. Sobald der Separator sich auswärts bewegt, beginnt der Hebel 506 unter der Wirkung seiner Vorspannfeder nach oben zu schwenken, wobei dies deshalb störungsfrei geschehen kann, weil die ihm zugekehrt liegende Seite des Separatorstegs im Bereich des Haftbelags eine entsprechend eingetiefte Bahn (gestrichelt angedeutet) aufweist.

Sobald der Hebel die in Fig. 93 angedeutete Position erreicht hat, klemmt er das Blatt 188 gegen die Gehäusedeckwand; wie insbesondere in Fig. 94 erkennbar, ist nämlich der Mitnehmer nicht in der Lage, den gesamten Hub über das Blatt am Gehäuse festzuhalten, weil die Feder 500, auf die der Separatorsteg aufläuft, nach unten gedrückt wird, so daß das in Förderrichtung hintere Ende des Stapels lose wird. Auf der dem Stapel abgewandten Seite des Separatorsteges ist dieser noch mit Keilabschnitten 512 versehen, deren Neigung so bemessen ist, daß beim Wiedereinschub des Schiebers die Federenden der Feder 502 nach unten gedrückt werden und unter dem Separator hindurchgleiten können.

Ein weiteres Ausführungsbeispiel ist in Fig. 95 bis 97 gezeigt.

Fig. 95 ist ein Teillängsschnitt, Fig. 96 ist ein Horizontalschnitt und Fig. 97 ist ein Querschnitt durch die entsprechenden Ebenen der Vorrichtung.

Das erste Rahmenteil hat die Form eines Gehäuses 12, das zweite die Form eines Schiebers 14. Die Trenneinrichtung in Form des Separators 20 überspannt quer die Schieberholme 44. Im Ruhezustand, dargestellt in Fig. 97, drückt der Separator auf die Steuerflügel 268 zweier Hebel 270, die um parallel zur Auszugsrichtung sich erstreckende Achsen schwenkbar sind, die mit 272 bezeichnet sind. An dem den Flügeln 268 abgewandten Enden der Achsen befinden sich Arme 274, die aufeinander zu gerichtet sind. Die Hebel stehen unter Vorspannung durch eine Blattfeder 276 derart, daß die Arme 274 die Tendenz haben, in Richtung des eingelegten Blattstapels zu schwenken.

Wenn der Schieber eine Hublänge zurückgelegt hat, die ausreicht, das Einzelbild mittels des Mitnehmers (nicht gezeigt) unter dem Durchlaßspalt des Separators durchzuschieben, gibt der Separator die Flügel 268 allmählich frei, und die Arme 274 legen sich von unten an das nun unterste Blatt des Reststapels und hinter die Kante des im Gehäuse zurückgebliebenen Blattes, so daß dieses mit Sicherheit im Ghäuse zurückbleibt, während der Separator den Reststapel aus dem Gehäuse heraustransportiert. Die Vorspannung der die Arme 274 hebenden Feder kann so groß sein, daß deren freie Enden sich nicht nur an den Reststapel anlegen, sondern diesen noch ein Stück anheben: So kann das Einzelblatt nicht von den Armen abrutschen. — In der Endstellung des Schiebers kann der Separator gerade die Arme 274 gegen die Federkraft nach unten drücken, da er eine entsprechend abgeschrägte Form hat und als Keil wirkt. — Beim Rückhub kommt der Reststapel mit dem Separator und dem Schieber zurück und legt sich auf die Arme. Erst wenn der Separator auf die Flügel aufgleitet, werden die Arme wieder in die Ausgangsposition umgelegt.

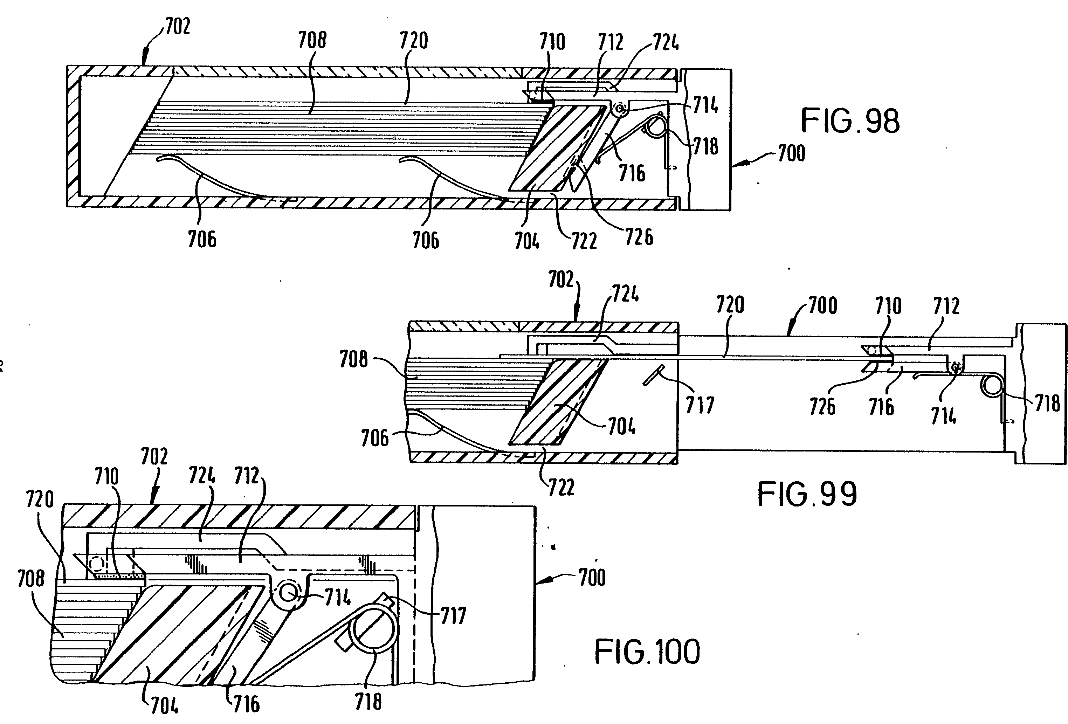

Fig. 98-100 zeigen in weitgehend schematisierter seitlich gesehener Schnittdarstellung ein weiteres Ausführungsbeispiel mit den Rahmenteilen in der zusammengeschobenen Ruheposition. Das erste Rahmenteil hat die Form eines Schiebers 14, der aus dem zweiten Rahmenteil in Form eines Gehäuses 12 herausziehbar ist. Im Gehäuse ist stationär die Trenneinrichtung in Form eines Separatorstegs 20 vorgesehen, und eine ebenfalls stationär im Gehäuse angeordnete Federanordnung 400 drückt den Stapel 182 nach oben. Die dem Separatorsteg nächstliegende Endfläche des obersten Blattes liegt unter einem Haftbelag 26, der auf einer ersten Zangenbacke 520 angeordnet ist. Diese Backe ist an dem Schieber elastisch nach oben auslenkbar angeformt. Sie trägt ferner ein Gelenk 504, an dem eine zweite Backe 506 angelenkt ist, die in der Ruheposition auf der dem Stapel abgewandten Seite des Separators, durch Auflaufen auf Kurve 522, entgegen der Vorspannung einer Feder 508, nach unten gedrückt worden ist.

Zieht man jetzt den Schieber aus dem Gehäuse heraus, so nimmt der Haftbelag das oberste Blatt 188 des Stapels, das von der Federanordnung 400 in Anlage an ihm gehalten wird, mit über den Separatorsteg. Zugleich kommt die zweite Backe 506 vom Steg 20 frei und schließt sich unter Wirkung der Vorspannfeder 508, bis das vom Haftbeleg mitgenommene Blatt zwischen den Zangenbacken fest eingeklemmt liegt. Beim Zurückschieben gelangt die dem Separator zugekehrte Kante des Blattes 188 vor den fußseitigen Durchlaß 310 der Trenneinrichtung, und die Zange schiebt es druch diesen Durchlaß, bis sie wieder vermittels Kurve 522 geöffnet wird. Damit der Haftbeleg nicht über die Oberseite des Separatorstegs schleift, wenn die erste Backe ihn überläuft, wird sie längs einer Steuernut 524 an ihm vorbeigeführt und springt dann wieder in Arbeitsposition.

Auch die zweite Backe kann mit einem Haftbelag 26 versehen sein, doch ist dann die ihr zugewandte Seite des Separatorstegs mit einer eingetieften Nut — gestrichelt angedeutet — zu versehen, damit auch dort kein unmittelbarer Kontakt des Haftbelages stattfinden kann.

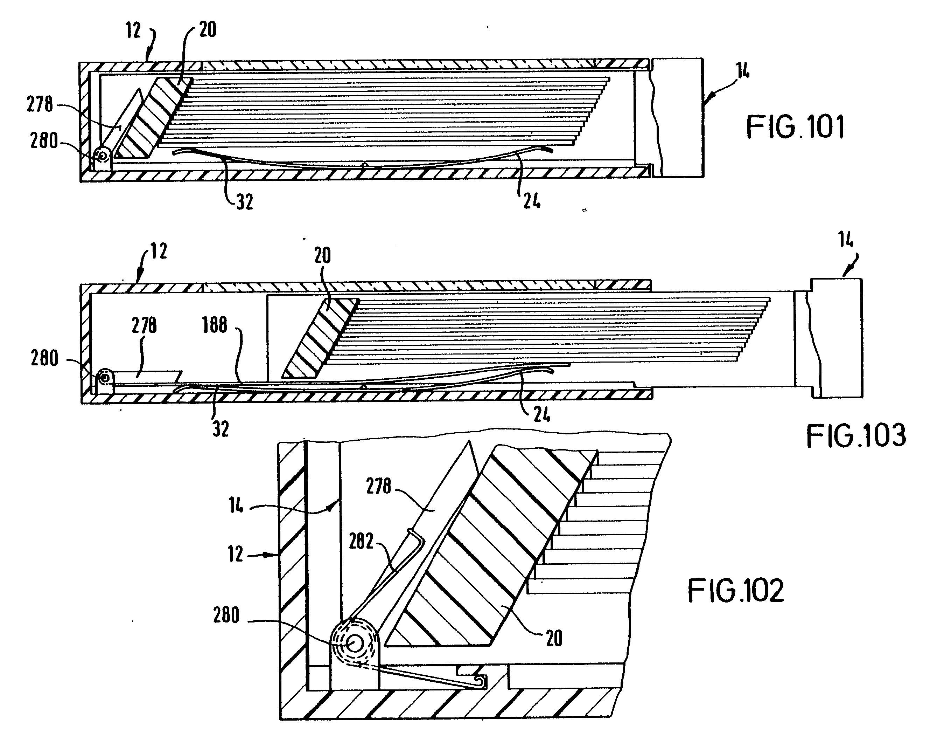

Fig. 101 und 103 zeigen im Längsschnitt den Ruhezustand bzw. den teilweise herausgezogenen Zustand einer Vorrichtung gemäß der Erfindung, bei der das erste Rahmenteil von einem Gehäuse 12 und das zweite von einem Schieber 14 gebildet sind. Man erkennt eine Federanordnung 24/32 und den Separatorsteg 20 als Trenneinrichtung.

Zu Beginn des Auszugshubes des Schiebers führt die Zufuhreinrichtung das im Gehäuse unterste Blatt 188 unter dem Separatorsteg durch, hinter dem eine schwenkbare Backe 278 um ein Gelenk 289 drehbar angeordnet ist. Eine Feder 282 spannt die Backe 278 in die in Fig. 103 gezeichnete Position vor, wie man der vergrößerten Darstellung nach Fig. 102 entnimmt. Der Separatorsteg hat die Backe bei eingeschobenem Schieber in die inaktive Position infolge Keilwirkung beim Auflaufen umgelegt. Die Freigabe der Backe kann automatisch beim Auszug erfolgen, doch ist dies nicht im einzelnen dargestellt.

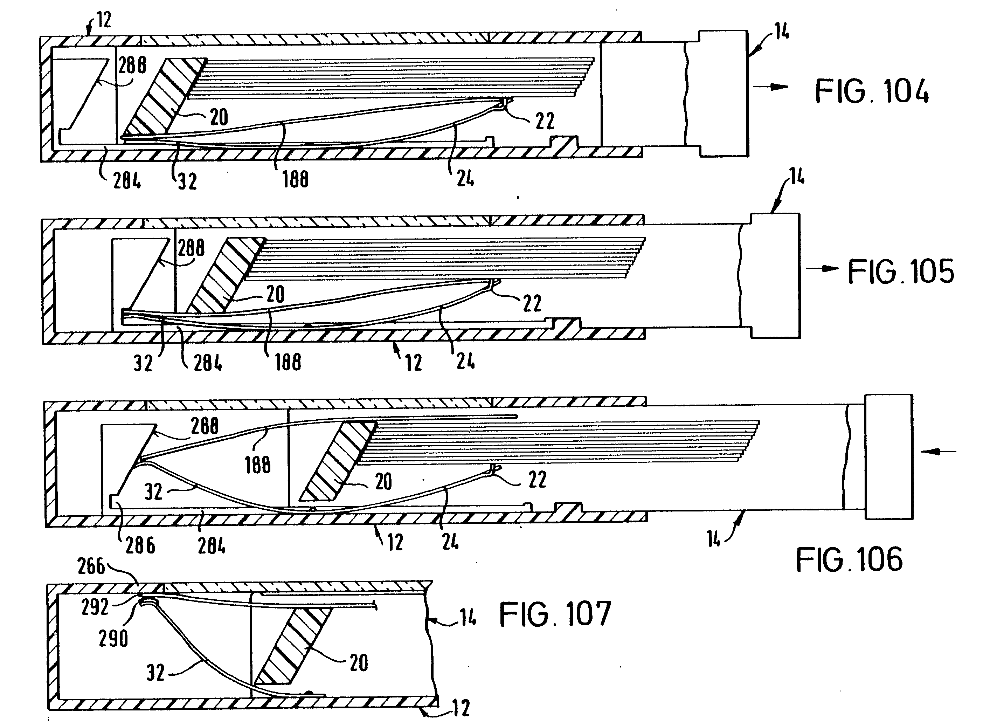

Fig. 104, 105 und 106 zeigen im schematisierten Längsschnitt drei Phasen des Auszugshubes bei einer weiteren Ausführungsform. Die Zufuhr des abzutrennenden Blattes erfolgt mittels des Mitnehmers, nämlich des Hakens 22, der an dem Federarm 24 sitzt. Gehäuse, Schieber und Separatorsteg entsprechen den vorher geschilderten Ausführungen. Der als zweites Rahmenteil dienende Schieber 14 koppelt sich nach einer gewissen Auszugslänge mit einem Bügel 284, der längsverschieblich in dem das erste Rahmenteil bildenden Gehäuse 12 angeordnet ist. An dem Bügel ist eine Einsenkung 286 unterhalb einer Leitfläche 288 angeformt.

Sobald der Mitnehmer, infolge eines ersten Hubes des Schiebers, die führende Kante des abzutrennenden Blattes 188 unter dem Separator 20 durchgeschoben hat, beginnt der Schieber auch, nun gekoppelt mit dem Bügel 284, diesen in Auszugsrichtung mitzunehmen, mit der Folge, daß diese Kante des abgetrennten Blattes in die Einsenkung 286 gelangt und dort von dem Arm 32 der Federanordnung festgeklemmt wird. Dieser Federarm bildet eine Backe einer Zangenanordnung, und die auf der anderen Seite der festgeklemmten Kante des Blattes befindliche Randfläche der Einsenkung bildet die andere Backe der Zangenanordnung. Dieser Zustand bleibt, bis die hintere Kante des abgetrennten Blattes vom Separator freikommt.

Schiebt man nun den Schieber wieder ein, so nimmt er den Bügel 284 wieder mit einwärts in das Gehäuse, wobei die Einsenkung vom abgezogenen Blatt freikommt, so daß der freie Arm 32 der Federanordnung die von ihm abgestützte Kante des Blattes längs der Leitfläche 288 ruckfrei nach oben gleiten läßt.

Fig. 107 zeigt weitgehend schematisiert im Teillängsschnitt eine Ausführungsform, bei der der am Schieber 14 angebrachte Separatorsteg 20 infolge Herausziehens des Schiebers aus dem Gehäuse 12 die an diesem angebrachte Blattfeder 32 allmählich freigibt, so daß sich deren freies Ende, versehen mit einem Haftbelag 290, an die Blattkante 292 anlegt und diese gegen die Gehäusedeckwand 266 anpreßt, welche dann die andere Backe im Zusammenwirken mit der von der Feder gebildeten ersten Backe bildet.

Die beschriebenen Zangenanordnungen sind nur einige von einer Vielzahl möglicher Ausführungsformen; so könnte man anstatt an der Führungskante des Blattes zu klemmen auch an einer oder beiden Seiten mit ähnlichen Zangen angreifen, oder man könnte nicht die Dicke, sondern die Breite des Blattes zwischen den Backen einspannen.

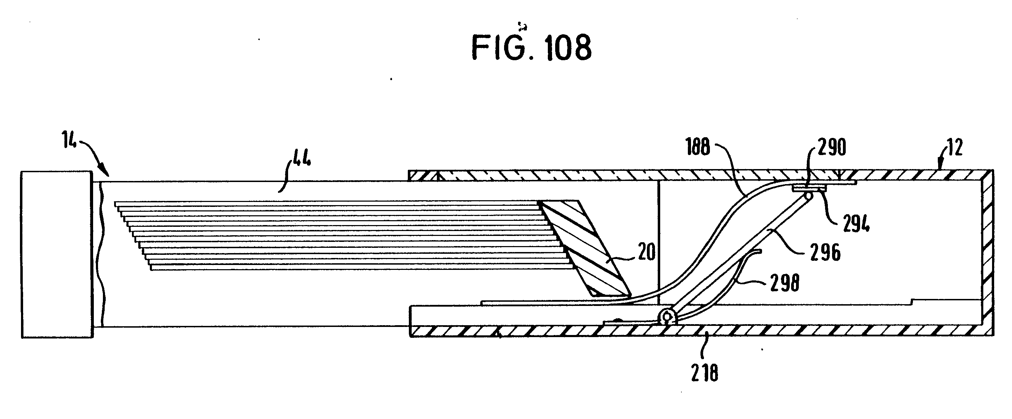

Fig. 108 stellt eine Abwandlung der Zangenanordnung nach Fig. 107 dar: Der Haftbelag 290 befindet sich auf einer Andruckanordnung, bestehend aus einer den Haftbelag tragenden Platte 294, die gelenkig am Ende eines Hebels 296 sitzt. Der Hebel ist an den Gehäuseboden 218 angelenkt. Eine Feder 298 drückt den Haftbelag an das vereinzelte Bild.

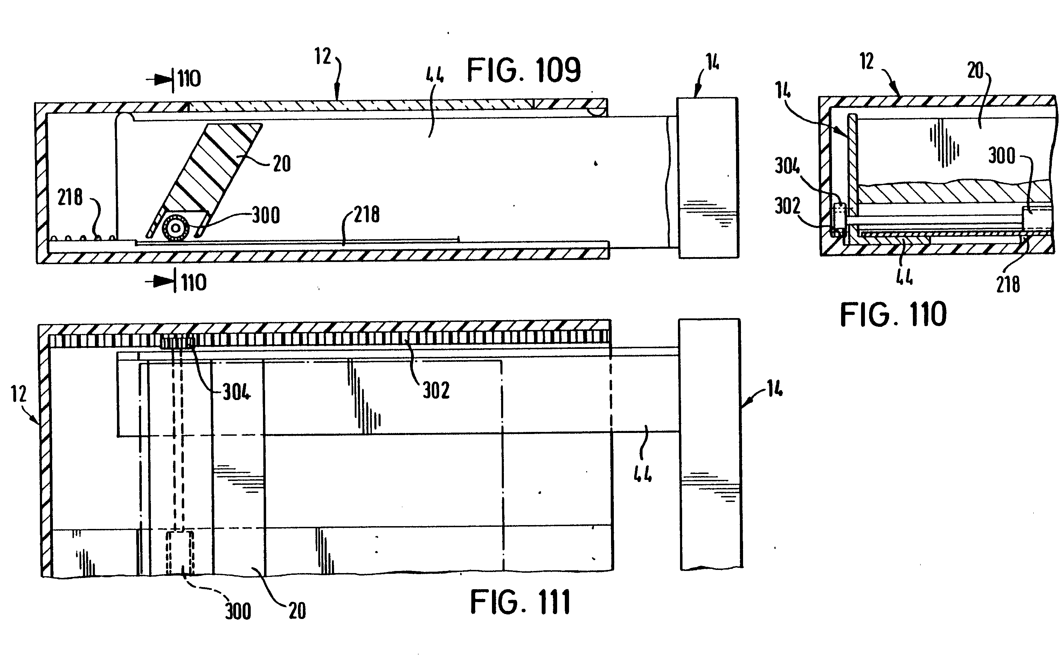

Fig. 109 bis 111 beziehen sich auf einen anderen Typ der Halteeinrichtung für das zu vereinzelnde Bild.

Fig. 109 zeigt in einem schematisierten Längs-

schnitt eine Vorrichtung gemäß der Erfindung, Fig. 110 ist ein Teilquerschnitt zu dieser Figur, und Fig. 111 zeigt einen Teilhorizontalschnitt.

Während in dem unter Fig. 1 bis 10 ausführlich beschriebenen vollständigen Ausführungsbeispiel die Halteeinrichtung ein erstes Klemmelement in Form einer mit dem Separatorsteg mitlaufenden Rolle, ein zweites Klemmelement in Form des stationär am ersten Rahmenteil (Gehäuse) befestigten Haftbelags und eine Federanordnung in Form der den Schuh gegen den Haftbelag drückenden Feder umfaßte, sind hier die Klemmelemente in kinematischer Umkehr so ausgebildet, daß der Haftbelag am Umfang einer Walze 300 vorgesehen ist, die über eine Zahnstange 302 und ein mit der Walze verkeiltes Ritzel 304 beim Auszug des Schiebers 14, der das zweite Rahmenteil bildet, zum Umlauf angetrieben ist. Die Walze hat einen Durchmesser gleich dem Teilkreis des Ritzels, so daß sie sich auf dem Einzelblatt mit einer Umfangsgeschwindigkeit abwälzt, die gleich der Auszugsgeschwindigkeit des Schiebers ist. Dabei wird das Einzelblatt an den Boden 218 des ersten Rahmenteils in Form des Gehäuses 12 gepreßt und in diesem festgehalten.

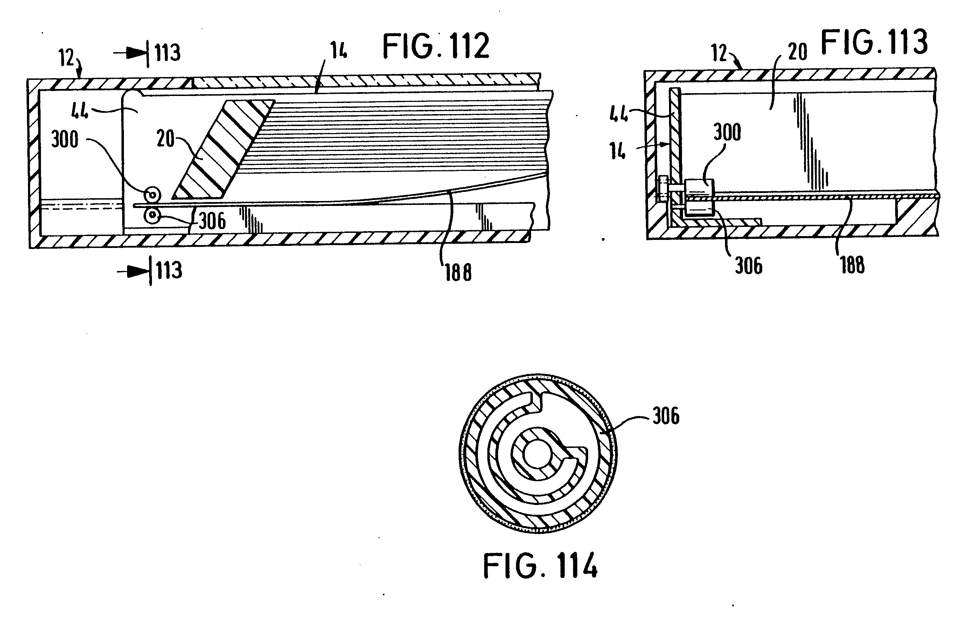

Die Vorrichtung nach Fig. 112 bis 114 zeigt eine weitere Ausführungsform der Halteeinrichtung gemäß der Erfindung. Das Einzelblatt 188 gelangt hinter dem Separatorsteg 20 in den Arbeitsspalt zwischen zwei Walzen 300, 306, von denen mindestens eine in derselben Art angetrieben ist wie bei Fig. 109 bis 111 beschrieben. Die andere Walze kann auch direkt von der ersten angetrieben sein, oder aber durch Reibung mitgenommen werden. Der Anpreßdruck wird dadurch erzeugt, daß eine der Walzen, vorzugsweise die nicht angetriebene, in sich federnd ausgebildet ist und ihre Welle etwas näher an die andere Walze herangerückt ist als dem Durchmesser eigentlich entsprechen würde. Der Querschnitt durch eine solche federnde Walze ist in Fig. 114 dargestellt, und man erkennt, daß Ausnehmungen in sich geschlossen sich mäanderförmig rings um die Nabe erstrecken, so daß immer genug Federweg zur Verfügung steht.

Demgemäß übernimmt hier die zweite Walze 306 die Rolle des in Fig. 1 bis 10 bzw. 13 bis 33 schienenförmig im ersten Rahmenteil angeordneten Klemmelements, wofür sie nicht an dem ersten, sondern an dem den Stapel haltenden zweiten Rahmenteil drehbar gelagert ist.

Fig. 115 zeigt eine im Gehäuse 12, das hier das zweite Rahmenteil ist, drehbar gelagerte Walze 300, die über eine in den Schieberholmen 44 angebrachte Zahnstange (nicht gezeigt) und ein mit der Walze verkeiltes Ritzel (nicht gezeigt) zu einer Umfangsgeschwindigkeit angetrieben wird, die gleich ist der Auszugsgeschwindigkeit des Schiebers. Auf diese Weise wird das vereinzelte Bild 188 hinter dem Separatorsteg 20 erfaßt, gegen die Gehäusedeckwand 266 gepreßt, an der es entlang schleift, und in der äußeren Schieberendlage freigegeben. — Es versteht sich, daß als Zufuhreinrichtung jeweils eine der in Fig. 1 bis 34 sowie 51 bis 91 dargestellten Anordnungen vorgesehen ist, ohne daß dies jedesmal mit gezeichnet wurde.

Die Fig. 116 bis 120 illustrieren die Maßnahmen, die getroffen werden können, um die Zufuhr auch dann sicherzustellen, wenn der Stapel Blätter mit erheblichen Abmessungsunterschieden in Richtung der Wechselbewegung enthält.

Fig. 116 zeigt im Längsschnitt die Situation nach einem Wechselzyklus. Ein am Schieber 14 vorgesehener Anschlag hat die dem Separator 20 abgewandten Kanten der Blätter ausgerichtet, so daß ihre unterschiedlich weit aus dem Stapel herausragenden Enden — bzw. in diesen zurückstehenden Endkanten — die in Fig. 116 angedeutete Konfiguration bilden. Der Fall, daß über einem kürzeren Blatt ein längeres Blatt liegt, ist in Fig. 117 noch einmal gesondert gezeichnet, und Fig. 118 stellt schematisch dar, was geschehen könnte, würde nicht für einen Ausgleich gesorgt: Das zweitunterste Blatt legt sich mit seiner frei vorstehenden Kante über die Endkante des untersten Blattes, und bei Auflaufen des Separatorsteges 20 wird die in Fig. 119 gezeigte Situation eintreten, bei der der Wechselvorgang gestört ist (« Doppelblattwechsel »). Um dies zu verhüten, sind Mittel vorgesehen, um zunächst einmal die Kanten der Blätter auf der dem Separatorsteg zugekehrten Seite des Stapels etwas auszurichten. Hierzu dient zunächst ein « Leerhub » des Separatorsteges 20, bis er die Stufe 68 überläuft. Während dieses Hubes erfolgt also noch keine Trennung. Gleichwohl werden die dem Separatorsteg abgewandten Endkanten der Blätter bereits auf diesem Leerhubweg von einer ersten Kontaktfläche 230 abgestützt. Blätter, die Übermaß haben, werden vom Separatorsteg zurückgedrückt und springen von der Kontaktfläche 230 ab; Blätter mit Untermaß bleiben noch auf der ersten Kontaktfläche. Die von dieser abgesprungenen Blätter werden jedoch von einer zweiten Kontaktfläche 22 aufgefangen, die in einem Abstand 232 hinter der ersten vorgesehen ist, der der höchstzulässigen Längendifferenz der Blätter entspricht. In Fig. 120 ist das kürzeste Blatt durch Pfeil 234, das längste durch Pfeil 236 symbolisiert. Wenn der Separatorsteg seinen Leerhub durchlaufen hat, sind also die kürzeren Blätter von der ersten, die längeren von der zweiten Kontaktfläche abgestützt, so daß sich im Bereich der dem Separatorsteg zugekehrten Blattkanten etwa die in Fig. 118 gezeichnete Situation ergibt. — Es genügt dabei, wenn der Längenausgleich nur ungefähr erfolgt, so daß die Blätter nicht mehr biegsam genug sind, um die Situation nach Fig. 119 eintreten zu lassen.

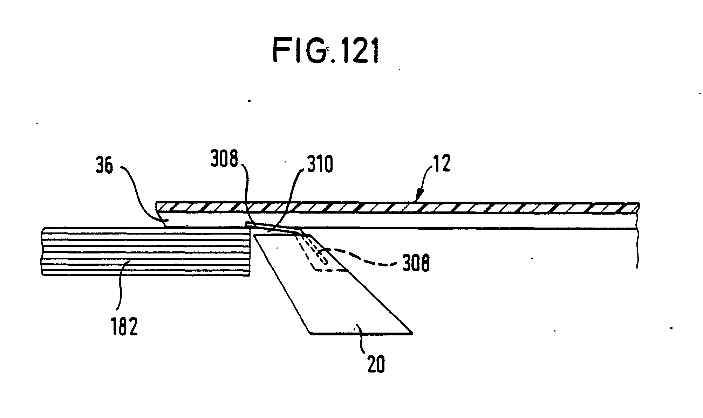

Ebenso, wie die Zufuhreinrichtung und die Halteeinrichtung in verschiedenster Weise ausgebildet sein können, um mit der Trenneinrichtung gemäß der Erfindung zusammenzuwirken, kann auch die Leiteinrichtung von der Ausführung gemäß Fig. 1 bis 10 bzw. 13 bis 33 abweichen. Dies wird nachstehend unter Bezugnahme auf Fig. 121 bis 137 verdeutlicht.

In den zuvor beschriebenen Ausführungsbeispielen wurde die Leiteinrichtung hinsichtlich ihrer verschiedenen Aspekte nur am Rande diskutiert. Gerade für Fotoabzüge jedoch bietet auch sie gewisse Komplikationen. Da das vereinzelte Blatt unter Umständen ziemlich stark gewölbt sein kann, erweist es sich als zweckmäßig oder sogar als unumgänglich, gewisse Vorsichtsmaßregeln bei der Auslegung der Leiteinrichtung zu beachten. So muß das vereinzelte Foto wieder durch einen Durchlaß der Trenneinrichtung auf die andere Stapelseite geführt werden, wenn auch dieser Durchlaß viel weniger kritisch ist als der Abtrenn-Durchlaß. — Im Prinzip sind alle Konstruktionen, die für die Zufuhr verwendbar sind, auch für die Rückführung des Einzelblattes anpaßbar. Im allgemeinen aber genügt es, das Foto von seiner hinteren Kante aus zu schieben, wobei es gegebenenfalls noch festgeklammert wird. Nachstehend werden einige Ausführungsformen kurz beschrieben.

Hinsichtlich des erwähnten Rücklauf-Durchlasses ist Vorsorge dafür zu treffen, daß der Reststapel diesen Durchlaß nicht versperrt; diese Gefahr besteht besonders bei Stapeln stark gewölbter Fotoabzüge. — Oben wurde unter Bezugnahme auf Fig. 1 bis 8 erläutert, daß man dafür am ersten Rahmenteil Niederhalte-Fortsätze anbringen kann. An deren Stelle kann man aber auch am ersten oder am zweiten Rahmenteil ein den Rückführ-Durchlaß durchgreifendes Element vorsehen, welches nach beendetem Wechselzyklus wieder zurückgezogen wird.

Ferner ist dafür zu sorgen, daß der Rückführdurchlaß bei Beginn des Wechselzyklus gesperrt ist, damit nich von beiden Seiten des Stapels je ein Blatt abgezogen wird. Oben wurde unter Bezugnahme auf Fig. 1 bis 8 erläutert, daß man dafür kammartig ineinandergreifende Fortsätze am Separatorsteg einerseits, am ersten Rahmenteil andererseits verwenden kann; an deren Stelle kann man aber auch zum Beispiel eine aus dem Separatorsteg ausfahrende gesteuerte Blockiereinrichtung vorsehen.

Fig. 121 zeigt im schematisierten Längsteilschnitt eine Bauart, die sowohl den Reststapel für den Einschub des vereinzelten Blattes niederhält als auch den Rückkehr-Durchlaß während des Wechselzyklusbeginns blokiert:

Im als Trenneinrichtung vorgesehenen Separatorsteg 20 ist eine dünne, elastische Lamelle 308 angeordnet, die zwischen Niederhalter 36 an einer Deckwand des ersten Rahmenteils greift. Das freie Ende der Lamelle drückt dabei auf das ihm zugekehrt liegende Blatt des Reststapels 182. Die Lamelle ist, um ein kurzes Wegstück in Rahmenbewegungsrichtung verlagerbar, im zweiten Rahmenteil abgestützt, so daß es zu Beginn des nächsten Wechselzyklus nach links (in Fig. 121) ausweichen kann, jedoch dabei den Durchlaß 310 immer noch blockiert, so daß das zuletzt rückgeführte Blatt von dem Niederhalter auf den Reststapel gedrückt wird, bevor die Lamelle wieder eingefahren wird.

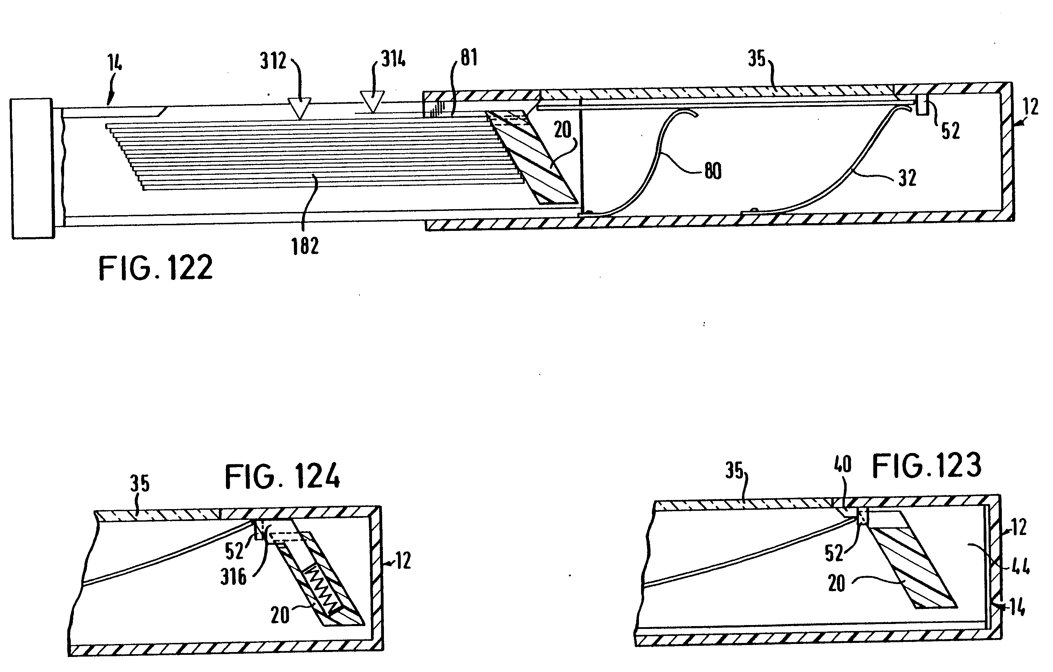

Fig. 122 zeigt im schematisierten Schnitt die bevorzugten Mittel: Feder 32 hält die hintere Blattkante vor dem Schiebeanschlag 52, Feder 80 unterstützt das Blatt etwa mittig, und hinter dem Separatorsteg 20 wird der Reststapel 182 auf einem Niveau gemäß Pfeil 312 gehalten, indem die Niederhalter 81 auf ihn einwirken. Der Pfeil 314 definiert das Niveau derjenigen Kante des Separatorsteges, die vom Einzelblatt überlaufen wird und die im kämmenden Eingriff mit den Niederhaltern steht.

Fig. 123 stellt in schematischer Teilseitenschnittansicht eine Konstruktion dar, mit der verhindert wird, daß bei der Abtrennphase des Wechselzyklus auf dem Durchlaß für die Blattrückführung fälschlicherweise auch ein Blatt in den Spalt gelangen kann. Dies erfordert hier die Rippen 40, welche kammartig in Ausnehmungen des Separatorsteges 20 greifen.

Alternativ sind in Fig. 124 aus dem Separatorsteg ausfahrende Sperrglieder 316 dargestellt, die den Durchlaß erst freigeben (entweder durch Federwirkung infolge Keilauflauf oder zwangsgesteuert), wenn in der Rückführphase eine Blattkante ansteht (« Rückschlagventilprinzip »).

Die folgenden Figuren beziehen sich auf Mittel zum Sicherstellen der Blattrückführung selbst. Wie erwähnt, wird vorzugsweise das Einzelblatt durch den Durchlaß geschoben, mit seiner hinteren Kante an einem Anschlag anliegend. Wenn das Blatt um einen Krümmungsradius gewölbt ist, der etwa senkrecht zur Bewegungsrichtung liegt, so besteht das Risiko, daß das Blatt nicht durch den Durchlaß geschoben, sondern zusammengestaucht wird und/oder von dem Anschlag abrutscht.

Im Prinzip sind also bei der Leiteinrichtung solche Mittel vorzusehen, die das Einzelblatt möglichst sicher vor dem « schiebenden » Anschlag halten, und/oder Mittel, die eine etwaige Wölbung des Fotos ausgleichen oder mildern.

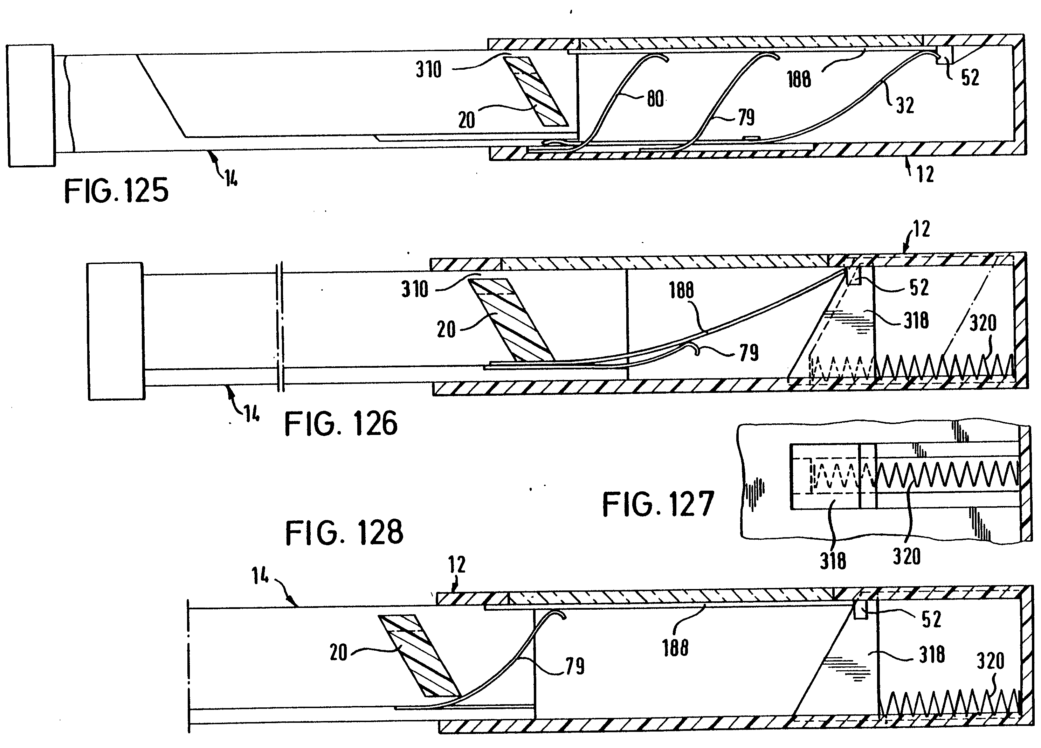

Fig. 125 zeigt im schematisierten Längsschnitt ganz prinzipiell diese Mittel: Eine erste Blattfeder 32 klemmt das Einzelblatt 188 vor dem « schiebenden » Anschlag 52, und weitere Blattfedern 79, 80 drücken das Blatt möglichst eben an die Deckwand des Gehäuses 12 (erstes Rahmenteil), um die führende Kante des Einzelblattes einigermaßen genau vor dem Durchlaß 310 zu präsentieren. Die Zuverlässigkeit wird umso besser sein, je länger die Blattfedern an dem Einzelblatt während des Blattrücklaufs angreifen, ehe diese Federn von dem Separatorsteg 20 der Trenneinrichtung überlaufen werden. Die dem Einzelblatt 188 zugekehrte Seite des Separatorsteges ist vorzugsweise derart abgeschrägt, daß eine vor ihm abwärts gewölbte führende Kante des Einzelblattes längs der Schräge « heraufklettern » kann infolge der Keilwirkung dieser Schräge. Wird jedoch diese Blattkante durch andere Mittel dem Rückführdurchlaß zwangsweise präsentiert, kann die entsprechende Fläche des Separatorsteges auch senkrecht zur Blattebene verlaufend ausgebildet sein.

Anstelle der Blattfeder 32 kann man andere Mittel verwenden, um die dem Separatorsteg abgewandte Kante des Einzelblattes an die andere Gehäusekante zu verlagern. Dies ist in Fig. 126 dargestellt: Ein Keil 318 ist von einer Feder 320 unter diese Kante des Blattes 188 geschoben worden und hat sie vor den schiebenden Anschlag 52 gehoben, und zwar noch während der ersten Hälfte des Wechselzyklus. Die andere Blattkante wird dann, nach Passieren des Separatorsteges 20, von einer Blattfeder 79 vor den Rückführdurchlaß 310 gehoben. Gegen Ende der zweiten Phase des Wechselzyklus schiebt dann der Separatorsteg den Keil 318 zurück. — Anstelle der Feder 320 könnte der Keil 318 auch durch eine Kopplung mit dem zweiten Rahmenteil, allerdings mit Phasenverschiebung, von diesem hin- und herverlagert werden. — Anstelle des verschieblichen Keils könnten auch ein- und ausschwenkbare schräge Keilflügel vorgesehen sein, ohne daß sich am Wirkprinzip etwas ändert. Fig. 127 zeigt schematisch die Draufsicht auf den Keil 318, und Fig. 128 stellt die Situation am Umkehrpunkt des Wechselzyklus dar.

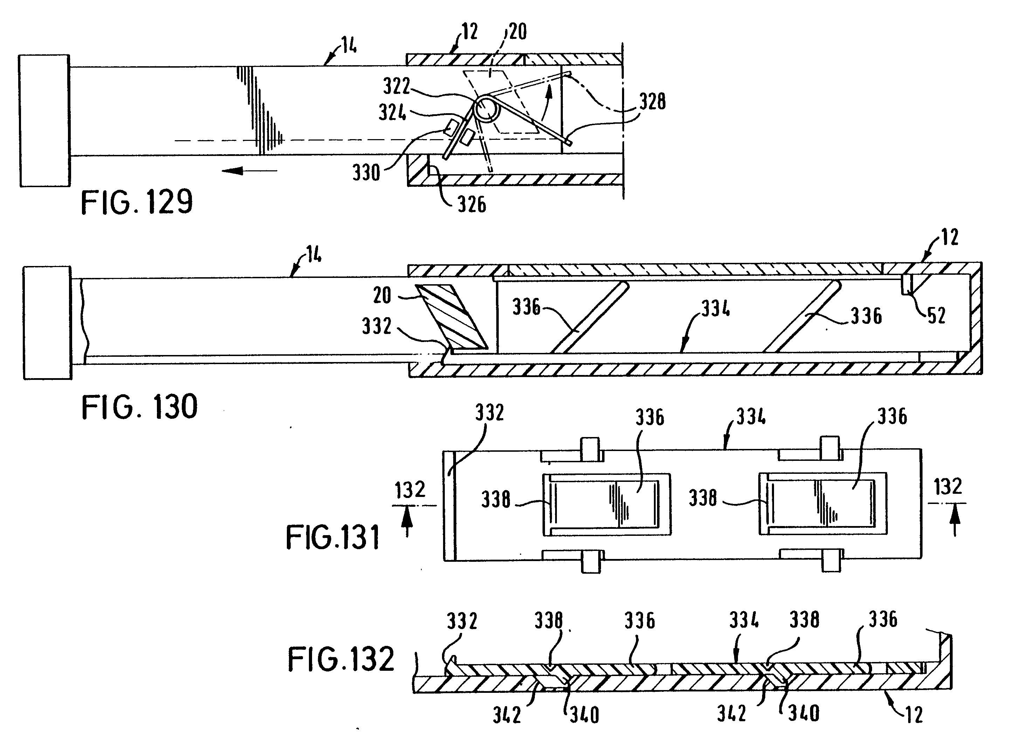

Fig. 129 zeigt in schematischer Seitenansicht einen Mechanismus, der anstelle der Hebefeder 79 verwendbar ist. Um einen Zapfen 322 ist eine Drahtfeder 324 mit ihrer Öse schwenkbar. Einer ihrer Arme ist abgewinkelt und greift von außen quer unter die betreffende Kante des Einzelblattes, der andere Arm ist durch Auflaufen auf einen Anschlag 326 umlegbar, nimmt dabei den abgewinkelten Arm 328 mit und bewirkt so das Heben der Blattkante. Eine Rasteinrichtung 330 ist angedeutet, um unkontrollierte Bewegungen des Mechanismus zu unterbinden; dieser soll ja nur in den beiden Endlagen (Ruheposition/Umkehrpunkt) umgesteuert werden.

Fig. 130 bis 132 zeigen eine Variante der Hebelanordnung als Leiteinrichtung. Der Separatorsteg 20 läuft kurz vor seiner Umkehrstellung auf einen Mitnehmerhaken 332 eines Hebelträgers 334 auf, an dem zwei Hebel 336 mittels angespritzter Gelenke 338 angelenkt sind. Durch die Verlagerung des Hebelträgers laufen die an der Unterseite der Hebel angeformten Nocken 340 auf Anschläge 342 einer Steuerkurve auf, so daß die Hebel hochgestellt werden. Beim Rücklauf trifft der Separatorsteg zuerst auf den ihm näheren Hebel und drückt dabei den gesamten Hebelträger um ein kleines Stück zurück, bis der Hebel umgelegt ist; der andere Hebel hingegen bleibt noch stehen, weil die Anschläge 342 für die beiden Hebel einen größeren Abstand voneinander haben als die zugehörigen Nocken.

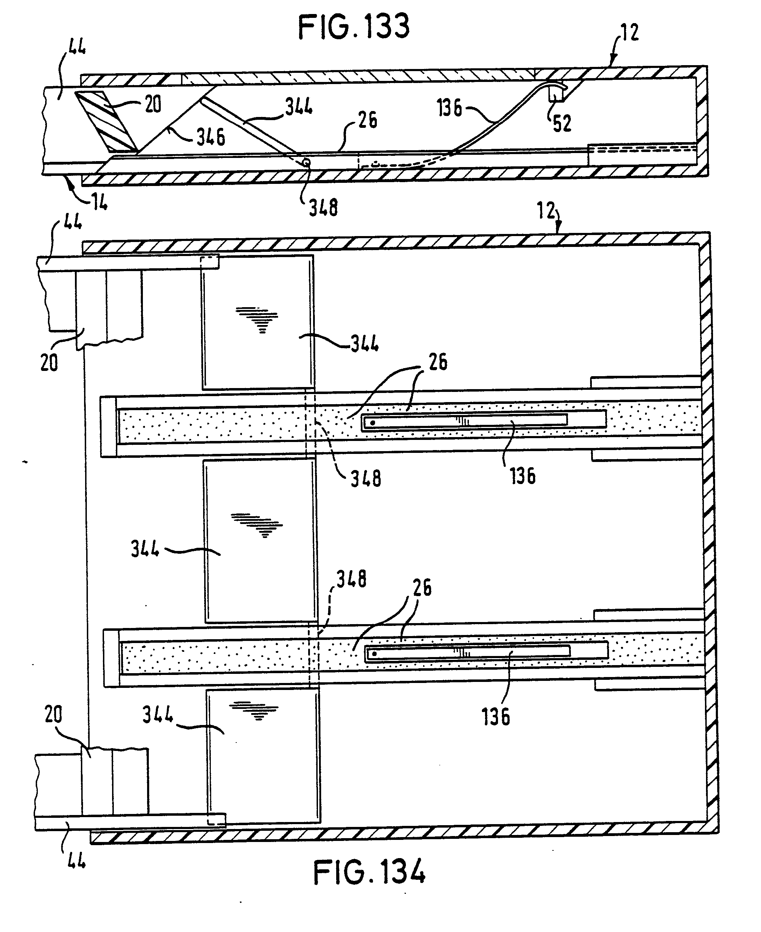

Die Ausführungsform nach Fig. 133 und 134 stellt eine Ausführungsform dar, bei der die Halteeinrichtung für das Einzelbild Haftbeläge 26 im ersten Rahmenteil umfaßt. Infolge statischer Aufladung kann, wie oben erwähnt, das Einzelblatt so fest an den Haftbelägen kleben, daß erhebliche Kräfte nötig sind, um es dort abzureißen. Es muß aber auf die den Haftbelägen abgewandte Seite des Rahmenteils geleitet werden. Daher sind Federn 136 mittig zwischen je zwei Haftbelägen vorgesehen. Die dem Separatorsteg 20 zugekehrte Kante des Einzelblattes wird von einem Hebel 344 geliftet, der mittels Steuerschrägen 346 an den Enden der Schieberholme 44 niedergedrückt werden, während er durch Federkraft (nicht dargestellt) gehoben wird. Der Hebel erstreckt sich, wie man in Fig. 134 sieht, über die gesamte Breite der Vorrichtung, und insbesondere greift er auch unmittelbar neben den Haftbelägen an dem Einzelblatt an. Die Welle des Hebels ist mit 348 angedeutet.

Fig. 135 bis 137 zeigen eine weitere Variante. An dem Separatorsteg 20 ist beidseits des Haftbelags 26 eine Lamelle 350 angeordnet, daß sie federnd in eine entsprechende Ausnehmung neben dem Haftbelag greift. Die beiden Lamellen sind durch eine Brücke 352 miteinander verbunden. Beim Durchlauf des Einzelblattes wird jede Lamelle federnd angehoben und schnappt nach Passieren der hinteren Blattkante wieder in die Ausnehmung zurück, so daß beim Rückhub die betreffende Blattkante vom Haftbelag abgerissen wird und die Kante längs des Separatorsteges hochsteigen muß, weil der Rückhub durch den anderen Durchlaß nun durch die Lamelle sicher versperrt ist.

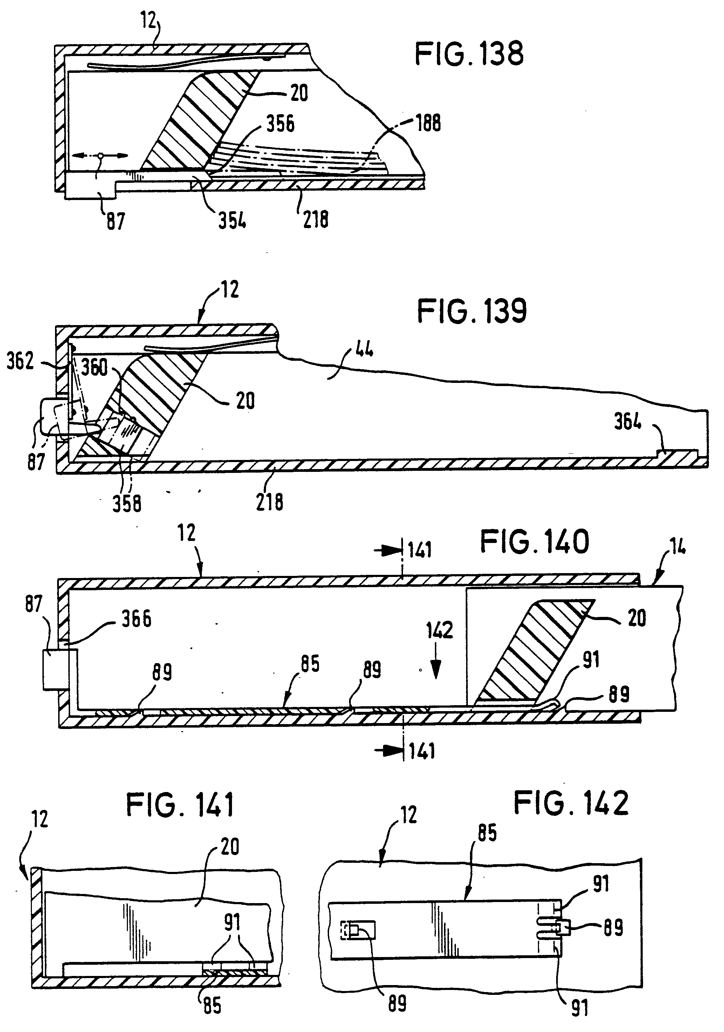

Schließlich sind in Fig. 1 bis 10 einerseits, Fig. 13 bis 34 andererseits jeweils Mittel dargestellt, um die Entnahme des gesamten Stapels aus der Vorrichtung zu ermöglichen. In Fig. 138 bis 144 sind Varianten und auch prinzipiell anders wirkende Mittel für diesen Zweck dargestellt, die nachstehend erläutert werden.

Fig. 138 zeigt im Teillängsschnitt eine Ausführungsform, bei der die Trenneinrichtung wahlweise durch manuellen Eingriff gesperrt werden kann. Es sei angenommen, daß eine Trenneinrichtung nach Fig. 35, 36 vorliegt, doch ist hier vom Schieber nur der Separatorsteg 20 gezeichnet. Die Stufe 354 ist nicht stationär, wie in Fig. 35 und 36, sondern in Schiebebewegungsrichtung verschieblich, wobei die Verschiebung von Hand mittels einer durch den Gehäuseboden 218 ragende Taste erfolgen kann. In der mit ausgezogenen Linien dargestellten Position entspricht dies der Fig. 35 (Normalbetrieb). Wird jedoch die Taste mit der Stufe nach rechts verlagert, so greift das keilartig ausgebildete Ende 356 unter die ihm zugekehrt liegende Kante des im Stapel untersten Blattes 188 und hebt diese auf die Stufe 354, so daß der Durchlaßspalt unter dem Separatorsteg « geschlossen » ist.

Die Stapelentnahmefunktion ist auch bei der Ausführungsform nach Fig. 139 (Teillängsschnitt) manuell steuerbar. Es sei angenommen, daß als Ausgangskonstruktion die nach Fig. 39 und 40 vorgesehen ist.

Der Separatorsteg 20 hat eine Durchbrechung, in der verschieblich ein Sperrklotz 358 angeordnet ist. In der mit ausgezogenen Linien dargestellten Position ist der Wechsler auf Wechselfunktion geschaltet, wobei der Klotz mittels Nocken 360 in einer entsprechenden Öffnung der Durchbrechung einrastet. Wird er durch Druck auf einen Knopf 87, der federnd an einer angeformten Feder 362 sitzt und mit dem Gehäuse 12 verbunden ist, in die mit gestrichelten Linien dargestellte Sperrposition verlagert, in welcher er ebenfalls mittels Nocken 360 verrastbar ist, so wird der Durchtrittsspalt blockiert, und alle Blätter des Stapels werden heraustransportiert. Läuft dann der Sperrklotz auf einen an den Gehäuseboden 218 angeformten Anschlag 364 auf, wird er wieder in seine Ruheposition zurückgeschoben, und der Wechsler ist wieder auf Funktion « Wechseln » geschaltet.

Auch bei der Fig. 140 (Teillängsschnitt), Fig. 141 (Teilquerschnitt) und Fig. 142 (Teildraufsicht) ist eine manuelle Umschaltbarkeit zwischen « Wechseln » und « Stapelentnahme » vorgesehen. Im Gehäuse 12 ist ein einstückiges Bauteil 85 in Längsrichtung verlagerbar durch Druck auf die Taste 87, wobei die mit der Taste verbundene Schiene auf Rampen 89 aufläuft und dabei das gesamte Bauteil 85 hebt ; hierfür ist im Gehäuse ein Freiraum 366 für die Taste vorgesehen. Durch Heben der Schiene legt sich diese von unten an die den Durchlaßspalt begrenzende Kante des Separatorsteges 20 an. Von diesem Ende der Schiene stehen noch Nasen 91 nach oben, die — wenn der Separatorsteg unter Mitnahme des Gesamtstapels die Nasen überläuft — nach unten ausfedern können. Wird der Separator wieder zurückgeschoben, trifft er auf die Nasen und verlagert damit das gesamte Bauteil 85 in seine Ausgangsstellung, womit auch die Bahn für den Separator wieder freigegeben ist, der Spalt für die Abtrennung des Blattes wieder offen ist und somit der. Wechsler wieder in der « Wechselfunktions »-Stellung ist.

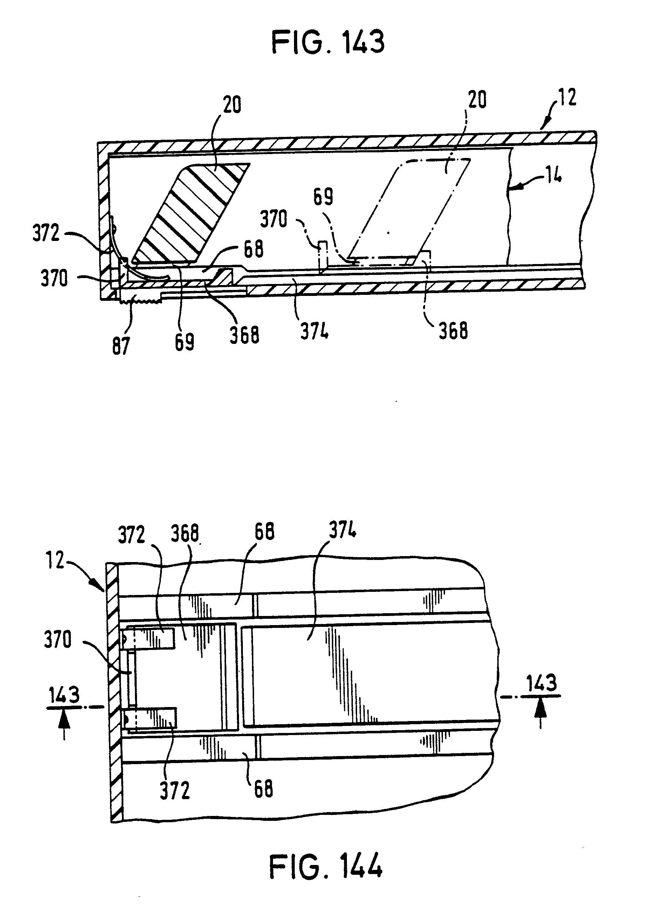

Fig. 143 und 144 zeigen im Teillängsschnitt bzw. in Teildraufsicht eine weitere Ausführungsform eines für die Stapelentnahme umschaltbaren Trennsystems. Es sei angenommen, daß im Prinzip die Bauart nach Fig. 37, 38 vorliegt. — Die in Fig. 35 mit 68 bezeichnete Stufe, die ja auch in Fig. 37 vorhanden ist, ist sehr schmal und dafür doppelt ausgeführt. Das den Durchtrittsspalt begrenzende Teil 69, das federnd im Separatorsteg 20 angeordnet ist, hat eine Aussparung gegenüber der Lücke zwischen den beiden Stufen 68. — An den Gehäuseboden 218 ist eine eindrückbare, zuruckfedernde Taste 87 angeformt, die einen Blockierschuh 368 anhebt, der mit einem frontseitigen Fortsatz den Durchtrittsspalt sperrt, indem er sich vor die Unterkante des Separatorsteges legt, und mit einem rückseitigen Fortsatz 370 hinter den Separatorsteg greift. Beidseits dieses letztgenannten Fortsatzes drücken Blattfederchen 372 den Blockierschuh in Richtung Gehäuseboden. — Wird auf die Taste 87 gedrückt und der Blokkierschuh in Mitnahmeverbindung mit dem Separatorsteg gebracht, wobei die Trennfunktion blockiert ist, und nun am Schieber gezogen, so wird der Blockierschuh einfach mitgenommen. Beim Wiedereinschub drücken die Federchen 372 den Schuh dann wieder in die Freigabeposition, die muldenförmig eingetieft hinter der Auflauframpe 374 vorgesehen ist.

Bei den insoweit behandelten Ausführungsformen muß der Benutzer eingreifen, um die Entnahme vornehmen zu können. Bei der folgenden Ausführungsform ist die Anordnung so getroffen, daß der aus dem Gehäuse herausziehbare Schieber das zweite Rahmenteil ist und daher den Reststapel mit herausbringt. Im Gehäuse bleibt nur ein einziges Blatt zurück. Nimmt nun der Benutzer den Reststapel, der ihm ja frei zugänglich ist, heraus und schiebt den Schieber wieder ein, so kann er erneut den Schieber ziehen, der dann das im Gehäuse verbliebene Blatt mitbringt. Mit anderen Worten ist der Wechselmechanismus erst dann funktionsfähig, wenn die Vorrichtung mindestens zwei Blätter enthält.

## Patentansprüche

1. Vorrichtung zum zyklischen Umschichten eines Stapels rechteckiger oder quadratischer Blätter, insbesondere eines Stapels von Fotoabzügen, mit einem ersten (12) und einem zweiten (14) Rahmenteil, die relativ zueinander und parallel zur Stapelhauptebene bewegbar sind, und mit Mitteln, die bei einer Hinundherbewegung der Rahmenteile ein Einzelblatt an einer Stapelseite abnehmenund an der andern Stapelseite wieder zufügen, welche Mittel umfassen :

(a) eine Trenneinrichtung (20, 68, 69, 28, 71) zum Abtrennen des Einzelblattes (188) vom Stapel (182),

(b) eine Zufuhreinrichtung (22) zum Zuführen von Blättern zu der Trenneinrichtung,

(c) Halteeinrichtungen (32, 80) zum Halten des Einzelblattes in dem ersten Rahmenteil (12) und des Reststapels in dem zweiten Rahmenteil (14), und

(d) eine Leiteinrichtung (79) zum Führen des abgetrennten Einzelblattes zwecks Rückführung auf die andere Seite des Reststapels, wobei die Trenneinrichtung umfaßt :

einen Separator (20, 69, 242, 250, 254) im zweiten Rahmenteil (14), der von einer Endkante begrenzte Flächenabschnitte (386) für das Halten des Reststapels aufweist, und

einen an einem der Rahmenteile vorgesehenen Träger (26, 218, 238, 256, 264, 266), der das Einzelblatt positioniert, dadurch gekennzeichnet, daß zur Bildung eines Durchlaßspalts für das Einzelblatt Distanzelemente (68, 246, 262) vorgesehen sind, die die Separatorendkante (254) und den Träger in einem festen Abstand auseinanderhalten, der größer ist als die Dicke eines Blattes und kleiner als die Dicke von zwei Blättern.

2. Vorrichtung nach Anspruch 1, dadurch gekennzeichnet, daß der Träger (44) am zweiten Rahmenteil (14) ausgebildet ist.

3. Vorrichtung nach Anspruch 2, dadurch gekennzeichnet, daß der Träger (44) mit dem Einzelblatt nur an Teilen von dessen Fläche in Wirkverbindung steht.

4. Vorrichtung nach Anspruch 3, dadurch gekennzeichnet, daß die Teile symmetrisch bezüglich einer sich in Rahmenteil-Bewegungsrichtung erstreckenden Mittelebene liegen.

5. Vorrichtung nach einem der Ansprüche 2 bis 4, dadurch gekennzeichnet, daß das zweite Rahmenteil (14) sich in Rahmenteil-Bewegungsrichtung erstreckende Längsholme (44) aufweist, die als Träger dienen.

6. Vorrichtung nach Anspruch 1, dadurch gekennzeichnet, daß der Träger (134, 26) am ersten Rahmenteil ausgebildet ist.

7. Vorrichtung nach Anspruch 6, dadurch gekennzeichnet, daß der Träger (134, 26) mit dem Einzelblatt nur an Teilen von dessen Fläche in Wirkverbindung steht.

8. Vorrichtung nach Anspruch 7, dadurch gekennzeichnet, daß die Teile symmetrisch bezüglich einer sich in Rahmenteil-Bewegungsrichtung erstreckenden Mittelebene liegen.

9. Vorrichtung nach einem der Ansprüche 6 bis 8, dadurch gekennzeichnet, daß der Träger an einem Boden (63) des ersten Rahmenteils angeordnet ist.

10. Vorrichtung nach einem der Ansprüche 6 bis 9, dadurch gekennzeichnet, daß der Träger (134, 26) mit Abschnitten der dem Stapel abgekehrten Seite des Einzelblattes in Kontakt ist.

11. Vorrichtung nach einem der Ansprüche 6 bis 10, dadurch gekennzeichnet, daß der Träger (134, 26) mit der Einzelblattseite längs Streifen in Kontakt ist, die sich in Richtung der Rahmenteilbewegung erstrecken.

12. Vorrichtung nach einem der Ansprüche 6 bis 11, dadurch gekennzeichnet, daß der Träger von Schienen (134) gebildet ist, die als separate Bauteile in das erste Rahmenteil (12) eingesetzt sind.

13. Vorrichtung nach einem der vorangehenden Ansprüche, dadurch gekennzeichnet, daß die Separator-Endkante und der Träger relativ zueinander verlagerbar sind.

14. Vorrichtung nach Anspruch 13, dadurch gekennzeichnet, daß die Verlagerungsrichtung eine Komponente aufweist, die senkrecht zur Rahmenteil-Bewegungsrichtung ist.

15. Vorrichtung nach Anspruch 14, dadurch gekennzeichnet, daß das zweite Rahmenteil (14 in Fig. 35) im ersten verlagerbar ist.

16. Vorrichtung nach Anspruch 14, dadurch gekennzeichnet, daß der Separator (20 in Fig. 43) im zweiten Rahmenteil verlagerbar ist.

17. Vorrichtung nach Anspruch 14, dadurch gekennzeichnet, daß mindestens ein die Endkante aufweisendes Bauteil (69) am Separator (20) verlagerbar angeordnet ist.

18. Vorrichtung nach Anspruch 14, dadurch gekennzeichnet, daß der Separator (250) elastisch deformierbar ist.

19. Vorrichtung nach einem der Ansprüche 13 bis 18, dadurch gekennzeichnet, daß die Verlagerung längs einer Geraden erfolgt.

20. Vorrichtung nach einem der Ansprüche 13 bis 18, dadurch gekennzeichnet, daß die Verlagerung eine Verdrehung umfaßt.

21. Vorrichtung nach einem der Ansprüche 13 bis 20, dadurch gekennzeichnet, daß die Separator-Endkante und der Träger gegeneinander federvorgespannt sind.

22. Vorrichtung nach Anspruch 15 und 21, dadurch gekennzeichnet, daß das zweite Rahmenteil sich über Blattfedern (240) am ersten Rahmenteil abstützt.

23. Vorrichtung nach Anspruch 17 und 21, dadurch gekennzeichnet, daß das Bauteil (69) mittels Drahtfeder (71) am Separator abgestützt ist.

24. Vorrichtung nach Anspruch 17 und 21, dadurch gekennzeichnet, daß das Bauteil (242) mittels Druckschraubenfeder (71 in Fig. 37) am Separator abgestützt ist.

25. Vorrichtung nach einem der Ansprüche 21 bis 24, dadurch gekennzeichnet, daß die Vorspannfeder (71) eine Kraft ausübt, die größer ist als die Reaktionskraft, die auf die Flächenabschnitte von dem Reststapel ausgeübt wird.

26. Vorrichtung nach einem der vorangehenden Ansprüche, dadurch gekennzeichnet, daß die Distanzelemente (68, 246, 262) nahe dem Durchlaßspalt angeordnet sind.

27. Vorrichtung nach Anspruch 2 oder 6, dadurch gekennzeichnet, daß die Distanzelemente (246, 262) im zweiten Rahmenteil angeordnet sind.

28. Vorrichtung nach Anspruch 27, dadurch gekennzeichnet, daß die Distanzelemente (246) seitlich neben dem Einzelblatt, gesehen in Rahmenteil-Bewegungsrichtung, angeordnet sind.

29. Vorrichtung nach Anspruch 6, dadurch gekennzeichnet, daß die Distanzelemente (68) am ersten Rahmenteil angeordnet sind.

30. Vorrichtung nach Anspruch 6, dadurch gekennzeichnet, daß beide Rahmenteile (12, 14) Distanzelemente aufweisen.

31. Vorrichtung nach Anspruch 6, dadurch gekennzeichnet, daß die Distanzelemente (68) vor einer Endkante des Einzelblatts, die zuerst von der Separator-Endkante überlaufen wird, angeordnet sind.

32. Vorrichtung nach Anspruch 31, dadurch gekennzeichnet, daß der Träger (134, 26) und die Distanzelemente (68) durch eine Stufe gegeneinander abgesetzt sind.

33. Vorrichtung nach Anspruch 32, dadurch gekennzeichnet, daß die Distanzelemente (68), von der Stufe ausgehend, parallel zu dem Träger verlängert sind.

34. Vorrichtung nach Anspruch 32, dadurch gekennzeichnet, daß bei zusammengeschobenen Rahmenteilen die Separator-Endkante auf der Verlängerung der Distanzelemente aufsitzt.

35. Vorrichtung nach einem der Ansprüche 32 bis 34, dadurch gekennzeichnet, daß die Stufe eine Auflaufschräge (140) aufweist.

36. Vorrichtung nach Anspruch 33 oder 34, dadurch gekennzeichnet, daß die Verlängerung eine abfallende Rampe umfaßt.

37. Vorrichtung nach einem der Ansprüche 31 bis 36, dadurch gekennzeichnet, daß die Distanzelemente auf getrennt gefertigten, im ersten Rahmenteil montierten Schienen (134) ausgebildet sind.

38. Vorrichtung nach Vorrichtung nach Anspruch 32, dadurch gekennzeichnet, daß die Zufuhreinrichtung einen Mitnehmer (22) umfaßt, der im ersten Rahmenteil (12) angeordnet ist und von der Stufe einen Abstand aufweist, der größer ist als die nominelle Abmessung der Blätter in Richtung der Rahmenteilbewegung.

39. Vorrichtung nach Anspruch 1, dadurch gekennzeichnet, daß der Separator (20) eine quer zur Rahmenteil-Bewegungsrichtung verlaufende Endwandung des zweiten Rahmenteils (14) ist.

40. Vorrichtung nach Anspruch 39, gekennzeichnet durch Mittel am Separator (20) zum Zufördern von Blättern zu dem Durchlaßspalt beim Auseinanderziehen der Rahmenteile.

41. Vorrichtung nach Anspruch 40, dadurch gekennzeichnet, daß die Mittel von den Reststapel haltenden Flächenabschnitten (386) gebildet sind, die derart schräg verlaufen, daß sie auf an ihnen anliegende Querkanten der Blätter eine Kraft in Richtung auf den Durchlaßspalt ausüben.

42. Vorrichtung nach Anspruch 41, dadurch gekennzeichnet, daß die genannten Flächenabschnitte mit dem abzutrennenden Blatt einen spitzen Winkel einschließen.

43. Vorrichtung nach Anspruch 41 oder 42, dadurch gekennzeichnet, daß die genannten Flächenabschnitte unterschiedliche Winkel definieren.

44. Vorrichtung nach einem der Ansprüche 41 bis 43, dadurch gekennzeichnet, daß die genannten Flächenabschnitte in eine Mehrzahl von Teilabschnitten aufgeteilt sind, die zueinander in Richtung der Rahmenteilbewegung versetzt sind.

45. Vorrichtung nach Anspruch 44, dadurch gekennzeichnet, daß zwei Teilabschnitte durch eine parallel zum Einzelblatt verlaufende Teilfläche voneinander getrennt sind.

46. Vorrichtung nach Anspruch 1 oder 39, dadurch gekennzeichnet, daß die den Reststapel haltenden Flächenabschnitte mindestens teilweise senkrecht (470 in Fig. 84) zu der Rahmenteil-Bewegungsrichtung verlaufen.

47. Vorrichtung nach Anspruch 1 oder 39, dadurch gekennzeichnet, daß die Separator-Endkante nur an einzelnen Stellen der Gesamterstreckung des Separators (20) ausgebildet ist.

48. Vorrichtung nach Anspruch 47, dadurch gekennzeichnet, daß Separator-Endkantenabschnitte (69) symmetrisch bezüglich einer sich in Rahmenteil-Bewegungsrichtung erstreckenden Mittelebene vorgesehen sind.

49. Vorrichtung nach Anspruch 1 oder 39, dadurch gekennzeichnet, daß die Separator-Endkante von der Schnittlinie zwischen einem den Reststapel haltenden Flächenabschnitt und einer im wesentlichen parallel zu dem abzutrennenden Einzelblatt verlaufenden Fläche definiert ist.

50. Vorrichtung nach Anspruch 49, dadurch gekennzeichnet, daß die parallel zum Einzelblatt verlaufende Fläche an ihrem der Schnittlinie abgekehrten Ende in eine Auflauframpe übergeht.

51. Vorrichtung nach Anspruch 35 und 50, dadurch gekennzeichnet, daß die Rampe auf die Auflaufschräge (140) auflaufend angeordnet ist.

52. Vorrichtung nach Anspruch 1 oder 39, dadurch gekennzeichnet, daß der Separator aus einer Mehrzahl von Einzelteilen (20, 69, 71) besteht.

53. Vorrichtung nach Anspruch 52, dadurch gekennzeichnet, daß die Einzelteile des Separators relativ zueinander verlagerbar sind.

54. Vorrichtung nach Anspruch 53, dadurch gekennzeichnet, daß ein Separatorsteg Geradführungen für mindestens einen, die Separator-Endkante aufweisenden Schuh (69) aufweist.

55. Vorrichtung nach Anspruch 41 und 54, dadurch gekennzeichnet, daß die Geradführung im wesentlichen parallel zu den schrägen Flächenabschnitten verläuft.

56. Vorrichtung nach Anspruch 54 oder 55, dadurch gekennzeichnet, daß der Schuh (69) zwischen definierten Endlagen verlagerbar ist.

57. Vorrichtung nach Anspruch 53, dadurch gekennzeichnet, daß die Einzelteile (20, 69) zueinander schwenkbeweglich sind.

58. Vorrichtung nach Anspruch 53, dadurch gekennzeichnet, daß eines der Einzelteile (69) sich am andern (20) über eine Vorspannfeder (71) abstützt.

59. Vorrichtung nach einem der Ansprüche 52 bis 58, dadurch gekennzeichnet, daß mehrere Einzelteile mit den Reststapel haltenden Flächenabschnitten versehen sind.

60. Vorrichtung nach einem der vorangehenden Ansprüche, dadurch gekennzeichnet, daß der Abstand zwischen Separator-Endkante und Träger (134, 26) über im wesentlichen den gesamten Hub der Auseinanderbewegung der Rahmenteile (12, 14) gleich gehalten ist.

61. Vorrichtung nach einem der Ansprüche 1 bis 59, dadurch gekennzeichnet, daß der Abstand zwischen Separator-Endkante und Träger auf die Dicke eines Einzelblattes (188) vermindert wird, wenn die Separator-Endkante die führende Querkante des Einzelblattes passiert hat.

62. Vorrichtung nach einem der Ansprüche 1 bis 59, dadurch gekennzeichnet, daß der Abstand zwischen Separator-Endkante und Träger (134, 26) um ein vorgegebenes Maß verringert wird, wenn die Separator-Endkante die führende Querkante des Einzelblattes passiert hat.

63. Vorrichtung nach Anspruch 1, dadurch gekennzeichnet, daß die Einzelblatt-Halteeinrichtung mindestens einen parallel zur Rahmenteil-Bewegungsrichtung verlaufenden Haftstreifen (26) umfaßt, gegen den das Einzelblatt mittels im zweiten Rahmenteil (14) angeordneter Rollen (28) anpreßbar ist.

64. Vorrichtung nach Anspruch 63, dadurch gekennzeichnet, daß der Haftbelagstreifen (26) zugleich Teil des Trägers (134, 26) ist.

65. Vorrichtung nach Anspruch 63 oder 64, dadurch gekennzeichnet, daß die Rollen (28) am Separator angeordnet sind.

66. Vorrichtung nach Anspruch 65, dadurch gekennzeichnet, daß jede Rolle in einem die Separator-Endkante aufweisenden Schuh (69) gelagert ist.

67. Vorrichtung nach Anspruch 66, dadurch gekennzeichnet, daß die Rolle um weniger als die Dicke eines Blattes über die Endkante hinaus aus dem Schuh (69) ragt.

68. Vorrichtung nach Anspruch 67 und 34, dadurch gekennzeichnet, daß die Verlängerung der Distanzelemente eine Ausnehmung für die

Rolle aufweist.

69. Vorrichtung nach einem der Ansprüche 63 bis 68, dadurch gekennzeichnet, daß die Rolle (28) gegen das Einzelblatt (188) federvorgespannt ist.

70. Vorrichtung nach Anspruch 69 und 21, dadurch gekennzeichnet, daß einunddieselbe Feder für die Vorspannung der Endkante und der Rolle (28) vorgesehen ist.

71. Vorrichtung nach einem der Ansprüche 63 bis 70, dadurch gekennzeichnet, daß die Rolle (28) gegenüber der Separator-Endkante um ein vorgegebenes Maß entgegen der Auszugsrichtung des zweiten Rahmenteils (14) versetzt angeordnet ist.

72. Vorrichtung nach einem der Ansprüche 63 bis 71, gekennzeichnet durch ein Paar von Rollen (28) und Haftstreifen (26).

73. Vorrichtung nach einem der Ansprüche 63 bis 72, dadurch gekennzeichnet, daß die Streifen-Rollen-Anordnungen symmetrisch bezüglich einer zur Rahmenteil-Bewegungsrichtung parallelen Mittelebene der Vorrichtung positioniert sind.

74. Vorrichtung nach einem der Ansprüche 63 bis 73, dadurch gekennzeichnet, daß die Rollen bezüglich der Separator-Endkante in Richtung quer zur Rahmenteil-Bewegungsrichtung versetzt sind.

75. Vorrichtung nach Anspruch 69, dadurch gekennzeichnet, daß die Rolle (28) bei zusammengeschobenen Rahmenteilen (12, 14) von der Federvorspannung entlastet ist.

76. Vorrichtung nach Anspruch 1, dadurch gekennzeichnet, daß erst nach einem vorbestimmten Teilhub der Auseinanderbewegung der Rahmenteile (12, 14) ein Durchlaßspalt für das Einzelblatt (188) gebildet wird.

77. Vorrichtung nach Anspruch 76 und 32, dadurch gekennzeichnet, daß der Spalt durch Überlaufen der Stufe durch die Separator-Endkante gebildet wird.

78. Vorrichtung nach Anspruch 76 oder 77, dadurch gekennzeichnet, daß der Teilhub der Projektion der den Reststapel haltenden Flächenabschnitte auf die Ebene des Einzelblattes entspricht.

79. Vorrichtung nach Anspruch 1 oder einem der Ansprüche 76 bis 78, gekennzeichnet durch Mittel zum Sperren des Eintritts des Einzelblattes (188) in den Durchlaßspalt, bevor die Separator-Endkante mit dem Träger in Ausfluchtung gelangt ist.

80. Vorrichtung nach Anspruch 79, dadurch gekennzeichnet, daß die Sperrmittel Blockierelemente umfassen, die von der Separator-Endkante bei Beginn der Hinundherbewegung überlaufen werden.

81. Vorrichtung nach Anspruch 80, dadurch gekennzeichnet, daß die Blockierelemente einstückig mit den Distanzelementen ausgebildet sind.

82. Vorrichtung nach Anspruch 81, dadurch gekennzeichnet, daß die Blockierelemente durch das erste Rahmenteil abgestützt sind.

83. Vorrichtung nach Anspruch 1, dadurch gekennzeichnet, daß sich bei zusammengeschobenen Rahmenteilen die Distanzelemente unter die Separator-Endkante erstrecken.

84. Vorrichtung nach einem der vorangehenden Ansprüche, dadurch gekennzeichnet, daß das erste Rahmenteil (12) ein mit einem Sichtfenster (65) versehenes Gehäuse ist, aus dem das zweite, als Schieber ausgebildete Rahmenteil aus einer inneren Endlage in eine äußere Endlage herausziehbar ist.

85. Vorrichtung nach Anspruch 84, dadurch gekennzeichnet, daß der Separator (20) eine innere Querwandung des zweiten Rahmenteils (20) bildet.

86. Vorrichtung nach Anspruch 84 oder 85, dadurch gekennzeichnet, daß der Duchlaßspalt nahe einem dem Sichtfenster (65) gegenüberliegenden Gehäuseboden (63) gebildet wird.

87. Vorrichtung nach einem der Ansprüche 84 bis 86, dadurch gekennzeichnet, daß der Träger (134, 26) einen Teil eines dem Sichtfenster (65) gegenüberliegenden Gehäusebodens (63) bildet.

88. Vorrichtung nach einem der vorangehenden Ansprüche, gekennzeichnet durch eine manuell betätigbare Einrichtung (87, 146) für die Sperrung der Trenneinrichtung, so daß der gesamte Stapel mittels des zweiten Rahmenteils (14) relativ zum ersten (12) vorzugsweise in eine Position, in der der Stapel entnehmbar ist, verlagerbar ist.

**Claims**

1. Device for the cyclic rearrangement of a pile of rectangular or square sheets, in particular a pile of photographic prints, with a first (12) and a second (14) frame part which are movable relative to one another and parallel to the main plane of the pile, and with means which, on movement of the frame parts backward and forward, remove an individual sheet at one end of the pile and add it to the other end of the pile, which means comprise :

(a) a separating means (20, 68, 69, 28, 71) for separating the individual sheet (188) from the pile (182),

(b) a feeding means (22) for feeding sheets to the separating means,

(c) retaining means (32, 80) for retaining the individual sheet in the first frame part (12) and the remainder of the pile in the second frame part (14), and

(d) a guide means (79) for guiding the separated individual sheet for the purpose of returning it to the other end of the remainder of the pile, wherein the separating means comprises :

a separator (20, 69, 242, 250, 254) in the second frame part (14), which has surface portions (386) bounded by an end edge for retaining the remainder of the pile, and

a supporting means (26, 218, 238, 256, 264, 266) provided on one of the frame parts which positions the individual sheet, characterized in that to form a through-slot for

the individual sheet there are provided spacer elements (68, 246, 262) which hold the separator end edge (254) and the supporting means at a fixed distance apart which is greater than the thickness of one sheet and less than the thickness of two sheets.

2. A device according to claim 1, characterized in that the supporting means (44) is provided on the second frame part (14).

3. A device according to claim 2, characterized in that the supporting means (44) is in operative connection with the individual sheet only at parts of the surface thereof.

4. A device according to claim 3, characterized in that the parts lie symmetrically with respect to a central plane extending in the direction of movement of the frame parts.

5. A device according to one of claims 2 to 4, characterized in that the second frame part (14) has longitudinal bars (44) extending in the direction of movement of the frame parts, which bars serve as supporting means.

6. A device according to claim 1, characterized in that the supporting means (134, 26) is provided on the first frame part.

7. A device according to claim 6, characterized in that the supporting means (134, 26) is in operative connection with the individual sheet only at parts of the surface thereof.

8. A device according to claim 7, characterized in that the parts lie symmetrically with respect to a central plane extending in the direction of movement of the frame parts.

9. A device according to one of claims 6 to 8, characterized in that the supporting means is arranged on a floor (63) of the first frame part.

10. A device according to one of claims 6 to 9, characterized in that the supporting means (134, 26) is in contact with portions of the side of the individual sheet facing away from the pile.

11. A device according to one of claims 6 to 10, characterized in that the supporting means (134, 26) is in contact with the individual sheet side along strips which extend in the direction of movement of the frame parts.

12. A device according to one of claims 6 to 11, characterized in that the supporting means is formed by rails (134) which are inserted as separate components into the first frame part (12).

13. A device according to one of the preceding claims, characterized in that the separator end edge and the supporting means are displaceable relative to one another.

14. A device according to claim 13, characterized in that the displacement direction has a component which is perpendicular to the direction of movement of the frame parts.

15. A device according to claim 14, characterized in that the second frame part (14 in Fig. 35) is displaceable in the first frame part.

16. A device according to claim 14, characterized in that the separator (20 in Fig. 43) is displaceable in the second frame part.

17. A device according to claim 14, characterized in that at least one component (69) having the end edge is displaceably arranged on the separator (20).

18. A device according to claim 14, characterized in that the separator (250) is resiliently deformable.

19. A device according to one of claims 13 to 18, characterized in that the displacement is effected along a straight line.

20. A device according to one of claims 13 to 18, characterized in that the displacement is a rotation.

21. A device according to one of claims 13 to 20, characterized in that the separator end edge and the supporting means are spring-biassed towards one another.

22. A device according to claim 15 and 21, characterized in that the second frame part is supported on the first frame part by way of leaf springs (240).

23. A device according to claim 17 and 21, characterized in that the component (69) is supported on the separator by mean of wire springs (71).

24. A device according to claim 17, and 21, characterized in that the component (242) is supported on the separator by means of helical compression springs (71 in Fig. 37).

25. A device according to one of claims 21 to 24, characterized in that the biassing spring (71) exerts a force which is greater than the reaction force which is exerted on the surface portions by the remainder of the pile.

26. A device according to one of the preceding claims, characterized in that the spacer elements (68, 246, 262) are arranged close to the through-slot.

27. A device according to claim 2 or 6, characterized in that the spacer elements (246, 262) are arranged in the second frame part.

28. A device according to claim 27, characterized in that the spacer elements (246) are arranged laterally next to the individual sheet, seen in the direction of movement of the frame parts.

29. A device according to claim 6, characterized in that the spacer elements (68) are arranged on the first frame part.

30. A device according to claim 6, characterized in that both frame parts (12, 14) have spacer elements.

31. A device according to claim 6, characterized in that the spacer elements (68) are arranged in front of an end edge of the individual sheet, over which the separator end edge runs first.

32. A device according to claim 31, characterized in that the supporting means (134, 26) and the spacer elements (68) are set off in relation to one another by a step.

33. A device according to claim 32, characterized in that the spacer elements (68), starting from the step, are extended parallel to the supporting means.

34. A device according to claim 32, characterized in that, when the frame parts are pushed together, the separator end edge rests on the extension of the spacer elements.

35. A device according to one of claims 32 to 34, characterized in that the step has a run-on slope (140).

36. A device according to claim 33 or 34, characterized in that the extension comprises a downwardly sloping ramp.

37. A device according to one of claims 31 to 36, characterized in that the spacer elements are constructed on separately manufactured rails (134) mounted in the first frame part.

38. A device according to a device according to claim 32, characterized in that the feeding means comprises a transporter (22) which is arranged in the first frame part and is spaced from the step by a distance which is greater than the nominal dimension of the sheets in the direction of movement of the frame parts.

39. A device according to claim 1, characterized in that the separator (20) is an end wall of the second frame part (14) extending transversely to the direction of movement of the frame parts.

40. A device according to claim 39, characterized by means on the separator (20) for conveying sheets to the through-slot as the frame parts are pulled apart.

41. A device according to claim 40, characterized in that the means are formed by surface portions (386) holding the remainder of the pile which run obliquely such that they exert on the transverse edges of the sheets lying against them a force in the direction towards the through-slot.

42. A device according to claim 41, characterized in that the said surface portions form an acute angle with the sheet to be separated.

43. A device according to claim 41 or 42, characterized in that the said surface portions define different angles.

44. A device according to claim 41 or 42, characterized in that the said surface portions are divided into a plurality of sub-portions which are displaced relative to one another in the direction of movement of the frame parts.

45. A device according to claim 44, characterized in that two sub-portions are separated from one another by a partial area running parallel to the individual sheet.

46. A device according to claim 1 or 39, characterized in that the surface portions holding the remainder of the pile run at least partly perpendicular (470 in Fig. 84) to the direction of movement of the frame parts.

47. A device according to claim 1 or 39, characterized in that the separator end edge is constructed only at individual locations of the overall extent of the separator.

48. A device according to claim 47, characterized in that separator end edge portions (69) are provided symmetrically with respect to a central plane extending in the direction of movement of the frame parts.

49. A device according to claim 1 or 39, characterized in that the separator end edge is defined by the section line between a surface portion holding the remainder of the pile and a surface extending substantially parallel to the individual sheet to be separated.

50. A device according to claim 49, characterized in that the surface extending parallel to the individual sheet becomes a run-on ramp at its end facing away from the section line.

51. A device according to claim 35 and 50, characterized in that the ramp is arranged to run onto the run-on slope (140).

52. A device according to claim 1 or 39, characterized in that the separator consists of a plurality of individual parts (20, 69, 71).

53. A device according to claim 52, characterized in that the individual parts of the separator are displaceable relative to one another.

54. A device according to claim 53, characterized in that a separator bar has straight guides for at least one shoe (69) having the separator end edge.

55. A device according to claim 41 and 54, characterized in that the straight guide extends substantially parallel to the sloping surface portions.

56. A device according to claim 54 or 55, characterized in that the shoe (69) is displaceable between defined end positions.

57. A device according to claim 53, characterized in that the individual parts (20, 69) are pivotable towards one another.

58. A device according to claim 53, characterized in that the individual parts (69) engage others (20) by way of a biasing spring (71).

59. A device according to one of claims 52 to 58, characterized in that several individual parts are provided with surface portions holding the remainder of the pile.

60. A device according to one of the preceding claims, characterized in that the distance between separator end edge and supporting means (134, 26) is kept the same over essentially the entire stroke of the movement apart of the frame parts (12, 14).

61. A device according to one of claims 1 to 59, characterized in that the distance between separator end edge and supporting means is reduced to the thickness of an individual sheet (188) when the separator end edge has passed the leading transverse edge of the individual sheet.

62. A device according to one of claims 1 to 59, characterized in that the distance between the separator end edge and the supporting means (134, 26) is reduced by a given amount when the separator end edge has passed the leading transverse edge of the individual sheet.

63. A device according to claim 1, characterized in that the retaining means for the individual sheet comprises at least one retentive strip (26) extending parallel to the direction of movement of the frame parts, against which the individual sheet can be pressed by means of rollers (28) arranged in the second frame part (14).

64. A device according to claim 63, characterized in that the retentive strip (26) is simultaneously part of the supporting means (134, 26).

65. A device according to claim 63 or 64, characterized in that the rollers (28) are arranged on the separator.

66. A device according to claim 65, characterized in that each roller is mounted in a shoe (69) having the separator end edge.

67. A device according to claim 66, characterized in that the roller projects from the shoe (69) beyond the end edge by less than the thickness of one sheet.

68. A device according to claim 67 and 34, characterized in that the extension of the spacer elements has a recess for the roller.

69. A device according to one of claims 63 to 68, characterized in that the roller (28) is spring-biassed towards the individual sheet (188).

70. A device according to claim 69 and 21, characterized in that one and the same spring is provided for biasing the end edge and the roller (28).

71. A device according to one of claims 63 to 70, characterized in that the roller (28) is in staggered arrangement with respect to the separator end edge by a given amount in a direction opposite to the withdrawal direction of the second frame part (14).

72. A device according to one of claims 63 to 71, characterized by a pair of rollers (28) and retentive strips (26).

73. A device according to one of claims 63 to 72, characterized in that the strip-roller arrangements are positioned symmetrically with respect to a central plane of the device parallel to the direction of movement of the frame parts.

74. A device according to one of claims 63 to 73, characterized in that the rollers are staggered with respect to the separator end edge in a direction transverse to the direction of movement of the frame parts.

75. A device according to claim 69, characterized in that the roller (28) is relieved of spring bias when the frame parts (12, 14) are pushed together.

76. A device according to claim 1, characterized in that only after a predetermined partial stroke of the movement apart of the frame parts (12, 14) is a through-slot for the individual sheet (188) formed.

77. A device according to claim 76 and 32, characterized in that the slot is formed by the separator end edge running over the step.

78. A device according to claim 76 or 77, characterized in that the partial stroke corresponds to the projection of the surface portions holding the remainder of the pile onto the plane of the individual sheet.

79. A device according to claim 1 or one of claims 76 to 78, characterized by means for blocking the entry of the individual sheet (188) into the through-slot before the separator end edge has reached alignment with the supporting means.

80. A device according to claim 79, characterized in that the blocking means comprise blocking elements over which the separator end edge runs at the start of the backward and forward movement.

81. A device according to claim 80, characterized in that the blocking elements are constructed in one piece with the spacer elements.

82. A device according to claim 81, characterized in that the blocking elements are supported by the first frame part.

83. A device according to claim 1, characterized in that, with the frame parts pushed together, the spacer elements extend beneath the separator end edge.

84. A device according to one of the preceding claims, characterized in that the first frame part (12) is a housing provided with a viewing window (65) from which the second frame part, constructed as a slider member, can be withdrawn from an inner end position into an outer end position.

85. A device according to claim 84, characterized in that the separator (20) forms an internal transverse wall of the second frame part (20).

86. A device according to claim 84 or 85, characterized in that the through-slot is formed close to a housing floor (63) lying opposite the viewing window (65).

87. A device according to one of claims 84 to 86, characterized in that the supporting means (134, 26) forms a part of a housing floor (63) lying opposite the viewing window (65).

88. A device according to one of the preceding claims, characterized by a manually operable arrangement (87, 146) for blocking the separating means so that the entire pile is displaceable by means of the second frame part (14) relative to the first frame part (12) preferably into a position in which the pile can be removed.

**Revendications**

1. Dispositif de reclassement cyclique d'une pile de feuilles rectangulaires ou carrées, notamment une pile de clichés photographiques, ou photos comportant un premier élément en forme de cadre (12) et un second élément en forme de cadre (14), qui sont déplaçables l'un par rapport à l'autre et parallèlement au plan principal de la pile, et des moyens qui, lors d'un déplacement en va-et-vient des éléments en forme de cadres, prélèvent une feuille individuelle sur un côté de la pile et la rajoutent sur l'autre côté de la pile, lesquels moyens comprenant :

(a) un dispositif de séparation (20, 68, 69, 28, 71) servant à séparer une feuille individuelle (188) de la pile (182),

(b) un dispositif d'amenée (22) servant à amener des feuilles au dispositif de séparation,

(c) un dispositif de maintien (32, 80) servant à maintenir la feuille individuelle dans le premier élément en forme de cadre (12) et le reste de la pile dans le second élément en forme de cadre (14),

(d) un dispositif de guidage (79) servant à guider la feuille individuelle prélevée, en vue de la renvoyer sur l'autre côté du reste de la pile, le dispositif de séparation comprenant :

un séparateur (20, 69, 242, 250, 254), qui est situé dans le second élément en forme de cadre (14), qui comporte des éléments de surface (386) limités par une arête d'extrémité, pour le maintien du reste de la pile, et

un support (26, 218, 238, 256, 264, 266), qui est prévu sur l'un des éléments en forme de cadres et positionne la feuille individuelle, caractérisé en ce que, pour la formation de la fente de passage pour la feuille individuelle, il est prévu des entretoises (68, 246, 262), qui maintiennent l'arête d'extrémité (254) du séparateur et le support à une distance fixe supérieure à l'épaisseur d'une feuille et inférieure à l'épaisseur de deux feuilles.

2. Dispositif selon la revendication 1, caractérisé en ce que le support (44) est formé sur le second élément en forme de cadre (14).

3. Dispositif selon la revendication 2, caractérisé en ce que le support (44) est relié, selon une liaison active, à la feuille individuelle uniquement au niveau de parties de sa surface.

4. Dispositif selon la revendication 3, caractérisé en ce que les parties sont disposées symétriquement par rapport à un plan médian s'étendant dans la direction de déplacement des éléments en forme de cadres.

5. Dispositif selon l'une des revendications 2 à 4, caractérisé en ce que le second élément en forme de cadre (14) comporte des longerons (44), qui s'étendent dans la direction de déplacement de l'élément en forme de cadre et servent de support.

6. Dispositif selon la revendication 1, caractérisé en ce que le support (134, 26) est formé sur le premier élément en forme de cadre.

7. Dispositif selon la revendication 6, caractérisé en ce que le support (134, 26) est relié, selon une liaison active, à la feuille individuelle uniquement au niveau de parties de sa surface.

8. Dispositif selon la revendication 7, caractérisé en ce que les parties sont disposées symétriquement par rapport à un plan médian s'étendant dans la direction de déplacement des éléments en forme de cadres.

9. Dispositif selon l'une des revendications 6 à 8, caractérisé en ce que le support est disposé sur un fond (63) du premier élément en forme de cadre.

10. Dispositif selon l'une des revendications 6 à 9, caractérisé en ce que le support (134, 26) est en contact avec des sections de la face, tournée à l'opposé de la pile, de la feuille individuelle.

11. Dispositif selon l'une des revendications 6 à 10, caractérisé en ce que le support (134, 26) est en contact avec la face de la feuille individuelle, le long de bandes, qui s'étendent dans la direction de déplacement des éléments en forme de cadres.

12. Dispositif selon l'une des revendications 6 à 11, caractérisé en ce que le support est formé par des rails (134), qui sont insérés sous la forme de composants séparés dans le premier élément en forme de cadre (12).

13. Dispositif selon l'une des revendications précédentes, caractérisé en ce que l'arête d'extrémité du séparateur et le support peuvent être décalés l'un par rapport à l'autre.

14. Dispositif selon la revendication 13, caractérisé en ce que la direction de décalage possède une composante perpendiculaire à la direction de déplacement des éléments en forme de cadres.

15. Dispositif selon la revendication 14, caractérisé en ce que le second élément en forme de cadre (14 sur la figure 35) peut être déplacé dans le premier élément en forme de cadre.

16. Dispositif selon la revendication 14, caractérisé en ce que le séparateur (20 sur la figure 43) peut être déplacé dans le second élément en forme de cadre.

17. Dispositif selon la revendication 14, caractérisé en ce qu'au moins un composant (69) comportant l'arête d'extrémité est disposé de manière à être déplaçable sur le séparateur (20).

18. Dispositif selon la revendication 14, caractérisé en ce que le séparateur (250) peut être déformé élastiquement.

19. Dispositif selon l'une des revendications 13 à 18, caractérisé en ce que le déplacement s'effectue le long d'une droite.

20. Dispositif selon l'une des revendications 13 à 18, caractérisé en ce que le déplacement comprend une rotation.

21. Dispositif selon l'une des revendications 13 à 20, caractérisé en ce que l'arête d'extrémité du séparateur et le support peuvent être repoussés l'un contre l'autre au moyen d'une précontrainte élastique.

22. Dispositif selon les revendications 15 et 21, caractérisé en ce que le second élément en forme de cadre prend appui sur le premier élément en forme de cadre par l'intermédiaire de ressorts en forme de lames (240).

23. Dispositif selon les revendications 17 et 21, caractérisé en ce que le composant (69) prend appui sur le séparateur au moyen d'un ressort en forme de fil (71).

24. Dispositif selon les revendications 17 et 21, caractérisé en ce que le composant (242) prend appui sur le séparateur par l'intermédiaire d'un ressort hélicoïdal de pression (71 sur la figure 37).

25. Dispositif selon l'une des revendications 21 à 24, caractérisé en ce que le ressort de précontrainte (71) exerce une force, qui est supérieure à la force de réaction exercée sur les éléments de surface du reste de la pile.

26. Dispositif selon l'une des revendications précédentes, caractérisé en ce que les entretoises (68, 246, 262) sont disposées à proximité de la fente de passage.

27. Dispositif selon les revendications 2 ou 6, caractérisé en ce que les entretoises (246, 262) sont disposées dans le second élément en forme de cadre.

28. Dispositif selon la revendication 27, caractérisé en ce que les entretoises (246) sont disposées latéralement à côté de la feuille individuelle, lorsqu'on regarde dans la direction de déplacement des éléments en forme de cadres.

29. Dispositif selon la revendication 6, caractérisé en ce que les entretoises (68) sont déposées sur le premier élément en forme de cadre.

30. Dispositif selon la revendication 6, caractérisé en ce que les deux éléments en forme de cadres (12, 14) possèdent des entretoises.

31. Dispositif selon la revendication 6, caractérisé en ce que les entretoises (68) sont disposées en avant du bord d'extrémité de la feuille individuelle, que l'arête d'extrémité du séparateur dépasse en premier.

32. Dispositif selon la revendication 31, caractérise en ce que le support (134, 26) et les entretoises (68) sont décalés entre eux par suite de la présence d'une partie étagée.

33. Dispositif selon la revendication 32, caractérisé en ce que les entretoises (68) se prolongent, à partir de la partie étagée, parallèlement au support.

34. Dispositif selon la revendication 32, caractérisé en ce que, lorsque les éléments en forme de cadres sont repoussés l'un dans l'autre, l'arête d'extrémité du séparateur prend appui sur le prolongement des entretoises.

35. Dispositif selon l'une des revendications 32 à 34, caractérisé en ce que la partie étagée possède une partie oblique de montée (140).

36. Dispositif selon la revendication 33 ou 34, caractérisé en ce que le prolongement comporte une rampe de descente.

37. Dispositif selon l'une des revendications 31 à 36, caractérisé en ce que les entretoises sont formées sur des rails (134) fabriqués séparément et montés dans le premier élément en forme de cadre.

38. Dispositif selon la revendication 32, caractérisé en ce que le dispositif d'amenée comporte un organe d'entraînement (22), qui est disposé dans le premier élément en forme de cadre (12) et est situé, par rapport à la partie étagée, à une distance supérieure à la dimension nominale des feuilles dans la direction de déplacement des éléments en forme de cadres.

39. Dispositif selon la revendication 1, caractérisé en ce que le séparateur (20) est une paroi d'extrémité du second élément en forme de cadre (14), qui s'étend transversalement par rapport à la direction de déplacement de cet élément.

40. Dispositif selon la revendication 39, caractérisé par des moyens situés sur le séparateur (20) et servant à entraîner des feuilles en direction de la fente de passage lors du déploiement des éléments en forme de cadres l'un à partir de l'autre.

41. Dispositif selon la revendication 40, caractérisé en ce que les moyens sont formés par des éléments de surface (386), qui maintiennent le reste de la pile et s'étendent obliquement de sorte qu'ils exercent sur les bords transversaux, qui s'appliquent sur ces éléments de surface, des feuilles, une force dirigée vers la fente de passage.

42. Dispositif selon la revendication 41, caractérisé en ce lesdits éléments de surface font un angle aigu avec la feuille devant être séparée.

43. Dispositif selon la revendication 41 ou 42, caractérisé en ce que lesdits éléments de surface définissent des angles différents.

44. Dispositif selon l'une des revendications 41 à 43, caractérisé en ce que lesdits éléments de surface sont subdivisés en une multiplicité d'éléments partiels, qui sont décalés l'un par rapport à l'autre dans la direction du déplacement des éléments en forme de cadres.

45. Dispositif selon la revendication 44, caractérisé en ce que deux éléments partiels sont séparés l'un de l'autre par une surface partielle parallèle à la feuille individuelle.

46. Dispositif selon la revendication 1 ou 39, caractérisé en ce que les éléments de surface maintenant le reste de la pile s'étendent au moins partiellement perpendiculairement (470 sur la figure 84) à la direction de déplacement des éléments en forme de cadres.

47. Dispositif selon la revendication 1 ou 39, caractérisé en ce que l'arête d'extrémité du séparateur est formée uniquement en des emplacements séparés sur l'ensemble de l'étendue du séparateur (20).

48. Dispositif selon la revendication 47, caractérisé en ce .que des sections (69) de l'arête d'extrémité du séparateur sont disposées symétriquement par rapport à un plan médian s'étendant dans la direction de déplacement des éléments en forme de cadres.

49. Dispositif selon la revendication 1 ou 39, caractérisé en ce que l'arête d'extrémité du séparateur est définie par la ligne d'intersection entre un élément de surface maintenant le reste de la pile et une surface sensiblement parallèle à la feuille individuelle devant être séparée.

50. Dispositif selon la revendication 49, caractérisé en ce que la surface parallèle à la feuille individuelle se prolonge par une rampe de montée, au niveau de son extrémité tournée à l'opposé de la ligne d'intersection.

51. Dispositif selon les revendications 35 et 50, caractérisé en ce que la rampe est disposée selon une disposition montante sur la partie oblique de montée (140).

52. Dispositif selon la revendication 1 ou 39, caractérisé en ce que le séparateur est constitué par une pluralité d'éléments individuels (20, 69, 71).

53. Dispositif selon la revendication 52, caractérisé en ce que les éléments individuels du séparateur peuvent être déplacés les uns par rapport aux autres.

54. Dispositif selon la revendication 53, caractérisé en ce qu'une barrette du séparateur comporte des guides rectilignes pour au moins un sabot (69) portant l'arête d'extrémité du séparateur.

55. Dispositif selon les revendications 41 et 54, caractérisé en ce que le guide rectiligne est sensiblement parallèle aux éléments de surface obliques.

56. Dispositif selon la revendication 54 ou 55, caractérisé en ce que le sabot (69) peut être déplacé entre des positions d'extrémité définies.

57. Dispositif selon la revendication 53, caractérisé en ce que les éléments individuels (20, 69) peuvent pivoter entre eux.

58. Dispositif selon la revendication 53, caractérisé en ce que l'un des éléments individuels (69) prend appui sur l'autre élément individuel (20) par l'intermédiaire d'un ressort de précontrainte (71).

59. Dispositif selon l'une des revendications 52 à 58, caractérisé en ce que plusieurs éléments individuels comportent des éléments de surface maintenant le reste de la pile.

60. Dispositif selon l'une des revendications précédentes, caractérisé en ce que la distance entre l'arête d'extrémité du séparateur et le support (134, 26) est maintenue constante sensiblement sur toute la course du mouvement de déploiement des éléments en forme de cadres (12, 14).

61. Dispositif selon l'une des revendications 1 à 59, caractérisé en ce que la distance entre l'arête d'extrémité du séparateur et le support est réduite de l'épaisseur d'une feuille individuelle (188), lorsque l'arête d'extrémité du séparateur a dépassé l'arête transversale de guidage de la feuille individuelle.

62. Dispositif selon l'une des revendications 1 à 59, caractérisé en ce que la distance entre l'arête d'extrémité du séparateur et le support (134, 26) est réduite d'une valeur prédéterminée lorsque l'arête d'extrémité du séparateur a dépassé l'arête transversale de guidage de la feuille individuelle.

63. Dispositif selon la revendication 1, caractérisé en ce que le dispositif de maintien des feuilles individuelles comporte au moins une bande adhésive (26), qui s'étend parallèlement à la direction de déplacement des éléments en forme de cadres et contre laquelle la feuille individuelle peut être repoussée au moyen de galets (28) disposés dans le second élément en forme de cadre (14).

64. Dispositif selon la revendication 63, caractérisé en ce que la bande de revêtement adhésive (26) fait simultanément partie du support (134, 26).

65. Dispositif selon la revendication 63 ou 64, caractérisé en ce que les galets (28) sont disposés sur le séparateur.

66. Dispositif selon la revendication 65, caractérisé en ce que chaque galet est monté dans un sabot (69) portant l'arête d'extrémité du séparateur.

67. Dispositif selon la revendication 66, caractérisé en ce que le galet fait saillie au-delà de l'arête d'extrémité, hors du sabot (69), sur une distance inférieure à l'épaisseur d'une feuille.

68. Dispositif selon les revendications 67 et 34, caractérisé en ce que le prolongement des entretoises comporte un évidement pour le galet.

69. Dispositif selon l'une des revendications 63 à 68, caractérisé en ce que le galet (28) est précontraint élastiquement contre la feuille individuelle (188).

70. Dispositif selon les revendications 69 et 21, caractérisé en ce que le même ressort est prévu pour réaliser la précontrainte de l'arête d'extrémité et du galet (28).

71. Dispositif selon l'une des revendications 63 à 70, caractérisé en ce que le galet (28) est disposé en étant décalé, par rapport à l'arête d'extrémité du séparateur, d'une distance prédéterminée, en sens opposé à la direction de tirage du second élément en forme de cadre (14).

72. Dispositif selon l'une des revendications 63 à 72, caractérisé par un couple de galets (28) et de bandes adhésives (26).

73. Dispositif selon l'une des revendications 63 à 72, caractérisé en ce que les dispositifs bandes-galets sont disposés symétriquement par rapport à un plan médian du dispositif, qui est parallèle à la direction de déplacement des éléments en forme de cadres.

74. Dispositif selon l'une des revendications 63 à 73, caractérisé en ce que les galets sont décalés par rapport à l'arête d'extrémité du séparateur, dans une direction transversale par rapport à la direction de déplacement des éléments en forme de cadres.

75. Dispositif selon la revendication 69, caractérisé en ce que le galet (28) est déchargé de la précontrainte élastique, lorsque les éléments en forme de cadres (12, 14) sont repoussés l'un dans l'autre.

76. Dispositif selon la revendication 1, caractérisé en ce qu'une fente de passage pour la feuille individuelle (188) est formée uniquement après une course partielle prédéterminée lors du déploiement des éléments en forme de cadres (12, 14).

77. Dispositif selon les revendications 76 et 32, caractérisé en ce que la fente est formée par l'arête d'extrémité du séparateur, lors du dépassement de la partie étagée.

78. Dispositif selon la revendication 76 ou 77, caractérisé en ce que la course partielle correspond à la projection des éléments de surface, maintenant le reste de la pile, sur le plan de la feuille individuelle.

79. Dispositif selon la revendication 1 ou l'une des revendications 76 à 78, caractérisé par des moyens pour bloquer l'entrée de la feuille individuelle (188) dans la fente de passage, avant que l'arête d'extrémité du séparateur soit parvenue dans la position alignée avec le support.

80. Dispositif selon la revendication 79, caractérisé en ce que les moyens de blocage comportent des éléments de blocage, que l'arête d'extrémité du séparateur dépasse au début du déplacement en va-et-vient.

81. Dispositif selon la revendication 80, caractérisé en ce que les éléments de blocage sont formés d'un seul tenant avec les entretoises.

82. Dispositif selon la revendication 81, caractérisé en ce que les éléments de blocage sont soutenus par le premier élément en forme de cadre.

83. Dispositif selon la revendication 1, caractérisé en ce que, lorsque les éléments en forme de cadres sont repoussés l'un dans l'autre, les entretoises s'étendent au-dessous de l'arête d'extrémité du séparateur.

84. Dispositif selon l'une des revendications précédentes, caractérisé en ce que le premier élément en forme de cadre (12) est un boîtier, qui est pourvu d'un voyant (65) et à partir duquel le second élément en forme de cadre, réalisé sous la forme d'un poussoir, peut être ressorti depuis une position d'extrémité intérieure dans une position d'extrémité extérieure.

85. Dispositif selon la revendication 84, caractérisé en ce que le séparateur (20) forme une paroi transversale intérieure du second élément en forme de cadre (20).

86. Dispositif selon la revendication 84 ou 85, caractérisé en ce que la fente de passage est formée à proximité d'un fond (63) du boîtier, qui est situé à l'opposé du voyant (65).

87. Dispositif selon l'une des revendications 84 à 86, caractérisé en ce que le support (134, 26) fait partie d'un fond (63) du boîtier, situé à l'opposé du voyant (65).

88. Dispositif selon l'une des revendications précédentes, caractérisé par un dispositif (87, 146), pouvant être actionné manuellement, permettant le blocage du dispositif de séparation, de sorte que l'ensemble de la pile peut être déplacé au moyen du second élément en forme de cadre (14) par rapport au premier élément en forme de cadre (12), pour être amené de préférence dans une position, dans laquelle la pile peut être prélevée.

EP 0 203 155 B1

FIG. 6

FIG. 1

FIG.2

FIG.3

FIG. 4

FIG. 5

EP 0 203 155 B1

EP 0 203 155 B1

FIG. 7

FIG. 8

FIG. 9

FIG. 10

4

FIG.11

FIG.12

FIG. 13

FIG.14

FIG.15

FIG.16

FIG.17

FIG.18

EP 0 203 155 B1

FIG.19

FIG.20

FIG.21

FIG.22

FIG. 23

FIG. 24

FIG. 25

FIG.26

FIG.27

EP 0 203 155 B1

FIG. 30

FIG.31

FIG.28

FIG. 29

## FIG. 32

## FIG. 33

FIG. 34

FIG. 36

FIG. 35

FIG. 38

FIG. 37

FIG. 40

FIG. 42

FIG. 39

FIG. 41

15

FIG. 44

FIG. 43

FIG. 46

FIG. 45

FIG. 47

FIG. 48

12  35  →|48  20  14

264
188

→|48  260
260  240

12  35  20

262  264
14
260  240

266  20  182  →|50  20  188

→|50  240

266  12  20  35

262

240

FIG. 49

FIG. 50

EP 0 203 155 B1

FIG. 51

FIG. 52

FIG. 53

FIG. 54

FIG. 55

FIG. 56

FIG. 57

FIG. 58

Fig. 59
Fig. 60
Fig. 61
Fig. 62
Fig. 63

FIG. 64

FIG. 65

EP 0 203 155 B1

FIG. 66

FIG. 67

FIG. 68

FIG.69

FIG.70

FIG.71

FIG.72

FIG.73

12 420 418 416

14

188

FIG.74

35 426 12

14

188

422

424 428 26

FIG.75

12 35 182 26 430

20 14

FIG.76

FIG.77

FIG.78

24

FIG.82

FIG.79

FIG.80

FIG.81

# FIG. 83

EP 0 203 155 B1

FIG. 84

FIG. 85

FIG. 86

FIG. 87

FIG.88

FIG.89

FIG. 91

FIG.90

FIG.92

FIG.93

FIG.94

FIG.95

FIG.96

FIG.97

**FIG.98**

**FIG.99**

**FIG.100**

FIG.101

FIG.103

FIG.102

FIG. 104

FIG. 105

FIG. 106

FIG. 107

# FIG. 108

EP 0 203 155 B1

FIG. 109

12

44

↦|110

20

218

300

218

↦|110

14

FIG. 110

14

12

20

304

302

300

44

218

FIG. 111

12

304

302

44

14

300    20

EP 0 203 155 B1

EP 0 203 155 B1

## FIG. 112

## FIG. 113

## FIG. 114

FIG. 115

FIG. 116

FIG. 118

FIG. 117

FIG. 119

FIG. 120

# FIG.121

**FIG. 122**

**FIG. 123**

**FIG. 124**

FIG.125

FIG.126

FIG.127

FIG.128

FIG. 129

FIG. 130

FIG.131

FIG.132

EP 0 203 155 B1

## FIG.133

## FIG.134

FIG.135

FIG. 136

FIG.137

EP 0 203 155 B1

FIG.138

FIG.139

FIG.140

FIG. 141

FIG. 142

# FIG. 143

# FIG. 144